# EUROPEAN PATENT SPECIFICATION

(11) **EP 3 037 501 B1**
(45) Date of publication and mention of the grant of the patent: **27.03.2019**
(21) Application number: 13891664.8
(22) Date of filing: 20.08.2013
(51) Int. Cl.: C09K 19/30, C09K 19/10, C09K 19/34, C09K 19/42, C09K 19/12, G02F 1/1337, G02F 1/1368, C09K 19/04, G02F 1/1362

(54) **LIQUID CRYSTAL COMPOSITION AND LIQUID CRYSTAL DISPLAY ELEMENT USING SAME**
FLÜSSIGKRISTALLZUSAMMENSETZUNG UND FLÜSSIGKRISTALLANZEIGEELEMENT DAMIT
COMPOSITION DE CRISTAUX LIQUIDES, ET ÉLÉMENT D'AFFICHAGE À CRISTAUX LIQUIDES METTANT EN 0EUVRE CELLE-CI

(43) Date of publication of application: 29.06.2016
(73) Proprietor: DIC Corporation, Tokyo 174-8520 (JP)
(72) Inventor: IWASHITA, Yoshinori, Kitaadachi-gun Saitama 362-8577 (JP); OGAWA, Shinji, Kitaadachi-gun Saitama 362-8577 (JP)
(74) Representative: Adam, Holger
(86) International application number: PCT/JP2013/072187
(87) International publication number: WO 2015/025361

(56) References cited:
- EP-A1- 2 256 178
- JP-A- 2006 328 399
- JP-A- 2007 119 672
- JP-A- 2007 119 672
- JP-A- 2007 277 544
- JP-A- 2007 277 544
- JP-A- 2009 149 853
- JP-A- 2009 149 853
- JP-A- 2010 275 390
- JP-A- 2013 036 045
- JP-A- 2013 036 045
- JP-B1- 5 170 602
- JP-B1- 5 273 494
- JP-B1- 5 282 989
- JP-B1- 5 288 224
- US-A1- 2006 278 850

## Description

### Technical Field

The present invention relates to a nematic liquid crystal composition of which dielectric anisotropy (Δε) is a positive value, which is useful as a liquid crystal display material, and a liquid crystal display element using the same.

### Background Art

The liquid crystal display element is used in various measuring equipment, a panel for an automobile, a word processor, an electronic organizer, a printer, a computer, a TV, a clock, an advertising display board, and the like, besides a watch and a calculator. The representative examples of the liquid crystal display method include longitudinal alignment methods such as a twisted nematic (TN) type, a super twisted nematic (STN) type, and a vertical alignment type using a thin film transistor (TFT) and horizontal electric field methods such as an in-plane switching (IPS) type and a fringe field switching (FFS) type. A liquid crystal composition used in these liquid crystal display elements is required to have stability against external stimuli such as moisture, air, heat, or light, a liquid crystal phase over a temperature range as wide as possible around room temperature, low viscosity, and low driving voltage. Further, the liquid crystal composition is composed of several to several tens of types of compounds so that respective display elements have an optimal value of dielectric anisotropy (Δε) and/or refractive index anisotropy (Δn).

In the vertical alignment (VA) type display, a liquid crystal composition having negative Δε is used, and in horizontal alignment type displays such as the TN type, the STN type, and the in-plane switching (IPS) type, and the fringe field switching (FFS) type, at present, a liquid crystal composition having positive Δε is mainly used. A driving method in which a liquid crystal composition having positive Δε is vertically aligned when no voltage is applied, and a horizontal electric field is applied to a display has also been reported, and the need for the liquid crystal composition having positive Δε is further increased. On the other hand, in all the driving methods, a high speed response, a wide operating temperature range, and/or, as necessary, a low voltage driving are required. That is to say, it is required for Δε to have a positive and high absolute value, for viscosity (η) to be low, and for a nematic phase-isotropic liquid phase transition temperature (Tni) to be high. In addition, it is necessary to adjust Δn of the liquid crystal composition to an appropriate range in accordance with the cell gap by setting of Δn x G which is the product of Δn and the cell gap (G). Additionally, in the case of being applied to an element such as a liquid crystal display which displays a moving image, the liquid crystal composition is required to have a low rotational viscosity (γ1) since a high speed response property of the liquid crystal composition used in the element particularly matters.

As a constitution of the liquid crystal composition for such a high speed response, for example, liquid crystal compositions using compounds represented by Formulas (A-1) to (A-3) which are liquid crystal compounds having positive Δε and liquid crystal compositions (B) of which Δε is neutral in combination are disclosed. Characteristics of these liquid crystal compositions are that the liquid crystal compounds having positive Δε have a -CF₂O- structure and the liquid crystal compounds having neutral Δε have an alkenyl group, and these are widely known in the field of liquid crystal compositions. (PTLs 1 to 4)

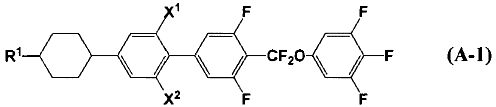

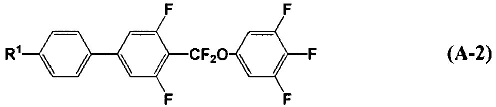

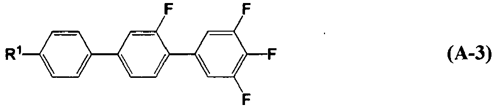

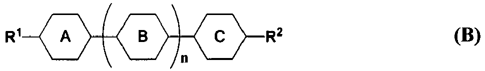

As a composition design of the liquid crystal composition for a high speed response, by making a composition by adding a large amount of bicyclic or tricyclic liquid crystal compound having a relatively low molecular weight, which exhibits a viscosity-reducing action to a liquid crystal compound having a positive Δε, which is represented by each of Formulas (A-1) to (A-3), a liquid crystal composition having low viscosity is prepared at present.

JP 5 170602 B1 relates to a nematic liquid crystal composition having positive dielectric anisotropy (Δε) which is useful as a liquid crystal display material and a liquid crystal display device using the same.

EP 2 256 178 A1 provides a liquid crystal composition that satisfies at least one characteristic among characteristics such as a high maximum temperature of a nematic phase, a low minimum temperature of a nematic phase, a small viscosity, a large optical anisotropy, a large dielectric anisotropy, a large specific resistance, a high stability to ultraviolet light and a high stability to heat, or that is suitably balanced regarding at least two of the characteristics.

### Citation List

### Patent Literature

[PTL 1] JP-A-2008-037918
[PTL 2] JP-A-2008-038018
[PTL 3] JP-A-2010-275390
[PTL 4] JP-A-2011-052120

### Summary of Invention

### Technical Problem

By adding a large amount of nonpolar liquid crystal compound (Δε is +2 to -2) which exhibits a viscosity-reducing action to a liquid crystal compound having a positive Δε, it is possible to provide a liquid crystal composition having a small rotational viscosity (γ1). However, in a case where a large amount of liquid crystal compound which exhibits a viscosity-reducing action is added, a problem relating to the low temperature stability that the liquid crystal compound is precipitated by reduction of the compatibility with the liquid crystal compound having a positive dielectric anisotropy showing liquid crystallinity has emerged. In addition, in a case where a large amount of nonpolar liquid crystal compound which exhibits a viscosity-reducing action is added, there is a problem that transition to the smectic phase easily occurs, thereby causing a nematic liquid crystal not to be maintained.

Due to the expansion of applications or markets of the liquid crystal display element in recent years, great changes are also seen in the usage method and the manufacturing method thereof, and characteristics other than fundamental physical property values known in the related art are also demanded. Specifically, in addition to a driving method of the liquid crystal display element which uses the liquid crystal composition (for example, a TN type, an STN type, a VA type, an IPS type, an FFS type, or the like), a display element of which the size is an extra-large size of 50 inches or larger is put into practical use, and as a result, in the injection method of the liquid crystal composition into a substrate, a drop injection (ODF: One Drop Fill) method rather than the conventional vacuum injection method has become the mainstream of the injection method. Thus, a liquid crystal panel is manufactured by the drop injection method in which the droplets of the liquid crystal composition are dropped on one substrate surface and the substrate surface is attached to the other substrate, but, when the liquid crystal composition is dropped on a substrate, dropping marks are formed on the substrate, thereby causing a decrease in display quality. Such a problem has become an issue.

Furthermore, in the liquid crystal display element manufacturing step by the ODF method, the optimal liquid crystal injection amount needs to be dropped according to the size of the liquid crystal display element. If the injection amount greatly deviates from the optimal value, the balance of the refractive index and the driving electric field of the liquid crystal display element which is designed in advance is lost, and display defects such as generation of spots and poor contrast occur. In particular, in a small-sized liquid crystal display element which is frequently used in smartphones being in vogue recently, it is difficult to control deviation from the optimal value to be within a certain range since the optimal liquid crystal injection amount is small. Therefore, in order to maintain a high yield of the liquid crystal display element, for example, influence by rapid pressure change or impact in the dropping apparatus which occurs when the liquid crystal is dropped is required to be small, and performance capable of continuously stably dropping a liquid crystal over a long period of time is also required.

In this manner, in the liquid crystal composition used in an active matrix driving liquid crystal display element driven by a TFT element or the like, while maintaining characteristics and performance required as a liquid crystal display element such as high speed response performance and the like, in addition to characteristics of having a high specific resistance value or a high voltage holding ratio, and being stable with respect to external stimuli such as light and heat, which are considered as important conventionally development taking into consideration the manufacturing method of the liquid crystal display element has been demanded.

Accordingly, an object of the present invention is to solve the problems relating to the low temperature stability which occurs in a liquid crystal composition including a larger amount of liquid crystal compound which exhibits a viscosity-reducing action than a liquid crystal compound having a positive Δε.

Another object of the present invention is to provide a liquid crystal display composition which has a positive Δε, a liquid crystal phase in a wide temperature range, low viscosity, excellent solubility at a low temperature, a high specific resistance and a high voltage holding ratio, and is stable with respect to heat and light, and still another object of the present invention is to provide a liquid crystal display element of the IPS type or the TN type which has excellent display qualities, and in which display defects such as burn-in and dropping marks are unlikely to be generated, by using the same, with a high yield.

### Solution to Problem

The present inventor has examined various liquid crystal compounds and various chemical substances, and as a result, has found that it is possible to solve the problems by combining specific liquid crystal compounds, thereby completing the present invention.

### Advantageous Effects of Invention

The liquid crystal composition having a positive dielectric anisotropy of the present invention has a significantly low viscosity and an excellent solubility at a low temperature.

In the liquid crystal composition according to the present invention, changes in the specific resistance or the voltage holding ratio due to heat and light are extremely small, and therefore, practicability of the product is high, and the liquid crystal display element of the IPS type or the FFS type using the liquid crystal composition can achieve high speed response performance.

Since in a step of manufacturing the liquid crystal display element which uses the liquid crystal composition according to the present invention, performance can be stably exhibited, display defects due to the step can be suppressed, the liquid crystal display element can be manufactured with a high yield, and therefore, the liquid crystal composition is very useful.

The liquid crystal display element according to the present invention is excellent in a low temperature stability and a high speed response.

### Brief Description of Drawings

Fig. 1 is a sectional view of a liquid crystal display element of the present invention. A substrate having 100 to 105 is referred to as a "back plane", and a substrate having 200 to 205 is referred to as a "front plane".
Fig. 2 is a diagram of an exposure processing step using a pattern for producing a post spacer to be formed on a black matrix as a photomask pattern.
Fig. 3 is an exploded perspective view schematically showing one example of a configuration of the liquid crystal display element according to the present invention.
Fig. 4 is an enlarged plan view of a region surrounded by II line of an electrode layer 3 formed on a substrate 2 in Fig. 1.
Fig. 5 is a sectional view obtained by cutting the liquid crystal display element shown in Fig. 1 in a direction of III-III line in Fig. 2.
Fig. 6 is an enlarged plan view of another example of the region surrounded by the II line of the electrode layer 3 formed on the substrate 2 in Fig. 1.
Fig. 7 is a sectional view of another embodiment obtained by cutting the liquid crystal display element shown in Fig. 1 in the direction of III-III line in Fig. 2.
Fig. 8 is a sectional view of the liquid crystal display element showing a color on filter.
Fig. 9 is a sectional view of another form of the liquid crystal display element showing a color on filter.

### Description of Embodiments

The present invention relates to a liquid crystal composition having a positive dielectric anisotropy value, comprising:
at least two compounds selected from the group consisting of compounds represented by each of the following General Formulas (Ia) and (Ib) in the total amount of 85% to 95% by mass as a first component; and
one or more compounds from the group consisting of compounds represented by General Formula (M) as a second component: 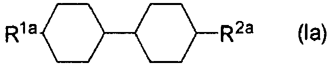 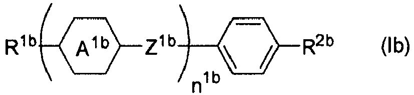 wherein, in General Formula (Ia) and (Ib),
   each of R^{1a}, R^{2a}, R^{1b} and R^{2b} independently represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms,
   n^{1b} represents 1 or 2,
   A^{1b} represents a 1,4-cyclohexylene group, a 1,4-phenylene group, or a tetrahydropyran-2,5-diyl group, and in a case where A^{1b} represents a 1,4-phenylene group, one hydrogen atom in the 1,4-phenylene group may be substituted with a fluorine atom and when a plurality of A^{1b} exist, each of A^{1b}s is independent,
   Z^{1b} represents a single bond, -OCH₂ -, -OCF₂ -, -CH₂O-, or CF₂O-, and when a plurality of Z^{1b} exist, each of Z^{1b}s is independent; 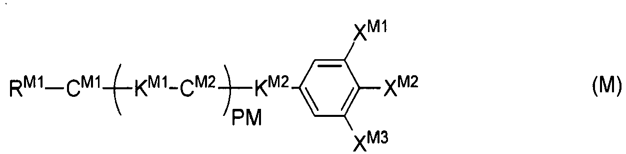
   wherein, in the formula,
   R^{M1} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, one -CH₂- or two or more non-adjacent -CH₂-'s in the alkyl group, the alkenyl group, the alkoxy group, or the alkenyloxy group each may be independently substituted with -CH=CH-, -C=C-, -O-, -CO-, -COO-, or -OCO-,
   PM represents 0, 1 or 2,
   each of C^{M1} and C^{M2} independently represents a group selected from the group consisting of the following (d) and (e) :
      (d) a 1,4-cyclohexylene group (one -CH₂- or two or more non-adjacent -CH₂-'s present in the group may be substituted with -O- or -S-); and
      (e) a 1,4-phenylene group (one -CH= group or two or more non-adj acent -CH='s present in the group may be substituted with -N=),
      each of the groups (d) and (e) may be independently substituted with a cyano group, a fluorine atom, or a chlorine atom,
   each of K^{M1} and K^{M2} independently represents a single bond, -CH₂CH₂-, -(CH₂)₄-, -OCH₂-, -CH₂O-, -OCF₂-, -CF₂O- -COO-, -OCO-, or -C=C-,
   when PM is 2 and a plurality of K^{M1}'s exist, the plurality of K^{M1}'s may be the same as or different from each other, when PM is 2 and a plurality of C^{M2}'s exist, the plurality of C^{M2} 's may be the same as or different from each other,
   each of X^{M1} and X^{M3} independently represents a hydrogen atom, a chlorine atom, or a fluorine atom, and
   X^{M2} represents a hydrogen atom, a fluorine atom, a chlorine atom, a cyano group, a trifluoromethyl group, a fluoromethoxy group, a difluoromethoxy group, a trifluoromethoxy group, or a 2,2,2-trifluoroethyl group, wherein the compound represented by General Formula (M) is a compound represented by General Formula (VIII) or (XIII); 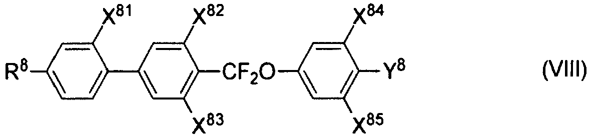 wherein in General Formula (VIII), R⁸ represents an alkyl group having 1 to 5 carbon atoms, an alkenyl group having 2 to 5 carbon atoms, or an alkoxy group having 1 to 4 carbon atoms, each of X⁸¹ to X⁸⁵ independently represents a hydrogen atom or a fluorine atom, and Y⁸ represents a fluorine atom or -OCF₃; 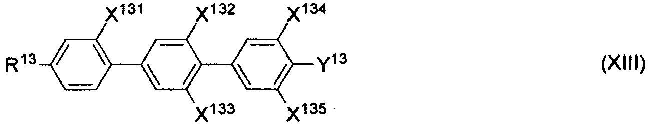 wherein, in General Formula (XIII), each of X¹³¹ and X¹³⁵ independently represents a fluorine atom or a hydrogen atom, R¹³ represents an alkyl group having 1 to 5 carbon atoms, an alkenyl group having 2 to 5 carbon atoms, or an alkoxy group having 1 to 4 carbon atoms, and Y¹³ represents a fluorine atom or -OCF₃, and
      wherein Δε is from 1.5 to 3.5 and Δn is 0.08 to 0.20.

Further embodiments of the invention are disclosed in the claims.

The first aspect of the present disclosure is a liquid crystal composition having a positive dielectric anisotropy value, which contains one or more compounds selected from compounds represented by General Formula (A) as a first component in the total amount of 85% by mass or greater and one or more compounds selected from the group consisting of compounds represented by General Formula (M) as a second component.

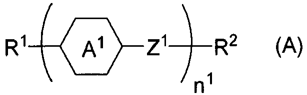

In Formula (A), each of R¹ and R² independently represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, methylene groups in the alkyl group, the alkenyl group, the alkoxy group, or the
alkenyloxy group eacg may be substituted with an oxygen atom as long as the oxygen atom is not continuously bonded to another oxygen atom or each may be substituted with a carbonyl group as long as the carbonyl group is not continuously bonded to another carbonyl group,
each of A¹'s independently represents a 1, 4-cyclohexylene cyclohexylene group, a 1, 4-phenylene group, or a tetrahydropyran-2,5-diyl group, and in a case where A¹ represents a 1,4-phenylene group, one hydrogen atom in the 1,4-phenylene group may be substituted with a fluorine atom,
each of Z¹'s independently represents a single bond, -OCH₂-, -OCF₂-, -CH₂O-, or CF₂O-,
and n¹ represents 1, 2, 3, or 4.

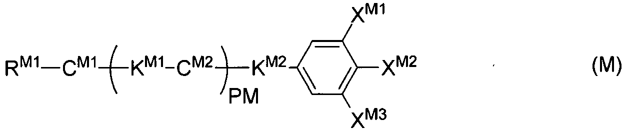

In the formula, R^{M1} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, one -CH₂- or two or more non-adj acent -CH₂-'s in the alkyl group, the alkenyl group, the alkoxy group, or the alkenyloxy group each may be independently substituted with -CH=CH-, -C=C-, -O-, -CO-, -COO-, or -OCO-,
PM represents 0, 1, 2, 3 or 4,
each of C^{M1} and C^{M2} independently represents a group selected from the group consisting of the following (d) and (e),
(d) a 1,4-cyclohexylene group (one -CH₂- or two or more non-adjacent -CH₂-'s present in the group may be substituted with -O- or -S-) and
(e) a 1,4-phenylene group (one -CH= or two or more non-adjacent -CH='s present in the group may be substituted with -N=),
each of the groups (d) and (e) may be independently substituted with a cyano group, a fluorine atom, or a chlorine atom,
each of K^{M1} and K^{M2} independently represents a single bond, -CH₂CH₂-, - (CH₂)₄-, -OCH₂-, -CH₂O-, -OCF₂-, -CF₂O-, -COO-, -OCO-, or -C≡C-,
when PM is 2, 3, or 4 and a plurality of K^{M1}'s exist, the plurality of K^{M1}'s may be the same as or different from each other, when PM is 2, 3, or 4 and a plurality of C^{M2}'s exist, the plurality of C^{M2}'s may be the same as or different from each other,
each of X^{M1} and X^{M3} independently represents a hydrogen atom, a chlorine atom, or a fluorine atom,
X^{M2} represents a hydrogen atom, a fluorine atom, a chlorine atom, a cyano group, a trifluoromethyl group, a fluoromethoxy group, a difluoromethoxy group, a trifluoromethoxy group, or a 2,2,2-trifluoroethyl group, and here, the compound represented by General Formula (I) is excluded.

In a case where a large amount of compound represented by General Formula (A) which is the first component which is a so-called nonpolar type compound (Δε is -2 to +2) is added to the compound represented by General Formula (M) which is the second component which is a so-called polar type compound (Δε is +2 or greater), it is possible to ensure a high speed response.

In a case where the total amount of compound represented by General Formula (A) which is the first component in the liquid crystal composition according to the present disclosure is 85% by mass or greater, it is possible to ensure a high speed response, for the reason of sufficiently including a component having low polarity, that is, high viscosity-reducing effects. In addition, in the liquid crystal composition according to the present disclosure, the total amount of compound represented by General Formula (A) which is the first component is preferably 85% by mass to 99% by mass, more preferably 86% by mass to 99% by mass, still more preferably 87% by mass to 98% by mass, still more preferably 88% by mass to 98% by mass, still more preferably 89% by mass to 97% by mass, and particularly preferably 90% by mass to 97% by mass.

In a case where the total amount of compound represented by General Formula (A) which is the first component in the liquid crystal composition according to the present disclosure is 85% by mass or greater, this is preferable from the viewpoint of a high speed response, and when the total amount of compound represented by General Formula (A) which is the first component according to the present disclosure is contained in 5- to 20-fold with respect to the compound represented by General Formula (M) which is the second component, it is possible to solve the problems of compatibility (low-temperature stability or transition to a smectic phase) while maintaining a high speed response.

As preferable property values of the liquid crystal composition according to the present invention, Δε is 1.5 to 3.5, and Δn is 0.08 to 0.20.

The liquid crystal composition according to the present disclosure includes at least one or more compounds of General Formula (A) as the first component and at least one or more compounds of General Formula (M) as the second component, as essential components. Hereinafter, respective components (the first component, the second component, and other optional components) included in the liquid crystal composition of the present invention will be described.

The liquid crystal composition according to the present disclosure contains one or more of compounds represented by General Formula (A) as the first component and this is preferably contained in 5- to 20-fold with respect to the compound represented by General Formula (M) which is the second component.

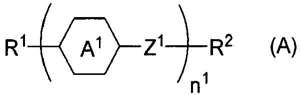

(In General Formula (I), each of R¹ and R² independently represents an alkyl group having 1 to 8 carbon atoms, an alkenyl group having 2 to 8 carbon atoms, an alkoxy group having 1 to 8 carbon atoms or an alkenyloxy group having 2 to 8 carbon atoms, one or more hydrogen atoms in the alkyl group, the alkenyl group, the alkoxy group, or the alkenyloxy group may be substituted with a fluorine atom, methylene groups in the alkyl group, the alkenyl group, the alkoxy group, or the alkenyloxy group each may be substituted with an oxygen atom as long as the oxygen atom is not continuously bonded to another oxygen atom or each may be substituted with a carbonyl group as long as the carbonyl group is not continuously bonded to another carbonyl group,
each of A¹'s independently represents a 1, 4-cyclohexylene cyclohexylene group, a 1, 4-phenylene group, or a tetrahydropyran-2,5-diyl group, and in a case where A¹ represents a 1,4-phenylene group, one hydrogen atom in the 1,4-phenylene group may be substituted with a fluorine atom,
each of Z¹'s independently represents a single bond, -OCH₂-, -OCF₂-, -CH₂O-, or CF₂O-, and
n¹ represents 1, 2, 3, or 4.)

Effects such as a high speed response are exhibited by the compound represented by General Formula (A) as the first component. In addition, the liquid crystal composition according to the present disclosure can also contain one or more of compounds represented by General Formula (A). The types of compound capable of being combined are not particularly limited, and a compound is suitably combined and used depending on the desired performance such as solubility at a low temperature, viscosity, a transition temperature, electrical reliability, or birefringence. Here, the compound represented by General Formula (A) preferably includes a compound which exhibits a viscosity-reducing action. In addition, the type of compound used as the compound represented by General Formula (A) which is the first component is, for example, one type in one embodiment of the present disclosure. In another embodiment of the present disclosure, two types are used. In still another embodiment of the present disclosure, three types are used. In still another embodiment of the present disclosure, four types are used. In still another embodiment of the present disclosure, five types are used. In still another embodiment of the present disclosure, six types are used. In still another embodiment of the present disclosure, seven types are used. In still another embodiment of the present disclosure, eight types are used. In still another embodiment of the present disclosure, nine types are used. In addition, in still another embodiment of the present disclosure, ten or more types are used.

In the liquid crystal composition of the present disclosure, the content of the compound represented by General Formula (A) needs to be suitably adjusted depending on the required performance such as solubility at a low temperature, a transition temperature, electrical reliability, birefringence, process compatibility, dropping marks, burn-in, or dielectric anisotropy.

All of the alkyl group, the alkenyl group, and the alkoxy group according to the present invention are preferably linear or branched. Examples of the "alkyl group" according to the present invention include a methyl group, an ethyl group, a propyl group, a butyl group, an isopropyl group, an isobutyl group, a t-butyl group, a 3-pentyl group, an isopentyl group, a neopentyl group, a pentyl group, a hexyl group, a heptyl group, and an octyl group. Moreover, in the specification, the examples of alkyl groups are common, and an alkyl group is suitably selected from the alkyl groups exemplified above depending on the number of carbon atoms of each alkyl group.

Examples of the "alkenyl group" according to the present invention include a vinyl group, an allyl group, a 1-propenyl group, an isopropenyl group, a 2-butenyl group, a 3-butenyl group, a 1,3-butadienyl group, a 2-pentenyl group, a 3-pentenyl group, and a 2-hexenyl group. In addition, more preferable alkenyl groups according to the present invention are represented by the following formulas (i) (a vinyl group), (ii) (a 1-propenyl group), (iii) (a 3-butenyl group), (iv) (a 3-pentenyl group), (v) (a 2-pentenyl group), or (vi) (a 4-pentenyl group).

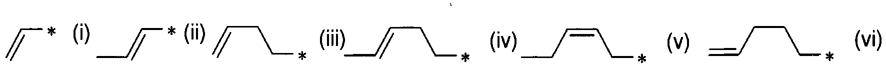

In Formulas (i) to (iv), * indicates a bonding site to a ring structure.

Moreover, in the specification, the examples of alkenyl groups are common, and an alkenyl group is suitably selected from the alkenyl groups exemplified above depending on the number of carbon atoms of each alkyl group.

The example of the "alkoxy group" according to the present invention is preferably a group in which an oxygen atom is directly bonded to the alkyl group according to the present invention, and a methoxy group, an ethoxy group, a propoxy group (an n-propoxy group or an i-propoxy group), a butoxy group, a pentyloxy group, or an octyloxy group is more preferable. Moreover, in the specification, the examples of alkoxy groups are common, and an alkoxy group is suitably selected from the alkoxy groups exemplified above depending on the number of carbon atoms of each alkoxy group.

Preferably, the composition according to the present invention comprises a compound represented by the following General Formula (L).

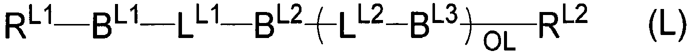

In General Formula (L), each of R^{L1} and R^{L2} independently represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, one -CH₂- or two or more non-adjacent -CH₂-'s in the alkyl group, the alkenyl group, the alkoxy group, or the alkenyloxy group each may be independently substituted with -CH=CH-, -C=C-, -O-, -CO-, -COO-, or -OCO-,
OL represents 0, 1, 2, or 3,
each of B^{L1}, B^{L2}, and B^{L3} independently represents a group selected from the group consisting of the following (a) and (b),
(a) a 1,4-cyclohexylene group (one -CH₂- or two or more non-adjacent -CH₂-'s present in the group may be substituted with -O-) and
(b) a 1,4-phenylene group (one -CH= or two or more non-adjacent -CH='s present in the group may be substituted with -N=), each of the groups (a) and (b) may be independently substituted with a cyano group, a fluorine atom, or a chlorine atom,
each of L^{L1} and L^{L2} independently represents a single bond, -CH₂CH₂-, - (CH₂)₄-, -OCH₂-, -CH₂O-, -COO-, -OCO-, -OCF₂-, -CF₂O-, -CH=N-N=CH-, -CH=CH-, -CF=CF-, or -C=C-,
when OL is 2 or 3 and a plurality of L^{L2}'s exist, the plurality of L^{L2}'s may be the same as or different from each other, and when OL is 2 or 3 and a plurality of B^{L3}'s exist, the plurality of B^{L3}'s may be the same as or different from each other.

The liquid crystal composition according to the present invention can also contain one or more of compounds represented by General Formula (L). The types of compound capable of being combined are not particularly limited, and a compound is suitably combined and used depending on the desired performance such as solubility at a low temperature, a transition temperature, electrical reliability, or birefringence. The type of compound used is, for example, one type in one embodiment of the present invention. In another embodiment of the present invention, two types are used. In still another embodiment of the present invention, three types are used. In still another embodiment of the present invention, four types are used. In still another embodiment of the present invention, five types are used. In still another embodiment of the present invention, six types are used. In still another embodiment of the present invention, seven types are used. In still another embodiment of the present invention, eight types are used. In still another embodiment of the present invention, nine types are used. In addition, in still another embodiment of the present invention, ten or more types are used.

In the liquid crystal composition of the present invention, the content of the compound represented by General Formula (L) needs to be suitably adjusted depending on the required performance such as solubility at a low temperature, a transition temperature, electrical reliability, birefringence, process compatibility, dropping marks, burn-in, or dielectric anisotropy.

For example, the content of the compound represented by General Formula (L) is 10% to 90% by mass with respect to the total mass of the liquid crystal composition of the present invention in one embodiment of the present invention. In another embodiment of the present invention, the content is 15% to 85% by mass. In still another embodiment of the present invention, the content is 20% to 80% by mass. In still another embodiment of the present invention, the content is 22% to 80% by mass. In still another embodiment of the present invention, the content is 30% to 80% by mass. In still another embodiment of the present invention, the content is 31% to 80% by mass. In still another embodiment of the present invention, the content is 33% to 80% by mass. In still another embodiment of the present invention, the content is 35% to 80% by mass. In still another embodiment of the present invention, the content is 36% to 80% by mass. In still another embodiment of the present invention, the content is 37% to 80% by mass. In still another embodiment of the present invention, the content is 39% to 80% by mass. In still another embodiment of the present invention, the content is 40% to 80% by mass. In still another embodiment of the present invention, the content is 41% to 80% by mass. In still another embodiment of the present invention, the content is 42% to 80% by mass. In still another embodiment of the present invention, the content is 43% to 80% by mass. In still another embodiment of the present invention, the content is 45% to 80% by mass. In still another embodiment of the present invention, the content is 46% to 80% by mass. In still another embodiment of the present invention, the content is 47% to 80% by mass. In still another embodiment of the present invention, the content is 49% to 80% by mass. In still another embodiment of the present invention, the content is 50% to 80% by mass. In still another embodiment of the present invention, the content is 51% to 80% by mass. In still another embodiment of the present invention, the content is 58% to 80% by mass. In still another embodiment of the present invention, the content is 59% to 80% by mass. In still another embodiment of the present invention, the content is 70% to 57% by mass. In still another embodiment of the present invention, the content is 20% to 76% by mass. In still another embodiment of the present invention, the content is 20% to 70% by mass. In still another embodiment of the present invention, the content is 20% to 59% by mass. In still another embodiment of the present invention, the content is 20% to 58% by mass. In still another embodiment of the present invention, the content is 20% to 56% by mass. In still another embodiment of the present invention, the content is 20% to 55% by mass. In still another embodiment of the present invention, the content is 20% to 53% by mass. In still another embodiment of the present invention, the content is 20% to 52% by mass. In still another embodiment of the present invention, the content is 20% to 51% by mass. In still another embodiment of the present invention, the content is 20% to 49% by mass. In still another embodiment of the present invention, the content is 20% to 48% by mass. In still another embodiment of the present invention, the content is 20% to 47% by mass. In still another embodiment of the present invention, the content is 20% to 45% by mass. In still another embodiment of the present invention, the content is 20% to 43% by mass. In still another embodiment of the present invention, the content is 20% to 41% by mass. In still another embodiment of the present invention, the content is 20% to 40% by mass. In still another embodiment of the present invention, the content is 20% to 37% by mass. In still another embodiment of the present invention, the content is 20% to 35% by mass. In still another embodiment of the present invention, the content is 20% to 33% by mass. In still another embodiment of the present invention, the content is 20% to 31% by mass. In still another embodiment of the present invention, the content is 20% to 30% by mass. In still another embodiment of the present invention, the content is 35% to 37% by mass. In still another embodiment of the present invention, the content is 37% to 48% by mass. In still another embodiment of the present invention, the content is 36% to 45% by mass. In still another embodiment of the present invention, the content is 39% to 43% by mass. In still another embodiment of the present invention, the content is 40% to 76% by mass. In still another embodiment of the present invention, the content is 42% to 56% by mass. In still another embodiment of the present invention, the content is 45% to 56% by mass. In still another embodiment of the present invention, the content is 47% to 55% by mass. In still another embodiment of the present invention, the content is 49% to 55% by mass. In still another embodiment of the present invention, the content is 50% to 53% by mass. In still another embodiment of the present invention, the content is 43% to 49% by mass. In still another embodiment of the present invention, the content is 46% to 52% by mass. In addition, in still another embodiment of the present invention, the content is 51% to 56% by mass.

In a case where it is required that the viscosity of the liquid crystal composition of the present invention be kept low and the liquid crystal composition have a high response speed, it is preferable that the above-described lower limit value is great and the above-described upper limit value is great. In a case where it is required that Tni of the liquid crystal composition of the present invention be kept high and the liquid crystal composition have good temperature stability, it is preferable that the above-described lower limit value is great and the above-described upper limit value is great. In addition, when it is desired to increase the dielectric anisotropy in order to keep the driving voltage low, it is preferable that the lower limit value is small and the upper limit value is small.

In a case where the ring structure to which R^{L1} or R^{L2} is bonded is a phenyl group (aromatic group), each of R^{L1} or R^{L2} is preferably a linear alkyl group having 1 to 5 carbon atoms, a linear alkoxy group having 1 to 4 carbon atoms (or more), or an alkenyl group having 4 or 5 carbon atoms, and in a case where the ring structure to which R^{L1} or R^{L2} is bonded is a saturated ring structure such as cyclohexane, pyran, or dioxane, each of R^{L1} or R^{L2} is preferably a linear alkyl group having 1 to 5 carbon atoms, a linear alkoxy group having 1 to 4 carbon atoms (or more), or a linear alkenyl group having 2 to 5 carbon atoms.

In a case where chemical stability of the liquid crystal composition is required, the compound represented by General Formula (A) according to the present disclosure preferably does not have a chlorine atom in the molecule.

Preferably, the composition according to the present invention comprises a compound selected from the group consisting of compounds represented by General Formula (I).

R¹¹-A¹¹-A¹²-R¹² (I)

In General Formula (I), each of R¹¹ and R¹² independently represents an alkyl group having 1 to 8 carbon atoms, an alkoxy group having 1 to 8 carbon atoms, or an alkenyl group having 2 to 8 carbon atoms, one or more hydrogen atoms in the alkyl group, the alkenyl group, the alkoxy group, or the alkenyloxy group may be substituted with a fluorine atom, methylene groups in the alkyl group, the alkenyl group, the alkoxy group, or the alkenyloxy group each may be substituted with an oxygen atom as long as the oxygen atom is not continuously bonded to another oxygen atom or each may be substituted with a carbonyl group as long as the carbonyl group is not continuously bonded to another carbonyl group,
each of A¹¹ and A¹² independently represents a 1,4-cyclohexylene group, a 1,4-phenylene group, a 2-fluoro-1,4-phenylene group, or a 3-fluoro-1,4-phenylene group.

The types of compound capable of being combined in the group consisting of compounds represented by General Formula (I) are not particularly limited, and a compound is suitably combined and used depending on the required performance such as solubility at a low temperature, viscosity, a transition temperature, electrical reliability, or birefringence. The type of compound used is, for example, one type in one embodiment of the present invention. In another embodiment of the present invention, two types are used. In still another embodiment of the present invention, three types are used. In still another embodiment of the present invention, four types are used. In still another embodiment of the present invention, five types are used. In addition, in still another embodiment of the present invention, six or more types are used.

The content of the so-called bicyclic compound represented by General Formula (I) in the liquid crystal composition of the present invention needs to be suitably adjusted depending on the required performance such as solubility at a low temperature, viscosity, a transition temperature, electrical reliability, birefringence, process compatibility, dropping marks, burn-in, or dielectric anisotropy.

For example, the content of the compound represented by General Formula (I) is 10% to 75% by mass with respect to the total mass of the liquid crystal composition of the present invention in one embodiment of the present invention. In another embodiment of the present invention, the content is 10% to 70% by mass. In still another embodiment of the present invention, the content is 10% to 65% by mass. In still another embodiment of the present invention, the content is 10% to 60% by mass. In still another embodiment of the present invention, the content is 15% to 60% by mass. In still another embodiment of the present invention, the content is 15% to 59% by mass. In still another embodiment of the present invention, the content is 15% to 56% by mass. In still another embodiment of the present invention, the content is 15% to 52% by mass. In still another embodiment of the present invention, the content is 15% to 51% by mass. In still another embodiment of the present invention, the content is 15% to 49% by mass. In still another embodiment of the present invention, the content is 15% to 48% by mass. In still another embodiment of the present invention, the content is 15% to 47% by mass. In still another embodiment of the present invention, the content is 15% to 45% by mass. In still another embodiment of the present invention, the content is 15% to 44% by mass. In still another embodiment of the present invention, the content is 15% to 43% by mass. In still another embodiment of the present invention, the content is 15% to 41% by mass. In still another embodiment of the present invention, the content is 15% to 39% by mass. In still another embodiment of the present invention, the content is 15% to 38% by mass. In still another embodiment of the present invention, the content is 15% to 35% by mass. In still another embodiment of the present invention, the content is 15% to 33% by mass. In still another embodiment of the present invention, the content is 15% to 31% by mass. In still another embodiment of the present invention, the content is 15% to 30% by mass. In still another embodiment of the present invention, the content is 15% to 29% by mass. In still another embodiment of the present invention, the content is 15% to 28% by mass. In still another embodiment of the present invention, the content is 15% to 20% by mass. In still another embodiment of the present invention, the content is 17% to 60% by mass. In still another embodiment of the present invention, the content is 20% to 60% by mass. In still another embodiment of the present invention, the content is 27% to 60% by mass. In still another embodiment of the present invention, the content is 28% to 60% by mass. In still another embodiment of the present invention, the content is 30% to 60% by mass. In still another embodiment of the present invention, the content is 31% to 60% by mass. In still another embodiment of the present invention, the content is 32% to 60% by mass. In still another embodiment of the present invention, the content is 33% to 60% by mass. In still another embodiment of the present invention, the content is 34% to 60% by mass. In still another embodiment of the present invention, the content is 35% to 60% by mass. In still another embodiment of the present invention, the content is 36% to 60% by mass. In still another embodiment of the present invention, the content is 37% to 60% by mass. In still another embodiment of the present invention, the content is 39% to 60% by mass. In still another embodiment of the present invention, the content is 41% to 60% by mass. In still another embodiment of the present invention, the content is 42% to 60% by mass. In still another embodiment of the present invention, the content is 43% to 60% by mass. In still another embodiment of the present invention, the content is 44% to 60% by mass. In still another embodiment of the present invention, the content is 46% to 60% by mass. In still another embodiment of the present invention, the content is 47% to 60% by mass. In still another embodiment of the present invention, the content is 48% to 60% by mass. In still another embodiment of the present invention, the content is 49% to 60% by mass. In still another embodiment of the present invention, the content is 51% to 60% by mass. In still another embodiment of the present invention, the content is 17% to 45% by mass. In still another embodiment of the present invention, the content is 27% to 29% by mass. In still another embodiment of the present invention, the content is 32% to 43% by mass. In still another embodiment of the present invention, the content is 34% to 38% by mass. In still another embodiment of the present invention, the content is 36% to 45% by mass. In still another embodiment of the present invention, the content is 37% to 48% by mass. In still another embodiment of the present invention, the content is 42% to 56% by mass. In still another embodiment of the present invention, the content is 43% to 52% by mass. In still another embodiment of the present invention, the content is 43% to 49% by mass. In still another embodiment of the present invention, the content is 43% to 44% by mass. In still another embodiment of the present invention, the content is 44% to 48% by mass. In addition, in still another embodiment of the present invention, the content is 47% to 51% by mass.

In the liquid crystal composition according to the present invention, the group consisting of compounds represented by General Formula (I) is particularly preferably contained, from the viewpoint of being capable of keeping viscosity low and providing a liquid crystal composition having a high response speed.

In a case where it is required that the viscosity of the liquid crystal composition of the present invention be kept low and a liquid crystal composition have a high response speed, it is preferable that the above-described lower limit value of the content of the compound (group) represented by General Formula (I) is great and the above-described upper limit value of the content of the compound (group) represented by General Formula (I) is great.

Furthermore, the compound represented by General Formula (I) is preferably a compound selected from the group consisting of compounds represented by General Formula (I-1).

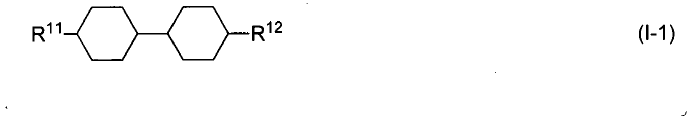

In General Formula (I-1), each of R¹¹ and R¹² has the same meaning as that in General Formula (I).

In the liquid crystal composition of the present invention, as the compound represented by General Formula (I-1), 1 to 10 types, 1 to 9 types, 1 to 8 types, 1 to 7 types, 1 to 6 types, 2 to 9 types, 2 to 8 types, 2 to 6 types, 3 to 9 types, 3 to 7 types, 3 to 6 types, or 4 to 6 types are preferably contained in combination.

In the liquid crystal composition according to the present invention, the group consisting of compounds represented by General Formula (I-1) is particularly preferably contained, from the viewpoint of being capable of keeping viscosity low and providing a liquid crystal composition having a high response speed.

For example, the content of the compound represented by General Formula (I-1) is 10% to 70% by mass with respect to the total mass of the liquid crystal composition of the present invention in one embodiment of the present invention. In another embodiment of the present invention, the content is 10% to 60% by mass. In still another embodiment of the present invention, the content is 15% to 60% by mass. In still another embodiment of the present invention, the content is 15% to 59% by mass. In still another embodiment of the present invention, the content is 15% to 56% by mass. In still another embodiment of the present invention, the content is 15% to 52% by mass. In still another embodiment of the present invention, the content is 15% to 50% by mass. In still another embodiment of the present invention, the content is 15% to 49% by mass. In still another embodiment of the present invention, the content is 15% to 48% by mass. In still another embodiment of the present invention, the content is 15% to 47% by mass. In still another embodiment of the present invention, the content is 15% to 46% by mass. In still another embodiment of the present invention, the content is 15% to 45% by mass. In still another embodiment of the present invention, the content is 15% to 39% by mass. In still another embodiment of the present invention, the content is 15% to 38% by mass. In still another embodiment of the present invention, the content is 15% to 35% by mass. In still another embodiment of the present invention, the content is 15% to 33% by mass. In still another embodiment of the present invention, the content is 15% to 30% by mass. In still another embodiment of the present invention, the content is 15% to 28% by mass. In still another embodiment of the present invention, the content is 15% to 26% by mass. In still another embodiment of the present invention, the content is 15% to 20% by mass. In still another embodiment of the present invention, the content is 17% to 60% by mass. In still another embodiment of the present invention, the content is 20% to 60% by mass. In still another embodiment of the present invention, the content is 21% to 60% by mass. In still another embodiment of the present invention, the content is 23% to 60% by mass. In still another embodiment of the present invention, the content is 26% to 60% by mass. In still another embodiment of the present invention, the content is 27% to 60% by mass. In still another embodiment of the present invention, the content is 2% to 60% by mass. In still another embodiment of the present invention, the content is 30% to 60% by mass. In still another embodiment of the present invention, the content is 33% to 60% by mass. In still another embodiment of the present invention, the content is 34% to 60% by mass. In still another embodiment of the present invention, the content is 35% to 60% by mass. In still another embodiment of the present invention, the content is 36% to 60% by mass. In still another embodiment of the present invention, the content is 37% to 60% by mass. In still another embodiment of the present invention, the content is 38% to 60% by mass. In still another embodiment of the present invention, the content is 39% to 60% by mass. In still another embodiment of the present invention, the content is 42% to 60% by mass. In still another embodiment of the present invention, the content is 43% to 60% by mass. In still another embodiment of the present invention, the content is 46% to 60% by mass. In still another embodiment of the present invention, the content is 47% to 60% by mass. In still another embodiment of the present invention, the content is 49% to 60% by mass. In still another embodiment of the present invention, the content is 50% to 60% by mass. In still another embodiment of the present invention, the content is 17% to 45% by mass. In still another embodiment of the present invention, the content is 21% to 24% by mass. In still another embodiment of the present invention, the content is 27% to 38% by mass. In still another embodiment of the present invention, the content is 28% to 29% by mass. In still another embodiment of the present invention, the content is 23% to 46% by mass. In still another embodiment of the present invention, the content is 34% to 38% by mass. In still another embodiment of the present invention, the content is 36% to 45% by mass. In still another embodiment of the present invention, the content is 37% to 48% by mass. In still another embodiment of the present invention, the content is 42% to 48% by mass. In still another embodiment of the present invention, the content is 38% to 49% by mass. In still another embodiment of the present invention, the content is 42% to 56% by mass. In still another embodiment of the present invention, the content is 42% to 50% by mass. In still another embodiment of the present invention, the content is 43% to 52% by mass. In addition, in still another embodiment of the present invention, the content is 46% to 47% by mass.

In a case where it is required that the viscosity of the liquid crystal composition of the present invention be kept low and the liquid crystal composition have a high response speed, it is preferable that the above-described lower limit value is great and the above-described upper limit value is great.

Furthermore, the compound represented by General Formula (I-1) is preferably a compound selected from the group consisting of compounds represented by General Formula (I-1-1).

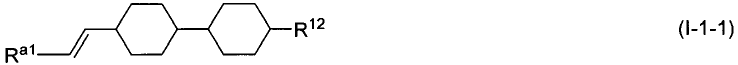

In General Formula (I-1-1), R¹² has the same meaning as that in General Formula (I), and R^{a1} is a hydrogen atom or an alkyl group having 1 to 3 carbon atoms.

In the liquid crystal composition according to the present invention, the group consisting of compounds represented by General Formula (I-1-1) is particularly preferably contained, from the viewpoint of being capable of keeping viscosity low and providing a liquid crystal composition having a high response speed.

For example, the content of the compound represented by General Formula (I-1-1) is 1% to 45% by mass with respect to the total mass of the liquid crystal composition of the present invention in one embodiment of the present invention. In another embodiment of the present invention, the content is 1% to 35% by mass. In still another embodiment of the present invention, the content is 1% to 30% by mass. In still another embodiment of the present invention, the content is 1% to 26% by mass. In still another embodiment of the present invention, the content is 1% to 21% by mass. In still another embodiment of the present invention, the content is 1% to 16% by mass. In still another embodiment of the present invention, the content is 1% to 15% by mass. In still another embodiment of the present invention, the content is 1% to 13% by mass. In still another embodiment of the present invention, the content is 1% to 12% by mass. In still another embodiment of the present invention, the content is 1% to 11% by mass. In still another embodiment of the present invention, the content is 1% to 10% by mass. In still another embodiment of the present invention, the content is 1% to 8% by mass. In still another embodiment of the present invention, the content is 1% to 7% by mass. In still another embodiment of the present invention, the content is 1% to 5% by mass. In still another embodiment of the present invention, the content is 1% to 4% by mass. In still another embodiment of the present invention, the content is 3% to 30% by mass. In still another embodiment of the present invention, the content is 4% to 30% by mass. In still another embodiment of the present invention, the content is 5% to 30% by mass. In still another embodiment of the present invention, the content is 6% to 30% by mass. In still another embodiment of the present invention, the content is 7% to 30% by mass. In still another embodiment of the present invention, the content is 8% to 30% by mass. In still another embodiment of the present invention, the content is 9% to 30% by mass. In still another embodiment of the present invention, the content is 10% to 30% by mass. In still another embodiment of the present invention, the content is 11% to 30% by mass. In still another embodiment of the present invention, the content is 12% to 30% by mass. In still another embodiment of the present invention, the content is 13% to 30% by mass. In still another embodiment of the present invention, the content is 3% to 26% by mass. In still another embodiment of the present invention, the content is 3% to 13% by mass. In still another embodiment of the present invention, the content is 3% to 8% by mass. In still another embodiment of the present invention, the content is 4% to 7% by mass. In still another embodiment of the present invention, the content is 5% to 12% by mass. In still another embodiment of the present invention, the content is 9% to 12% by mass. In still another embodiment of the present invention, the content is 6% to 16% by mass. In still another embodiment of the present invention, the content is 7% to 16% by mass. In still another embodiment of the present invention, the content is 7% to 10% by mass. In still another embodiment of the present invention, the content is 8% to 26% by mass. In still another embodiment of the present invention, the content is 8% to 15% by mass. In still another embodiment of the present invention, the content is 8% to 13% by mass. In still another embodiment of the present invention, the content is 9% to 25% by mass. In still another embodiment of the present invention, the content is 10% to 21% by mass. In still another embodiment of the present invention, the content is 12% to 21% by mass. In still another embodiment of the present invention, the content is 13% to 16% by mass. In addition, in still another embodiment of the present invention, the content is 11% to 26% by mass.

The compound represented by General Formula (I-1-1) is preferably a compound selected from the group consisting of compounds represented by Formulas (1.1) to (1.5), preferably the compound represented by Formula (1.2) or (1.3), and particularly preferably the compound represented by Formula (1.3).

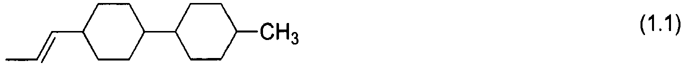

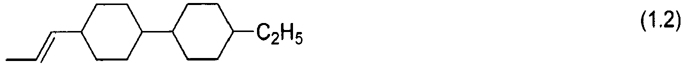

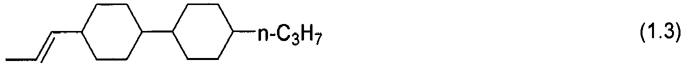

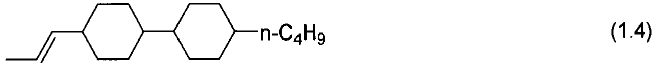

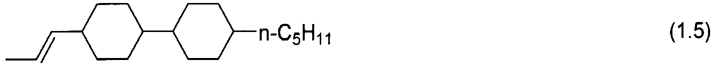

In a case where the compound represented by Formula (1.2) or (1.3) is used alone, respectively, when the content of the compound represented by Formula (1.2) is great, there is an effect in the improvement in the response speed, and the content of the compound represented by Formula (1.3) is preferably in the range shown below, since in the range, a liquid crystal composition having a high response speed and high electrical or optical reliability can be obtained.

For example, the content of the compound represented by Formula (1.3) is 1% to 45% by mass with respect to the total mass of the liquid crystal composition of the present invention in one embodiment of the present invention. In another embodiment of the present invention, the content is 1% to 35% by mass. In still another embodiment of the present invention, the content is 1% to 30% by mass. In still another embodiment of the present invention, the content is 1% to 25% by mass. In still another embodiment of the present invention, the content is 1% to 21% by mass. In still another embodiment of the present invention, the content is 1% to 18% by mass. In still another embodiment of the present invention, the content is 1% to 16% by mass. In still another embodiment of the present invention, the content is 1% to 15% by mass. In still another embodiment of the present invention, the content is 1% to 13% by mass. In still another embodiment of the present invention, the content is 1% to 12% by mass. In still another embodiment of the present invention, the content is 1% to 11% by mass. In still another embodiment of the present invention, the content is 1% to 10% by mass. In still another embodiment of the present invention, the content is 1% to 8% by mass. In still another embodiment of the present invention, the content is 1% to 7% by mass. In still another embodiment of the present invention, the content is 1% to 5% by mass. In still another embodiment of the present invention, the content is 1% to 4% by mass. In still another embodiment of the present invention, the content is 3% to 21% by mass. In still another embodiment of the present invention, the content is 4% to 21% by mass. In still another embodiment of the present invention, the content is 5% to 21% by mass. In still another embodiment of the present invention, the content is 6% to 21% by mass. In still another embodiment of the present invention, the content is 7% to 21% by mass. In still another embodiment of the present invention, the content is 8% to 21% by mass. In still another embodiment of the present invention, the content is 9% to 21% by mass. In still another embodiment of the present invention, the content is 10% to 21% by mass. In still another embodiment of the present invention, the content is 11% to 21% by mass. In still another embodiment of the present invention, the content is 12% to 21% by mass. In still another embodiment of the present invention, the content is 13% to 21% by mass. In still another embodiment of the present invention, the content is 3% to 13% by mass. In still another embodiment of the present invention, the content is 3% to 8% by mass. In still another embodiment of the present invention, the content is 4% to 7% by mass. In still another embodiment of the present invention, the content is 5% to 12% by mass. In still another embodiment of the present invention, the content is 9% to 12% by mass. In still another embodiment of the present invention, the content is 6% to 16% by mass. In still another embodiment of the present invention, the content is 10% to 16% by mass. In still another embodiment of the present invention, the content is 13% to 16% by mass. In still another embodiment of the present invention, the content is 7% to 16% by mass. In still another embodiment of the present invention, the content is 7% to 10% by mass. In still another embodiment of the present invention, the content is 8% to 18% by mass. In still another embodiment of the present invention, the content is 8% to 15% by mass. In still another embodiment of the present invention, the content is 8% to 13% by mass. In addition, in still another embodiment of the present invention, the content is 9% to 13% by mass.

Furthermore, the compound represented by General Formula (I-1) according to the present invention is preferably a compound selected from the group consisting of compounds represented by General Formula (1-1-2).

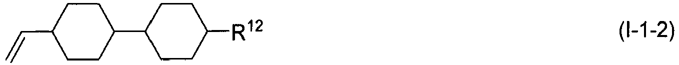

In General Formula (I-1-2), R¹² has the same meaning as that in General Formula (I).

The type of compound used as General Formula (I-1-2) is, for example, one type in one embodiment of the present invention. In another embodiment of the present invention, two types are used. In addition, in still another embodiment of the present invention, three types are used.

In the liquid crystal composition of the present invention, the content of the compound represented by General Formula (I-1-2) needs to be suitably adjusted depending on the required performance such as solubility at a low temperature, viscosity, a transition temperature, electrical reliability, birefringence, process compatibility, dropping marks, burn-in, or dielectric anisotropy.

For example, the content of the compound represented by General Formula (I-1-2) is 1% to 70% by mass with respect to the total mass of the liquid crystal composition of the present invention in one embodiment of the present invention. In another embodiment of the present invention, the content is 1% to 65% by mass. In still another embodiment of the present invention, the content is 1% to 55% by mass. In still another embodiment of the present invention, the content is 1% to 50% by mass. In still another embodiment of the present invention, the content is 1% to 49% by mass. In still another embodiment of the present invention, the content is 1% to 47% by mass. In still another embodiment of the present invention, the content is 1% to 45% by mass. In still another embodiment of the present invention, the content is 1% to 44% by mass. In still another embodiment of the present invention, the content is 1% to 40% by mass. In still another embodiment of the present invention, the content is 1% to 39% by mass. In still another embodiment of the present invention, the content is 1% to 38% by mass. In still another embodiment of the present invention, the content is 1% to 36% by mass. In still another embodiment of the present invention, the content is 1% to 35% by mass. In still another embodiment of the present invention, the content is 1% to 32% by mass. In still another embodiment of the present invention, the content is 1% to 30% by mass. In still another embodiment of the present invention, the content is 1% to 28% by mass. In still another embodiment of the present invention, the content is 1% to 27% by mass. In still another embodiment of the present invention, the content is 1% to 26% by mass. In still another embodiment of the present invention, the content is 1% to 24% by mass. In still another embodiment of the present invention, the content is 1% to 21% by mass. In still another embodiment of the present invention, the content is 1% to 20% by mass. In still another embodiment of the present invention, the content is 1% to 19% by mass. In still another embodiment of the present invention, the content is 1% to 16% by mass. In still another embodiment of the present invention, the content is 1% to 15% by mass. In still another embodiment of the present invention, the content is 11% to 49% by mass. In still another embodiment of the present invention, the content is 12% to 49% by mass. In still another embodiment of the present invention, the content is 13% to 49% by mass. In still another embodiment of the present invention, the content is 15% to 49% by mass. In still another embodiment of the present invention, the content is 16% to 49% by mass. In still another embodiment of the present invention, the content is 17% to 49% by mass. In still another embodiment of the present invention, the content is 20% to 49% by mass. In still another embodiment of the present invention, the content is 23% to 49% by mass. In still another embodiment of the present invention, the content is 24% to 49% by mass. In still another embodiment of the present invention, the content is 25% to 49% by mass. In still another embodiment of the present invention, the content is 28% to 49% by mass. In still another embodiment of the present invention, the content is 30% to 49% by mass. In still another embodiment of the present invention, the content is 33% to 49% by mass. In still another embodiment of the present invention, the content is 35% to 49% by mass. In still another embodiment of the present invention, the content is 38% to 49% by mass. In still another embodiment of the present invention, the content is 39% to 49% by mass. In still another embodiment of the present invention, the content is 45% to 49% by mass. In still another embodiment of the present invention, the content is 11% to 44% by mass. In still another embodiment of the present invention, the content is 12% to 24% by mass. In still another embodiment of the present invention, the content is 13% to 16% by mass. In still another embodiment of the present invention, the content is 15% to 32% by mass. In still another embodiment of the present invention, the content is 15% to 21% by mass. In still another embodiment of the present invention, the content is 17% to 20% by mass. In still another embodiment of the present invention, the content is 16% to 27% by mass. In still another embodiment of the present invention, the content is 17% to 28% by mass. In still another embodiment of the present invention, the content is 20% to 35% by mass. In still another embodiment of the present invention, the content is 23% to 26% by mass. In still another embodiment of the present invention, the content is 24% to 40% by mass. In still another embodiment of the present invention, the content is 28% to 38% by mass. In still another embodiment of the present invention, the content is 30% to 38% by mass. In still another embodiment of the present invention, the content is 25% to 36% by mass. In still another embodiment of the present invention, the content is 27% to 30% by mass. In still another embodiment of the present invention, the content is 30% to 40% by mass. In still another embodiment of the present invention, the content is 30% to 39% by mass. In still another embodiment of the present invention, the content is 35% to 44% by mass. In still another embodiment of the present invention, the content is 35% to 40% by mass. In still another embodiment of the present invention, the content is 33% to 47% by mass. In still another embodiment of the present invention, the content is 39% to 47% by mass. In addition, in still another embodiment of the present invention, the content is 38% to 45% by mass.

Furthermore, the compound represented by General Formula (1-1-2) is preferably a compound selected from the group consisting of compounds represented by Formulas (2.1) to (2.8), and preferably the compound represented by each of Formulas (2.2) to (2.4). In particular, the compound represented by Formula (2.2) is preferable since the compound particularly improves the response speed of the liquid crystal composition of the present invention. When a higher Tni than the response speed is required, the compound represented by Formula (2.3) or (2.4) is preferably used. The content of the compound represented by Formula (2.3) or (2.4) is preferably less than 30% to improve the solubility at a low temperature.

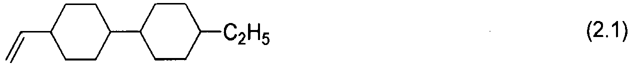

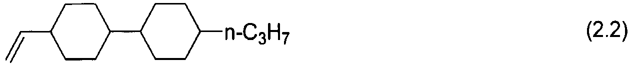

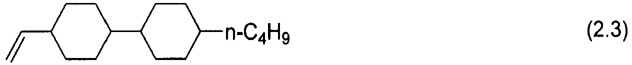

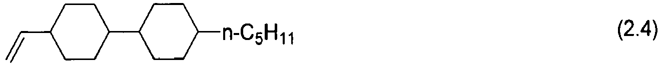

In the liquid crystal composition of the present invention, the content of the compound represented by Formula (2.2) is preferably 1% by mass to 70% by mass, preferably 1% by mass to 65% by mass, preferably 1% by mass to 60% by mass, preferably 1% by mass to 55% by mass, preferably 1% by mass to 50% by mass, and preferably 5% by mass to 50% by mass, with respect to the total mass of the liquid crystal composition of the present invention. Within the above-described content ranges, 9% by mass to 47% by mass, 9% by mass to 15% by mass, 11% by mass to 44% by mass, 15% by mass to 32% by mass, 20% by mass to 35% by mass, 23% by mass to 26% by mass, 24% by mass to 40% by mass, 25% by mass to 36% by mass, 28% by mass to 38% by mass, 30% by mass to 40% by mass, 30% by mass to 39% by mass, 30% by mass to 38% by mass, 33% by mass to 47% by mass, 35% by mass to 44% by mass, 35% by mass to 40% by mass, 38% by mass to 45% by mass, or 39% by mass to 47% by mass is preferable.

In the liquid crystal composition of the present invention, the content of the compound represented by Formula (2.3) is preferably 1% by mass to 30% by mass, preferably 1% by mass to 25% by mass, preferably 3% by mass to 25% by mass, preferably 4% by mass to 22% by mass, preferably 5% by mass to 22% by mass, preferably 11% by mass to 22% by mass, preferably 13% by mass to 22% by mass, preferably 4% by mass to 16% by mass, preferably 4% by mass to 15% by mass, preferably 4% by mass to 10% by mass, preferably 5% by mass to 10% by mass, preferably 12% by mass to 15% by mass, and preferably 13% by mass to 16% by mass, with respect to the total mass of the liquid crystal composition of the present invention.

In the liquid crystal composition of the present invention, the content of the compound represented by Formula (2.4) is preferably 1% by mass to 30% by mass, more preferably 1% by mass to 25% by mass, preferably 3% by mass to 25% by mass, preferably 4% by mass to 25% by mass, preferably 12% by mass to 25% by mass, preferably 17% by mass to 25% by mass, preferably 20% by mass to 25% by mass, preferably 4% by mass to 20% by mass, preferably 4% by mass to 13% by mass, preferably 12% by mass to 24% by mass, and preferably 17% by mass to 20% by mass, with respect to the total mass of the liquid crystal composition of the present invention.

The liquid crystal composition of the present invention can also further contain the compound represented by Formula (2.5) having a similar structure to that of the compound represented by General Formula (1-1-2).

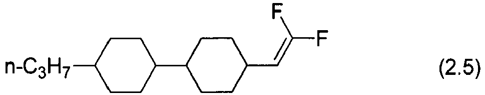

The content of the compound represented by Formula (2.5) is preferably adjusted depending on the required performance such as solubility at a low temperature, a transition temperature, electrical reliability, or birefringence, and the preferable range of the content is as shown in the table described below.

The content of the compound represented by Formula (2.5) is preferably adjusted depending on the required performance such as solubility at a low temperature, a transition temperature, electrical reliability, and birefringence, and the content of the component is preferably 0 to 40% by mass, preferably 1 to 35% by mass, preferably 1% to 30% by mass, preferably 5 to 30% by mass, preferably 10 to 30% by mass, preferably 15 to 30% by mass, preferably 20 to 30% by mass, and preferably 25 to 30% by mass, with respect to the total mass of the liquid crystal composition of the present invention.

Furthermore, the compound represented by General Formula (I) according to the present invention is preferably a compound selected from the group consisting of compounds represented by General Formula (1-2).

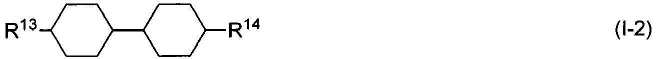

In General Formula (1-2), each of R¹³ and R¹⁴ independently represents an alkyl group having 1 to 5 carbon atoms.

The types of compound capable of being combined are not particularly limited, and a compound is combined depending on the required performance such as solubility at a low temperature, a transition temperature, electrical reliability, or birefringence. The type of compound used is, for example, one type in one embodiment of the present invention. In another embodiment of the present invention, two types are used. In addition, in still another embodiment of the present invention, three types are used.

In the liquid crystal composition of the present invention, the content of the compound represented by General Formula (1-2) needs to be suitably adjusted depending on the required performance such as solubility at a low temperature, a transition temperature, electrical reliability, birefringence, process compatibility, dropping marks, burn-in, or dielectric anisotropy.

For example, the content of the compound represented by General Formula (1-2) is 1% to 30% by mass with respect to the total mass of the liquid crystal composition of the present invention in one embodiment of the present invention. In another embodiment of the present invention, the content is 2% to 30% by mass. In still another embodiment of the present invention, the content is 4% to 30% by mass. In still another embodiment of the present invention, the content is 4% to 25% by mass. In addition, in still another embodiment of the present invention, the content is 4% to 23% by mass.

Furthermore, the compound represented by General Formula (1-2) is preferably a compound selected from the group consisting of compounds represented by Formulas (3.1) to (3.4), and preferably the compound represented by Formula (3.1), (3.3), or (3.4). In particular, the compound represented by Formula (3.2) is preferable since the compound particularly improves the response speed of the liquid crystal composition of the present invention. When a higher Tni than the response speed is required, the compound represented by Formula (3.3) or (3.4) is preferably used. The content of the compound represented by Formula (3.3) or (3.4) is preferably less than 20% to improve the solubility at a low temperature.

Furthermore, the compound represented by General Formula (I-2) is preferably a compound selected from the group consisting of compounds represented by Formulas (3.1) to (3.4), and preferably the compound represented by each of Formulas (3.1), (3.3), and/or (3.4).

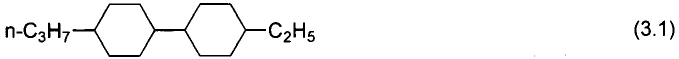

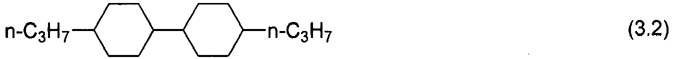

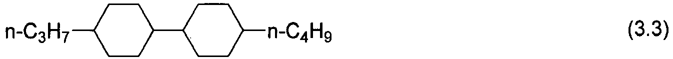

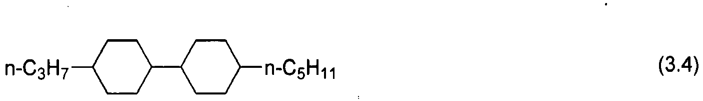

In the liquid crystal composition of the present invention, the content of the compound represented by Formula (3.3) is preferably 1% by mass to 25% by mass, preferably 1% by mass to 20% by mass, preferably 1% by mass to 15% by mass, preferably 1% by mass to 10% by mass, and preferably 1% by mass to 5% by mass, with respect to the total mass of the liquid crystal composition of the present invention.

Furthermore, the compound represented by General Formula (I) according to the present invention is preferably a compound selected from the group consisting of compounds represented by General Formula (1-3).

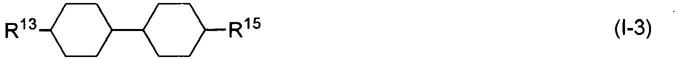

In General Formula (I-3), R¹³ has the same meaning as that in General Formula (1-2).

The types of compound capable of being combined are not particularly limited, and a compound is combined depending on the required performance such as solubility at a low temperature, a transition temperature, electrical reliability, or birefringence. The type of compound used is, for example, one type in one embodiment of the present invention. In another embodiment of the present invention, two types are used. In addition, in still another embodiment of the present invention, three types are used.

In the liquid crystal composition of the present invention, the content of the compound represented by General Formula (I-3) needs to be suitably adjusted depending on the required performance such as solubility at a low temperature, a transition temperature, electrical reliability, birefringence, process compatibility, dropping marks, burn-in, or dielectric anisotropy. The preferable range of the content is as shown in the table described below.

For example, the content of the compound represented by General Formula (1-3) is 3% to 30% by mass with respect to the total mass of the liquid crystal composition of the present invention in one embodiment of the present invention. In another embodiment of the present invention, the content is 4% to 30% by mass. In still another embodiment of the present invention, the content is 15% to 30% by mass. In still another embodiment of the present invention, the content is 25% to 30% by mass. In still another embodiment of the present invention, the content is 3% to 25% by mass. In still another embodiment of the present invention, the content is 3% to 20% by mass. In still another embodiment of the present invention, the content is 3% to 15% by mass. In addition, in still another embodiment of the present invention, the content is 3% to 5% by mass.

In a case where the solubility at a low temperature matters, when the content is set to be great, effects are higher, and in contrast, in a case where the response speed matters, when the content is set to be small, effects are higher. Furthermore, in the case of improving dropping marks or burn-in characteristics, the range of the content is preferably set to a middle value.

Furthermore, the compound represented by General Formula (I-3) is preferably a compound selected from the group consisting of compounds represented by Formulas (4.1) to (4.3), and preferably the compound represented by Formula (4.3).

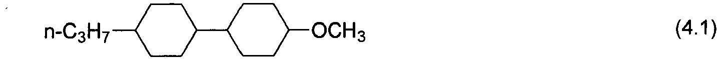

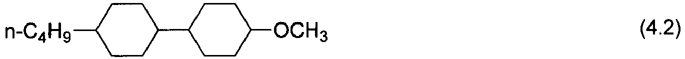

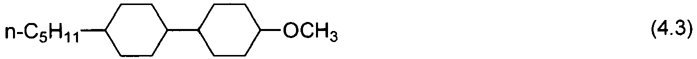

The content of the compound represented by Formula (4.3) is preferably 2% by mass to 30% by mass, preferably 4% by mass to 30% by mass, preferably 6% by mass to 30% by mass, preferably 8% by mass to 30% by mass, preferably 10% by mass to 30% by mass, preferably 12% by mass to 30% by mass, preferably 14% by mass to 30% by mass, preferably 16% by mass to 30% by mass, preferably 18% by mass to 25% by mass, preferably 20% by mass to 24% by mass, and preferably 22% by mass to 23% by mass, with respect to the total mass of the liquid crystal composition of the present invention.

Furthermore, the compound represented by General Formula (I) according to the present invention is preferably a compound selected from the group consisting of compounds represented by General Formula (I-0).

At least one type is preferably selected from the group consisting of compounds represented by General Formula (I-0).

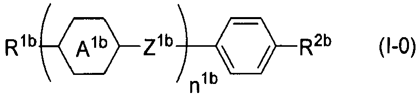

In General Formula (I-0), R^{1b} has the same meaning as R¹ in General Formula (A), R^{2b} has the same meaning as R² in General Formula (A), n^{1b} represents 1 or 2, A^{1b} has the same meaning as A¹ in General Formula (A), and Z^{1b} has the same meaning as Z¹ in General Formula (A).

In the liquid crystal composition of the present invention, the content of the compound represented by General Formula (I-0) is preferably 1% by mass to 55% by mass, preferably 1% by mass to 50% by mass, and preferably 5% by mass to 50% by mass, with respect to the total mass of the liquid crystal composition of the present invention. Within the above-described content ranges, 9% by mass to 47% by mass, 9% by mass to 15% by mass, 11% by mass to 44% by mass, 15% by mass to 32% by mass, 20% by mass to 35% by mass, 23% by mass to 26% by mass, 24% by mass to 40% by mass, 25% by mass to 36% by mass, 28% by mass to 38% by mass, 30% by mass to 40% by mass, 30% by mass to 39% by mass, 30% by mass to 38% by mass, 33% by mass to 47% by mass, 35% by mass to 44% by mass, 35% by mass to 40% by mass, 38% by mass to 45% by mass, or 39% by mass to 47% by mass is preferable.

In the liquid crystal composition of the present invention, the content of the compound represented by Formula (2.3) is preferably 1% by mass to 30% by mass, preferably 1% by mass to 25% by mass, preferably 3% by mass to 25% by mass, preferably 4% by mass to 22% by mass, preferably 5% by mass to 22% by mass, preferably 11% by mass to 22% by mass, preferably 13% by mass to 22% by mass, preferably 4% by mass to 16% by mass, preferably 4% by mass to 15% by mass, preferably 4% by mass to 10% by mass, preferably 5% by mass to 10% by mass, preferably 12% by mass to 15% by mass, and preferably 13% by mass to 16% by mass, with respect to the total mass of the liquid crystal composition of the present invention.

In the liquid crystal composition of the present invention, the content of the compound represented by General Formula (I-0) needs to be suitably adjusted depending on the required performance such as solubility at a low temperature, a transition temperature, electrical reliability, birefringence, process compatibility, viscosity, dropping marks, burn-in, or dielectric anisotropy.

In particular, in a case where the compound represented by General Formula (II-2) described below is contained in the composition, this is preferable from the viewpoint of increase in the response speed of the liquid crystal composition.

Furthermore, the compound represented by General Formula (I) according to the present invention is preferably a compound selected from the group consisting of compounds represented by General Formula (I-4) .

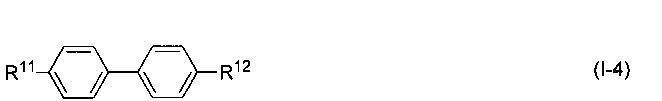

In General Formula (1-4), each of R¹¹ and R¹² has the same meaning as that in General Formula (A).

The types of compound capable of being combined are not particularly limited, and a compound is combined depending on the required performance such as solubility at a low temperature, a transition temperature, electrical reliability, or birefringence. The type of compound used is, for example, one type in one embodiment of the present invention. In another embodiment of the present invention, two types are used.

In the liquid crystal composition of the present invention, the content of the compound represented by General Formula (1-4) needs to be suitably adjusted depending on the required performance such as solubility at a low temperature, a transition temperature, electrical reliability, birefringence, process compatibility, dropping marks, burn-in, or dielectric anisotropy.

In particular, in a case where the compound represented by Formula (5.4) described below is contained in the composition, this is preferable from the viewpoint of increase in the response speed of the liquid crystal composition. In addition, this is also preferable from the viewpoint of even-odd effects or an elastic constant (K₃₃).

For example, the content of the compound represented by General Formula (1-4) is 2% to 30% by mass with respect to the total mass of the liquid crystal composition of the present invention in one embodiment of the present invention. In another embodiment of the present invention, the content is 5% to 30% by mass. In still another embodiment of the present invention, the content is 6% to 30% by mass. In still another embodiment of the present invention, the content is 8% to 30% by mass. In still another embodiment of the present invention, the content is 10% to 30% by mass. In still another embodiment of the present invention, the content is 12% to 30% by mass. In still another embodiment of the present invention, the content is 15% to 30% by mass. In still another embodiment of the present invention, the content is 20% to 30% by mass. In still another embodiment of the present invention, the content is 25% to 30% by mass. In still another embodiment of the present invention, the content is 2% to 25% by mass. In still another embodiment of the present invention, the content is 2% to 20% by mass. In still another embodiment of the present invention, the content is 2% to 15% by mass. In still another embodiment of the present invention, the content is 2% to 10% by mass. In addition, in still another embodiment of the present invention, the content is 5% to 8% by mass.

In the case of obtaining a high birefringence, when the content is set to be great, effects are higher, and in contrast, in a case where a high Tni matters, when the content is set to be small, effects are higher. Furthermore, in the case of improving dropping marks or burn-in characteristics, the range of the content is preferably set to a middle value.

Furthermore, the compound represented by General Formula (1-4) is preferably a compound selected from the group consisting of compounds represented by Formulas (5.1) to (5.4), more preferably the compound represented by each of Formulas (5.2) to (5.7), and still more preferably includes at least one type of compound selected from the group consisting of Formulas (5.3) and (5.4).

It is preferable that an alkenyl group having 1 to 8 carbon atoms is included in one of the substituents of the end portions of the skeleton represented by Formula (1-4) from the viewpoint of the high speed response of the liquid crystal composition.

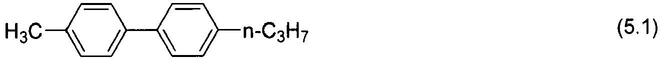

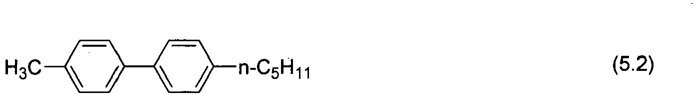

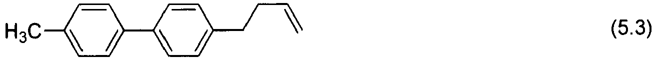

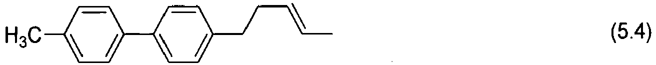

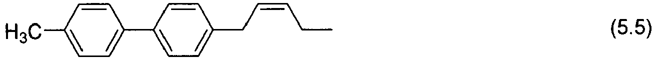

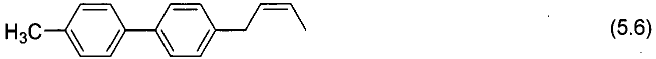

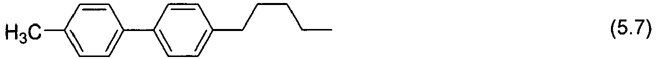

In particular, the content of the compound represented by Formula (5.4) is preferably 2% by mass to 30% by mass with respect to the total mass of the liquid crystal composition of the present invention. Within the above-described content range, for example, 4% by mass to 30% by mass, 6% by mass to 30% by mass, 8% by mass to 30% by mass, 10% by mass to 30% by mass, 12% by mass to 30% by mass, 14% by mass to 30% by mass, 16% by mass to 30% by mass, 18% by mass to 30% by mass, 20% by mass to 30% by mass, 22% by mass to 30% by mass, 23% by mass to 30% by mass, 24% by mass to 30% by mass, 25% by mass to 30% by mass, 4% by mass to 6% by mass, 4% by mass to 8% by mass, 4% by mass to 10% by mass, 4% by mass to 12% by mass, 4% by mass to 14% by mass, 4% by mass to 16% by mass, 4% by mass to 18% by mass, 4% by mass to 20% by mass, 4% by mass to 22% by mass, 4% by mass to 23% by mass, 4% by mass to 24% by mass, or 4% by mass to 25% by mass is preferable.

Furthermore, the compound represented by General Formula (I) according to the present invention is preferably a compound selected from the group consisting of compounds represented by General Formula (1-5).

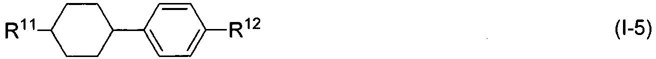

In General Formula (I-5), each of R¹¹ and R¹² has the same meaning as that in General Formula (I).

The types of compound capable of being combined are not particularly limited, and a compound is combined depending on the required performance such as solubility at a low temperature, a transition temperature, electrical reliability, or birefringence. The type of compound used is, for example, one type in one embodiment of the present invention. In another embodiment of the present invention, two types are used.

In the liquid crystal composition of the present invention, the content of the compound represented by General Formula (1-5) needs to be suitably adjusted depending on the required performance such as solubility at a low temperature, a transition temperature, electrical reliability, birefringence, process compatibility, dropping marks, burn-in, or dielectric anisotropy. The preferable range of the content is as shown in the table described below.

For example, the content of the compound represented by General Formula (1-5) is 1% to 30% by mass with respect to the total mass of the liquid crystal composition of the present invention in one embodiment of the present invention. In another embodiment of the present invention, the content is 1% to 25% by mass. In still another embodiment of the present invention, the content is 1% to 20% by mass. In still another embodiment of the present invention, the content is 1% to 15% by mass. In still another embodiment of the present invention, the content is 1% to 11% by mass. In still another embodiment of the present invention, the content is 1% to 8% by mass. In still another embodiment of the present invention, the content is 1% to 5% by mass. In still another embodiment of the present invention, the content is 1% to 4% by mass. In still another embodiment of the present invention, the content is 4% to 11% by mass. In still another embodiment of the present invention, the content is 5% to 11% by mass. In still another embodiment of the present invention, the content is 8% to 11% by mass. In addition, in still another embodiment of the present invention, the content is 10% to 11% by mass.

In a case where the solubility at a low temperature matters, when the content is set to be great, effects are higher, and in contrast, in a case where the response speed matters, when the content is set to be small, effects are higher. Furthermore, in the case of improving dropping marks or burn-in characteristics, the range of the content is preferably set to a middle value.

Furthermore, the compound represented by General Formula (I-5) is preferably a compound selected from the group consisting of compounds represented by Formulas (6.1) to (6.6), and preferably the compound represented by Formula (6.3), (6.4), or (6.6).

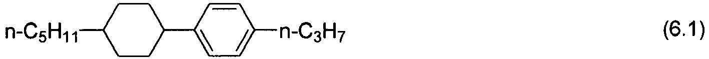

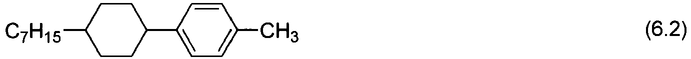

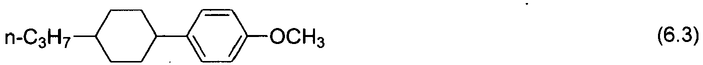

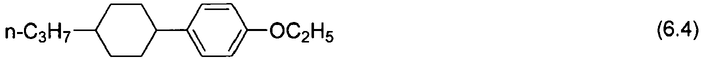

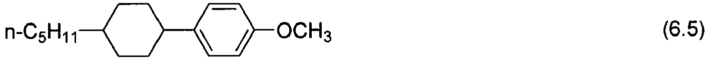

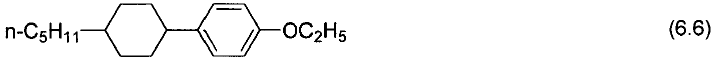

The liquid crystal composition of the present invention can also further contain the compound represented by Formula (2.7) or (6.8) having a similar structure to that of the compound represented by General Formula (1-5).

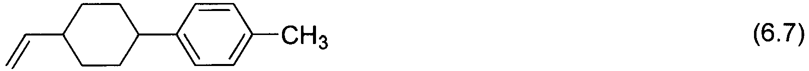

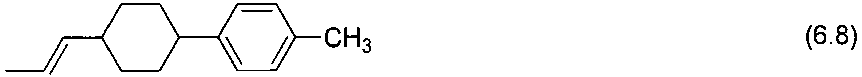

The content of the compound represented by Formula (6.7) is preferably adjusted depending on the required performance such as solubility at a low temperature, a transition temperature, electrical reliability, or birefringence.

Preferably, the composition according to the present invention comprises a compound selected from the group consisting of compounds represented by General Formula (1-6).

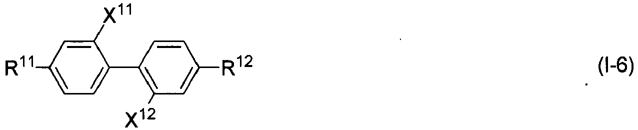

In General Formula (I-6), each of R¹¹ and R¹² has the same meaning as that in General Formula (I).

The content of the compound represented by General Formula (1-6) is preferably 2% by mass to 30% by mass, preferably 4% by mass to 30% by mass, preferably 5% by mass to 30% by mass, preferably 6% by mass to 30% by mass, preferably 9% by mass to 30% by mass, preferably 12% by mass to 30% by mass, preferably 14% by mass to 30% by mass, preferably 16% by mass to 30% by mass, preferably 18% by mass to 25% by mass, preferably 20% by mass to 24% by mass, and preferably 22% by mass to 23% by mass, with respect to the total mass of the liquid crystal composition of the present invention. Furthermore, the compound represented by General Formula (1-6) is preferably the compound represented by Formula (7.1).

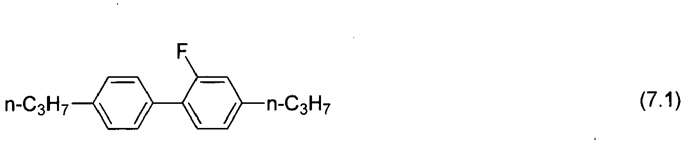

Furthermore, the compound represented by General Formula (I) is preferably a compound selected from the group consisting of compounds represented by General Formula (1-7).

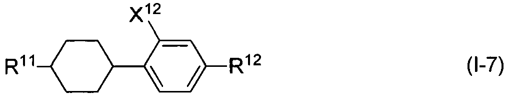

In the formula, each of R¹¹ and R¹² has the same meaning as that in General Formula (I).

The content of the compound represented by General Formula (1-7) with respect to the total mass of the liquid crystal composition of the present invention is preferably 1% by mass to 20% by mass, preferably 1% by mass to 15% by mass, preferably 1% by mass to 10% by mass, and preferably 1% by mass to 5% by mass.

Furthermore, the compound represented by General Formula (I-7) is preferably the compound represented by Formula (8.1).

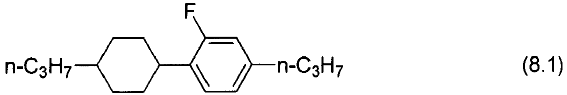

Furthermore, the compound represented by General Formula (I) is preferably a compound selected from the group consisting of compounds represented by General Formula (1-8).

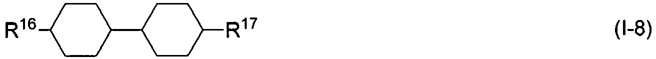

In the formula, each of R¹⁶ and R¹⁷ independently represents an alkenyl group having 2 to 5 carbon atoms.

The types of compound capable of being combined are not particularly limited, and one to three types are preferably combined depending on the required performance such as solubility at a low temperature, a transition temperature, electrical reliability, or birefringence. The content of the compound represented by General Formula (1-8) is preferably 1% to 30% by mass, preferably 1% to 25% by mass, preferably 1% to 20% by mass, preferably 1% to 18% by mass, preferably 3% to 18% by mass, preferably 4% to 9% by mass, and preferably 4% to 6% by mass, with respect to the total mass of the liquid crystal composition of the present invention, depending on the required performance such as solubility at a low temperature, a transition temperature, electrical reliability, birefringence, process compatibility, dropping marks, burn-in, or dielectric anisotropy.

Furthermore, the compound represented by General Formula (1-8) is preferably a compound selected from the group consisting of compounds represented by Formulas (9.1) to (9.10), and preferably the compound represented by Formula (9.2), (9.4), or (9.7).

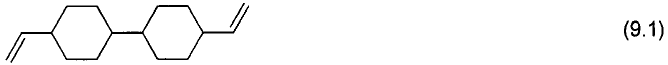

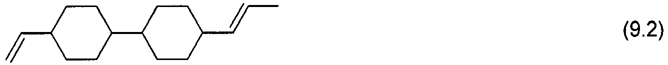

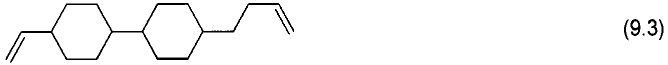

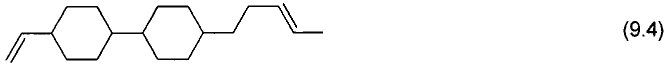

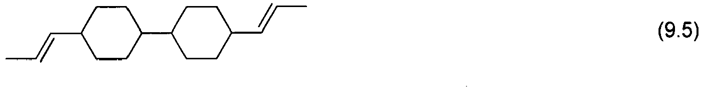

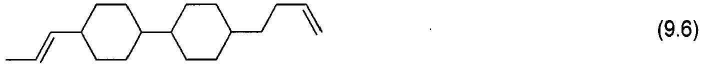

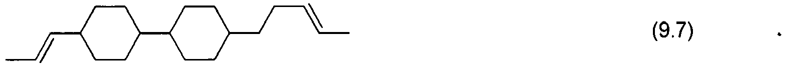

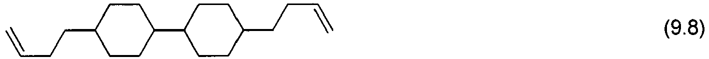

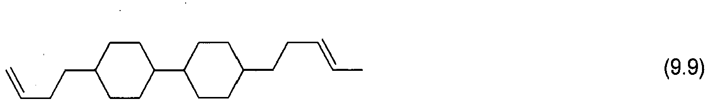

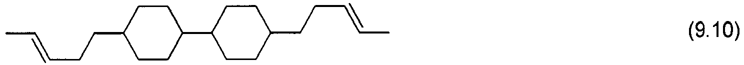

Preferably, the composition according to the present invention comprises a compound selected from the compounds represented by General Formula (II).

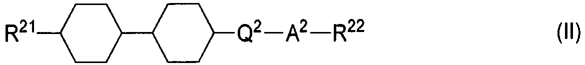

In General Formula (II), each of R²¹ and R²² independently represents an alkenyl group having 2 to 5 carbon atoms, an alkyl group having 1 to 5 carbon atoms, or an alkoxy group having 1 to 4 carbon atoms, A² represents a 1,4-cyclohexylene group or a 1, 4-phenylene group, and Q² represents a single bond, -COO-, -CH₂-CH₂-, or -CF₂O-.

The types of compound capable of being combined are not particularly limited, and a compound is combined depending on the required performance such as solubility at a low temperature, a transition temperature, electrical reliability, or birefringence. The type of compound used is, for example, one type in one embodiment of the present invention. In another embodiment of the present invention, two types are used. In still another embodiment of the present invention, three types are used. In addition, in still another embodiment of the present invention, four or more types are used.

In the liquid crystal composition of the present invention, the content of the compound represented by General Formula (II) needs to be suitably adjusted depending on the required performance such as solubility at a low temperature, a transition temperature, electrical reliability, birefringence, process compatibility, dropping marks, burn-in, or dielectric anisotropy.

For example, the content of the compound represented by General Formula (II) is 3% to 35% by mass with respect to the total mass of the liquid crystal composition of the present invention in one embodiment of the present invention. In another embodiment of the present invention, the content is 3% to 30% by mass. In still another embodiment of the present invention, the content is 3% to 25% by mass. In still another embodiment of the present invention, the content is 3% to 21% by mass. In still another embodiment of the present invention, the content is 3% to 20% by mass. In still another embodiment of the present invention, the content is 3% to 18% by mass. In still another embodiment of the present invention, the content is 3% to 15% by mass. In still another embodiment of the present invention, the content is 3% to 12% by mass. In still another embodiment of the present invention, the content is 4% to 21% by mass. In still another embodiment of the present invention, the content is 11% to 21% by mass. In still another embodiment of the present invention, the content is 13% to 21% by mass. In still another embodiment of the present invention, the content is 15% to 21% by mass. In still another embodiment of the present invention, the content is 16% to 21% by mass. In still another embodiment of the present invention, the content is 4% to 12% by mass. In still another embodiment of the present invention, the content is 11% to 20% by mass. In still another embodiment of the present invention, the content is 13% to 15% by mass. In addition, in still another embodiment of the present invention, the content is 15% to 18% by mass.

Furthermore, the compound represented by General Formula (II) is, for example, preferably a compound selected from the group consisting of compounds represented by General Formula (II-1).

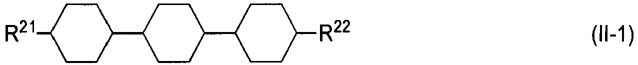

In General Formula (II-1), each of R²¹ and R²² has the same meaning as that in General Formula (II).

The content of the compound represented by General Formula (II-1) is preferably adjusted depending on the required performance such as solubility at a low temperature, a transition temperature, electrical reliability, or birefringence. The preferable range of the content is as shown in the table described below.

The content of the compound represented by General Formula (II-1) is preferably adjusted depending on the required performance such as solubility at a low temperature, a transition temperature, electrical reliability, or birefringence, and the content is preferably 4% by mass to 24% by mass, preferably 8% by mass to 18% by mass, and more preferably 12% by mass to 14% by mass.

Furthermore, the compound represented by General Formula (II-1) is, for example, preferably the compound represented by Formula (10.1) or (10.2).

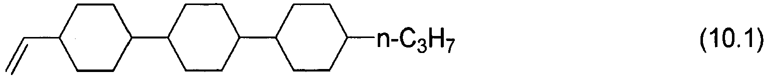

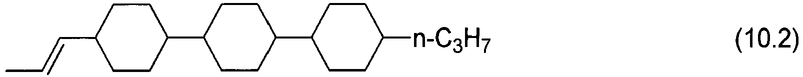

Furthermore, the compound represented by General Formula (II) according to the present invention is, for example, preferably a compound selected from the group consisting of compounds represented by General Formula (II-2).

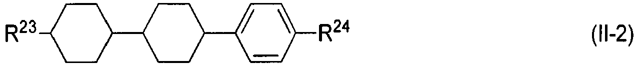

In General Formula (II-2), R²³ represents an alkenyl group having 2 to 5 carbon atoms, and R²⁴ represents an alkyl group having 1 to 5 carbon atoms or an alkoxy group having 1 to 4 carbon atoms.

The types of compound capable of being combined are not particularly limited, and a compound is combined depending on the required performance such as solubility at a low temperature, a transition temperature, electrical reliability, or birefringence. In a case where Formula (11.1) or (11.2) is included in the liquid crystal composition, this contributes to improvement of the parameters relating to the high speed response of the liquid crystal composition. In addition, the type of compound used is, for example, one type in one embodiment of the present invention. In another embodiment of the present invention, two or more types are used.

In the liquid crystal composition of the present invention, the content of the compound represented by General Formula (II-2) needs to be suitably adjusted depending on the required performance such as solubility at a low temperature, a transition temperature, electrical reliability, birefringence, process compatibility, dropping marks, burn-in, a high speed response, or dielectric anisotropy.

The preferable content of the compound represented by General Formula (II-2) is, for example, 2 to 45% by mass with respect to the total mass of the liquid crystal composition of the present invention. Within the above-described content range, for example, 5 to 45% by mass, 8 to 45% by mass, 11 to 45% by mass, 14 to 45% by mass, 17 to 35% by mass, 17 to 31% by mass, 18 to 28% by mass, 18 to 27% by mass, 18 to 26% by mass, 2 to 45% by mass, 3 to 40% by mass, 4 to 35% by mass, 5 to 30% by mass, 6 to 25% by mass, 7 to 24% by mass, 8 to 23% by mass, or 9 to 23% by mass is preferable.

Furthermore, the compound represented by General Formula (II-2) according to the present invention is, for example, preferably the compound represented by each of Formulas (11.1) to (11.9).

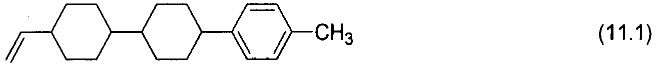

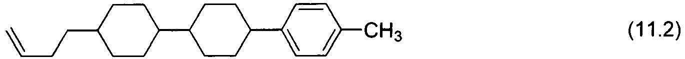

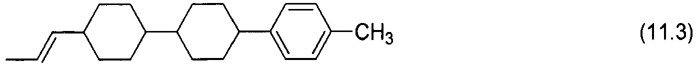

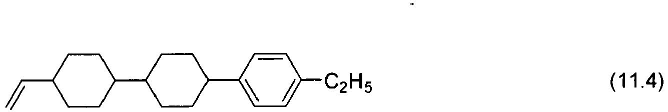

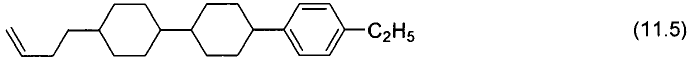

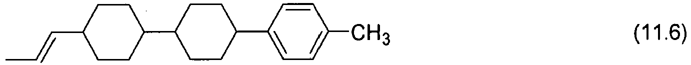

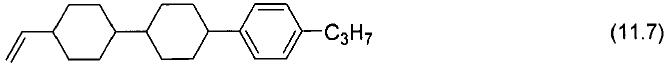

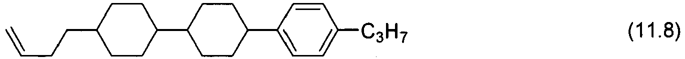

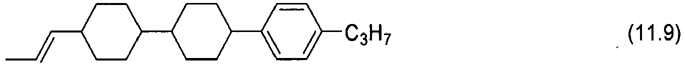

Depending on the required performance such as solubility at a low temperature, a transition temperature, electrical reliability, or birefringence, one compound represented by each of Formulas (11.1) to (11.9) may be contained, two compounds represented by each of Formulas (11.1) to (11.9) may be contained, three compounds represented by each of Formulas (11.1) to (11.9) may be contained, one type of compound represented by Formula (11.1) may be contained, one type of compound represented by Formula (11.2) may be contained, both the compound represented by Formula (11.1) and the compound represented by Formula (11.2) may be contained, or all of the compounds represented by Formulas (11.1) to (11.3) may be contained. The compound represented by each of Formula (11.1) and/or (11.2) is more preferably contained, and the preferable range of each content is as shown in the table described below.

In the liquid crystal composition of the present invention, the content of each compound represented by Formula (11.1) is preferably 1% by mass to 55% by mass, preferably 2% by mass to 30% by mass, and preferably 3% by mass to 25% by mass, with respect to the total mass of the liquid crystal composition of the present invention. Within the above-described content ranges, 4% by mass to 22% by mass, 4% by mass to 20% by mass, 4% by mass to 18% by mass, 5% by mass to 16% by mass, 6% by mass to 15% by mass, 7% by mass to 15% by mass, or 8% by mass to 14% by mass is preferable.

In the liquid crystal composition of the present invention, the content of the compound represented by Formula (11.2) is preferably 1% by mass to 30% by mass, preferably 1% by mass to 25% by mass, preferably 3% by mass to 25% by mass, preferably 4% by mass to 22% by mass, preferably 5% by mass to 15% by mass, preferably 6% by mass to 14% by mass, preferably 7% by mass to 13% by mass, preferably 7% by mass to 12% by mass, and preferably 7% by mass to 11% by mass, with respect to the total mass of the liquid crystal composition of the present invention.

In the liquid crystal composition according to the present invention, a case where both the compound represented by Formula (11.1) and the compound represented by Formula (11.2) are contained is preferable from the viewpoint of compatibility. In a case where both the compound represented by Formula (11.1) and the compound represented by Formula (11.2) are contained, the preferable range of the total content of both compounds is preferably 5% by mass to 35% by mass, preferably 6% by mass to 30% by mass, and preferably 7% by mass to 28% by mass, with respect to the total mass of the liquid crystal composition of the present invention. Within the above-described content ranges, 8% by mass to 27% by mass, 9% by mass to 28% by mass, or 10% by mass to 25% by mass is preferable.

Furthermore, the compound represented by General Formula (II) is, for example, preferably a compound selected from the group consisting of compounds represented by General Formula (II-3).

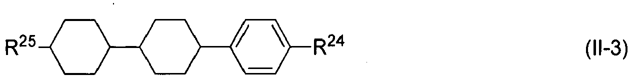

In General Formula (II-3), R²⁵ represents an alkyl group having 1 to 5 carbon atoms, and R²⁴ represents an alkyl group having 1 to 5 carbon atoms, or an alkoxy group having 1 to 4 carbon atoms.

The types of compound capable of being combined are not particularly limited, and one to three types of these compounds are preferably contained depending on the required performance such as solubility at a low temperature, a transition temperature, electrical reliability, or birefringence.

The content of the compound represented by General Formula (II-3) needs to be suitably adjusted depending on the required performance such as solubility at a low temperature, a transition temperature, electrical reliability, birefringence, process compatibility, dropping marks, burn-in, or dielectric anisotropy.

The preferable content of the compound represented by General Formula (II-3) is, for example, 2% to 45% by mass with respect to the total mass of the liquid crystal composition of the present invention. Within the above-described content range, for example, 5% to 45% by mass, 8% to 45% by mass, 11% to 45% by mass, 14% to 45% by mass, 17% to 45% by mass, 20% to 45% by mass, 23% to 45% by mass, 26% to 45% by mass, 29% to 45% by mass, 2% to 45% by mass, 2% to 40% by mass, 2% to 35% by mass, 2% to 30% by mass, 2% to 25% by mass, 2% to 20% by mass, 2% to 15% by mass, or 2% to 10% by mass is preferable.

Furthermore, the compound represented by General Formula (II-3) is, for example, preferably the compound represented by each of Formulas (12.1) to (12.3).

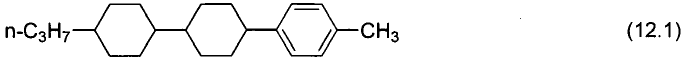

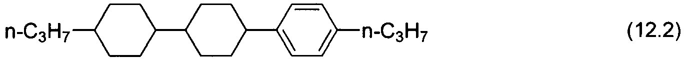

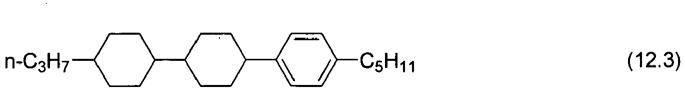

The liquid crystal composition of the present invention may contain the compound represented by Formula (12.1), the compound represented by Formula (12.2), or both the compound represented by Formula (12.1) and the compound represented by Formula (12.2) depending on the required performance such as solubility at a low temperature, a transition temperature, electrical reliability, or birefringence. The compound represented by Formula (12.3) may be an optically active compound.

Furthermore, the compound represented by General Formula (II-3) according to the present invention is, for example, preferably a compound selected from the group consisting of compounds represented by General Formula (II-3-1).

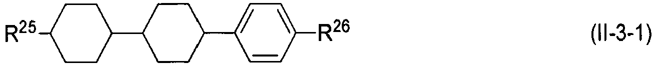

In General Formula (II-3-1), R²⁵ represents an alkyl group having 1 to 5 carbon atoms, and R²⁶ represents an alkoxy group having 1 to 4 carbon atoms.

The content of the compound represented by General Formula (II-3-1) is preferably adjusted depending on the required performance such as solubility at a low temperature, a transition temperature, electrical reliability, or birefringence, and the content is preferably 1% by mass to 24% by mass, preferably 4% by mass to 18% by mass, and preferably 6% by mass to 14% by mass.

Furthermore, the compound represented by General Formula (II-3-1), for example, is preferably the compound represented by each of Formulas (13.1) to (13.4), and in particular, preferably the compound represented by Formula (13.3).

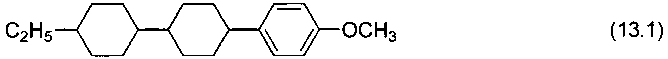

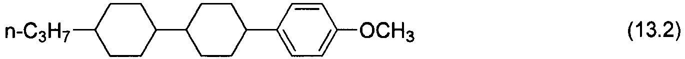

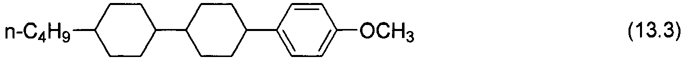

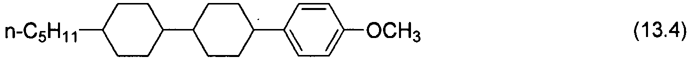

Furthermore, the compound represented by General Formula (II) according to the present invention is, for example, preferably a compound selected from the group consisting of compounds represented by General Formula (II-4).

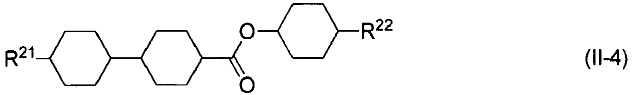

In General Formula (II-4), each of R²¹ and R²² independently represents an alkenyl group having 2 to 5 carbon atoms, an alkyl group having 1 to 5 carbon atoms, or an alkoxy group having 1 to 4 carbon atoms.

Only one type of these compounds may be contained or two or more types may be contained, and these compounds are preferably suitably combined depending on the required performance. The types of compound capable of being combined are not particularly limited, and one and two types of these compounds are preferably contained, and one to three types are more preferably contained depending on the required performance such as solubility at a low temperature, a transition temperature, electrical reliability, or birefringence.

The content of the compound represented by general Formula (II-4) is preferably 1% by mass to 15% by mass, preferably 2% by mass to 15% by mass, preferably 3% by mass to 15% by mass, preferably 4% by mass to 12% by mass, and preferably 5% by mass to 7% by mass, with respect to the total mass of the liquid crystal composition of the present invention.

Furthermore, the compound represented by General Formula (II-4), for example, is preferably the compound represented by each of Formulas (14.1) to (14.5), and in particular, preferably the compound represented by Formula (14.2) or/and (14.5).

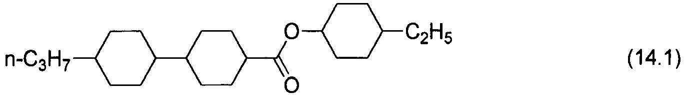

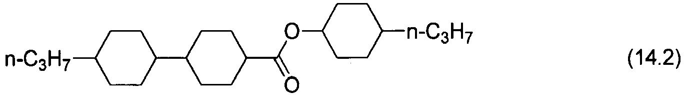

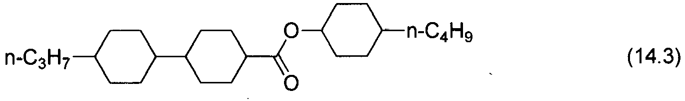

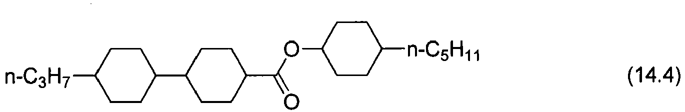

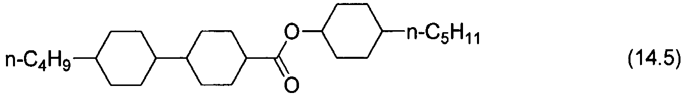

Preferably, the composition according to the present invention comprises a compound selected from the group consisting of compounds represented by General Formula (III) .

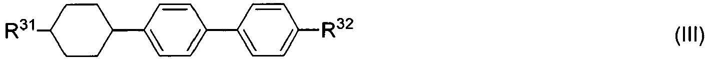

In General Formula (III) , each of R³¹ and R³² independently represents an alkenyl group having 2 to 5 carbon atoms, an alkyl group having 1 to 5 carbon atoms, or an alkoxy group having 1 to 4 carbon atoms.

The content of the compound represented by General Formula (III) is preferably 1% by mass to 25% by mass, preferably 2% by mass to 20% by mass, preferably 2% by mass to 15% by mass, preferably 2% by mass to 10% by mass, and preferably 4% by mass to 6% by mass, with respect to the total mass of the liquid crystal composition of the present invention, in consideration of the required solubility and birefringence.

Furthermore, the compound represented by General Formula (III), for example, is preferably the compound represented by Formula (15.1) or (15.2), and in particular, preferably the compound represented by Formula (15.1).

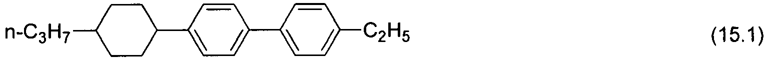

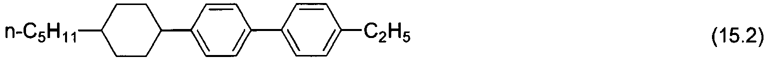

Furthermore, the compound represented by General Formula (III) is preferably a compound selected from the group consisting of compounds represented by General Formula (III-1).

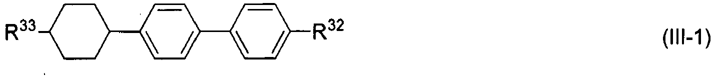

In General Formula (III-1), R³³ represents an alkenyl group having 2 to 5 carbon atoms. Each of R^{32'} s independently represents an alkyl group having 1 to 5 carbon atoms or an alkoxy group having 1 to 4 carbon atoms.

The content of the compound represented by General Formula (III-1) is preferably adjusted depending on the required performance such as solubility at a low temperature, a transition temperature, electrical reliability, or birefringence. The content is preferably 4% by mass to 23% by mass, preferably 6% by mass to 18% by mass, and preferably 10% by mass to 13% by mass, with respect to the total mass of the liquid crystal composition of the present invention.

The compound represented by General Formula (III-1), for example, is preferably the compound represented by Formula (16.1) or (16.2).

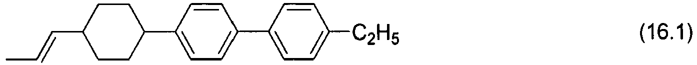

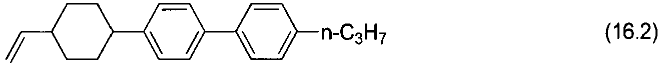

Furthermore, the compound represented by General Formula (III) is preferably a compound selected from the group consisting of compounds represented by General Formula (III-2).

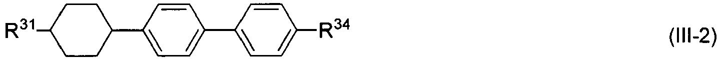

In General Formula (111-2), R³¹ has the same meaning as that in General Formula (III).

The content of the compound represented by General Formula (III-2) is preferably adjusted depending on the required performance such as solubility at a low temperature, a transition temperature, electrical reliability, or birefringence, and the content is preferably 4% by mass to 23% by mass, preferably 6% by mass to 18% by mass, and preferably 10% by mass to 13% by mass, with respect to the total mass of the liquid crystal composition of the present invention.

Furthermore, the compound represented by General Formula (111-2) is preferably a compound selected from the group consisting of compounds represented by Formulas (17.1) to (17.3), and in particular, preferably the compound represented by Formula (17.3).

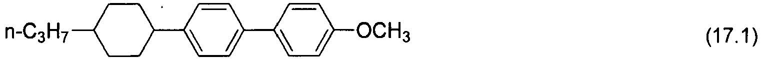

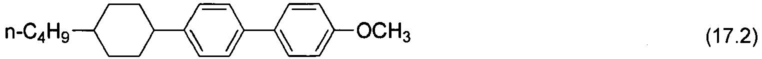

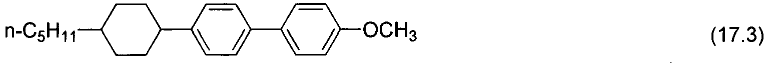

Preferably, the composition according to the present invention comprises a compound selected from the group represented by General Formula (IV).

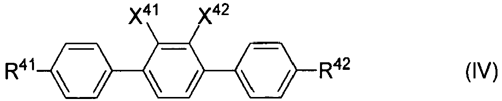

In General Formula (IV), each of R⁴¹ and R⁴² independently represents an alkyl group having 1 to 5 carbon atoms or an alkenyl group having 2 to 5 carbon atoms, and each of X⁴¹ and X⁴² independently represents a hydrogen atom or a fluorine atom.

The types of compound with which the compound represented by General Formula (IV) can be combined are not particularly limited, and a compound is suitably combined depending on the required performance such as solubility at a low temperature, a transition temperature, electrical reliability, or birefringence. When a compound having the structure of General Formula (IV) such as compounds represented by General Formulas (18.1) to (18.9) described below is added to the liquid crystal composition, Δn of the liquid crystal composition and the solubility of other components configuring the liquid crystal composition are improved.

The type of compound used is, for example, one to six types in one embodiment of the present invention.

For example, the content of the compound represented by General Formula (IV) is 1% to 35% by mass with respect to the total mass of the liquid crystal composition of the present invention in one embodiment. In another embodiment of the present invention, the content is 1% to 30% by mass. In still another embodiment of the present invention, the content is 1% to 26% by mass. In still another embodiment of the present invention, the content is 1% to 22% by mass. In still another embodiment of the present invention, the content is 1% to 10% by mass. In still another embodiment of the present invention, the content is 1% to 8% by mass. In still another embodiment of the present invention, the content is 1% to 6% by mass. In still another embodiment of the present invention, the content is 2% to 26% by mass . In still another embodiment of the present invention, the content is 3% to 26% by mass. In still another embodiment of the present invention, the content is 11% to 26% by mass. In still another embodiment of the present invention, the content is 20% to 26% by mass. In still another embodiment of the present invention, the content is 2% to 8% by mass. In still another embodiment of the present invention, the content is 2% to 6% by mass. In addition, in still another embodiment of the present invention, the content is 11% to 22% by mass.

Furthermore, the compound represented by General Formula (IV) is, for example, preferably a compound selected from the group consisting of compounds represented by General Formula (IV-1).

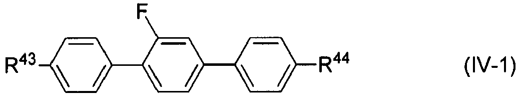

In General Formula (IV), each of R⁴³ and R⁴⁴ independently represents an alkyl group having 1 to 5 carbon atoms.

The content of the compound represented by General Formula (IV-1) needs to be suitably adjusted depending on the required performance such as solubility at a low temperature, a transition temperature, electrical reliability, birefringence, process compatibility, dropping marks, burn-in, or dielectric anisotropy.

For example, the content of the compound represented by General Formula (IV-1) is 1 to 35% by mass with respect to the total mass of the liquid crystal composition of the present invention in one embodiment. In another embodiment of the present invention, the content is 1 to 30% by mass. In still another embodiment of the present invention, the content is 1 to 26% by mass. In still another embodiment of the present invention, the content is 1 to 22% by mass. In still another embodiment of the present invention, the content is 1 to 10% by mass. In still another embodiment of the present invention, the content is 1 to 8% by mass. In still another embodiment of the present invention, the content is 1 to 6% by mass. In still another embodiment of the present invention, the content is 2 to 26% by mass. In still another embodiment of the present invention, the content is 3 to 26% by mass. In still another embodiment of the present invention, the content is 11 to 26% by mass. In still another embodiment of the present invention, the content is 20 to 26% by mass. In still another embodiment of the present invention, the content is 2 to 8% by mass. In still another embodiment of the present invention, the content is 2 to 6% by mass. In addition, in still another embodiment of the present invention, the content is 11 to 22% by mass.

Furthermore, the compound represented by General Formula (IV-1) is, for example, preferably the compound represented by each of Formulas (18.1) to (18.9).

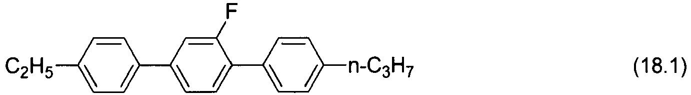

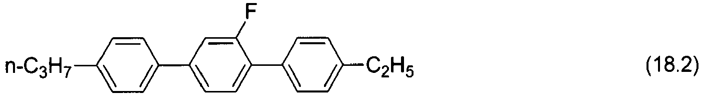

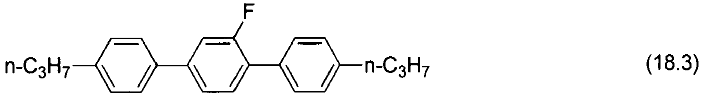

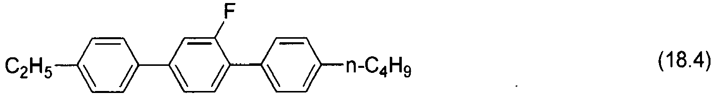

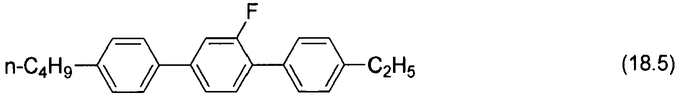

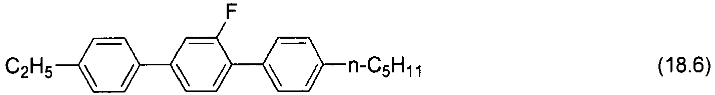

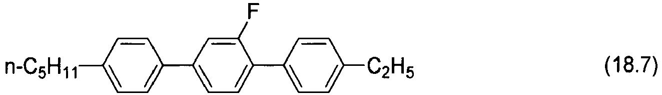

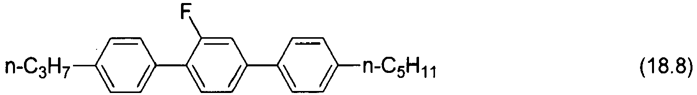

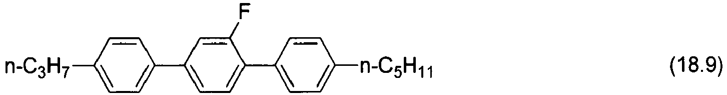

In the compound represented by General Formula (IV-1), the types of compounds capable of being combined are not particularly limited, and one to three types of these compounds are preferably contained, and one to four types of these compounds are more preferably contained. In addition, since it is also effective for solubility that the molecular weight distribution of a compound selected from the group consisting of compounds represented by General Formula (IV-1) be wide, for example, one compound represented by Formula (18.1) or (18.2), one compound represented by Formula (18.4) or (18.5), one compound represented by Formula (18.6) or (18.7), and one compound represented by Formula (18.8) or (18.9) are selected, and these compounds are preferably suitably combined. Among these, the compounds represented by Formula (18.1), (18.3), (18.4), (18.6), or (18.9) are preferably included.

Furthermore, the compound represented by General Formula (IV) is, for example, preferably a compound selected from the group consisting of compounds represented by General Formula (IV-2).

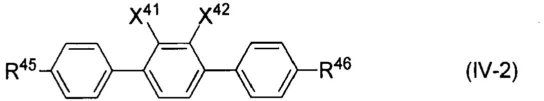

In General Formula (IV-2), each of R⁴⁵ and R⁴⁶ independently represents an alkyl group having 1 to 5 carbon atoms or an alkenyl group having 2 to 5 carbon atoms, at least one of R⁴⁵ and R⁴⁶ represents an alkenyl group having 2 to 5 carbon atoms, and each of X⁴¹ and X⁴² independently represents a hydrogen atom or a fluorine atom.

The types of compound capable of being combined are not particularly limited, and a compound is combined depending on the required performance such as solubility at a low temperature, a transition temperature, electrical reliability, or birefringence.

The content of the compound represented by General Formula (IV-2) needs to be suitably adjusted depending on the required performance such as solubility at a low temperature, a transition temperature, electrical reliability, birefringence, process compatibility, dropping marks, burn-in, or dielectric anisotropy. For example, the content of the compound represented by General Formula (IV-2) is 1 to 20% by mass with respect to the total mass of the liquid crystal composition of the present invention. As more preferable content, 1 to 11% by mass, 2 to 11% by mass, 4 to 11% by mass, 1 to 6% by mass, 1 to 4% by mass, 2 to 6% by mass are exemplified.

Furthermore, the compound represented by General Formula (IV-2), for example, is preferably the compound represented by each of Formulas (19.1) to (18.8), and among these, preferably the compound represented by Formula (19.2) .

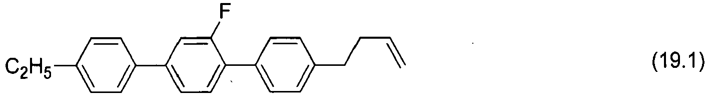

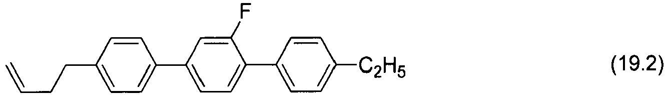

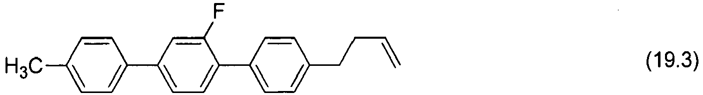

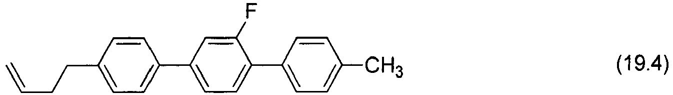

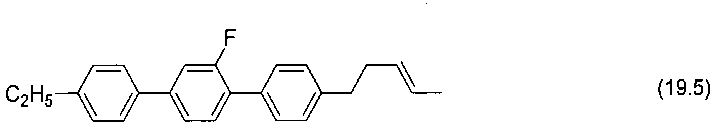

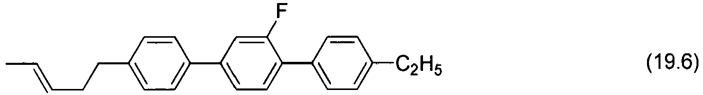

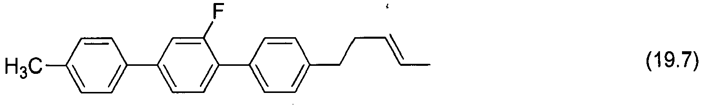

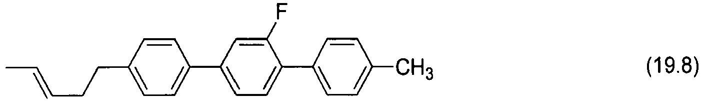

Since it is also effective for solubility that the molecular weight distribution of the compound selected as the component of the liquid crystal composition be wide, for example, one compound represented by Formula (19.1) or (19.2), one compound represented by Formula (19.3) or (19.4), one compound represented by Formula (19.5) or (19.6), and one compound represented by Formula (19.7) or (19.8) are selected respectively, and these compounds are preferably suitably combined.

Furthermore, preferably, the composition according to the present invention comprises a compound selected from the group represented by General Formula (V).

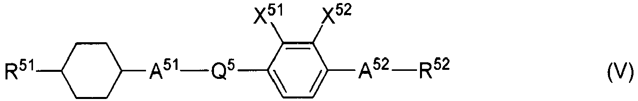

In General Formula (V), each of R⁵¹ and R⁵² independently represents an alkyl group having 1 to 5 carbon atoms, an alkenyl group having 2 to 5 carbon atoms, or an alkoxy group having 1 to 4 carbon atoms, each of A⁵¹ and A⁵² independently represents a 1,4-cyclohexylene group or a 1,4-phenylene group, Q⁵ represents a single bond or -COO-, and each of X⁵¹ and X⁵² independently represents a fluorine atom or a hydrogen atom. The types of compound capable of being combined are not particularly limited, and a compound is suitably combined depending on the required performance such as solubility at a low temperature, a transition temperature, electrical reliability, or birefringence. The type of compound used is, for example, one type in one embodiment of the present invention. In another embodiment of the present invention, two types are used. In still another embodiment of the present invention, three types are used. In addition, in still another embodiment of the present invention, four types are used.

For example, the content of the compound represented by General Formula (V) is 1% to 25% by mass with respect to the total mass of the liquid crystal composition according to the present invention in one embodiment. In another embodiment of the present invention, the content is 1% to 20% by mass. In still another embodiment of the present invention, the content is 1% to 19% by mass. In still another embodiment of the present invention, the content is 1% to 10% by mass. In still another embodiment of the present invention, the content is 1% to 9% by mass. In still another embodiment of the present invention, the content is 1% to 8% by mass. In still another embodiment of the present invention, the content is 1% to 7% by mass. In still another embodiment of the present invention, the content is 1% to 5% by mass. In still another embodiment of the present invention, the content is 1% to 3% by mass. In still another embodiment of the present invention, the content is 1% to 2% by mass. In still another embodiment of the present invention, the content is 2% to 19% by mass. In still another embodiment of the present invention, the content is 5% to 19% by mass. In still another embodiment of the present invention, the content is 9% to 19% by mass. In still another embodiment of the present invention, the content is 2% to 8% by mass. In addition, in still another embodiment of the present invention, the content is 6% to 8% by mass.

Furthermore, the compound represented by General Formula (V) according to the present invention is preferably the compound represented by General Formula (V-1).

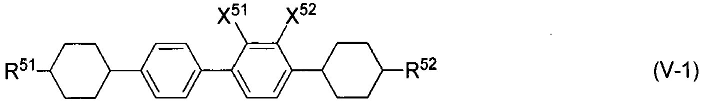

In General Formula (V-1), each of R⁵¹, R⁵², X⁵¹, and X⁵² has the same meaning as that in General Formula (V).

Furthermore, the compound represented by General Formula (V-1) is preferably the compound represented by General Formula (V-1-1).

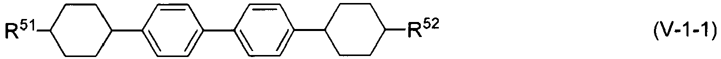

In General Formula (V-1-1), each of R⁵¹ and R⁵² has the same meaning as that in General Formula (V).

The compound represented by General Formula (V-1-1) is preferably contained in 1% by mass to 15% by mass, preferably contained in 1% by mass to 10% by mass, preferably contained in 3% by mass to 10% by mass, preferably contained in 3% by mass to 7% by mass, preferably contained in 3% by mass to 5% by mass, and preferably contained in 3% by mass to 4% by mass, with respect to the total mass of the liquid crystal composition of the present invention.

Furthermore, the compound represented by General Formula (V-1-1), for example, is preferably the compound represented by each of Formulas (20.1) to (20.4), and preferably the compound represented by Formula (20.2).

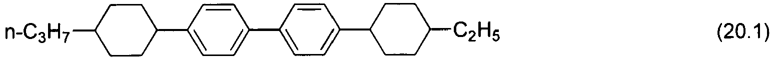

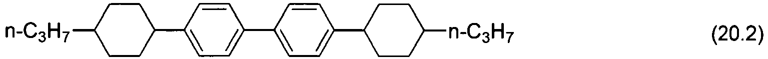

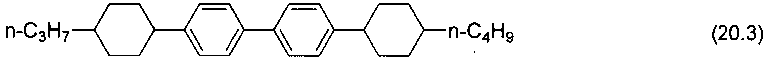

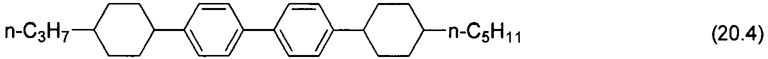

Furthermore, the compound represented by General Formula (V-1) according to the present invention is preferably the compound represented by General Formula (V-1-2).

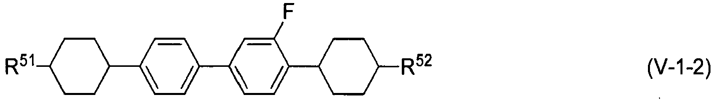

In General Formula (V-1-2), each of R⁵¹ and R⁵² has the same meaning as that in General Formula (V).

The compound represented by General Formula (V-1-2) is preferably contained in 1% by mass to 15% by mass, preferably contained in 1% by mass to 10% by mass, preferably contained in 1% by mass to 7% by mass, and preferably contained in 1% by mass to 5% by mass, with respect to the total mass of the liquid crystal composition of the present invention.

Furthermore, the compound represented by General Formula (V-1-2), for example, is preferably the compound represented by each of Formulas (21.1) to (21.3), and preferably the compound represented by Formula (21.1).

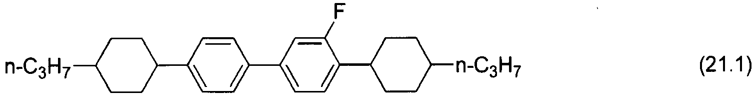

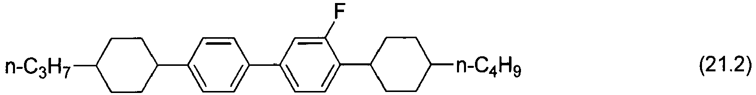

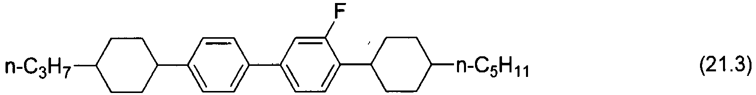

Furthermore, the compound represented by General Formula (V-1) according to the present invention is preferably the compound represented by General Formula (V-1-3).

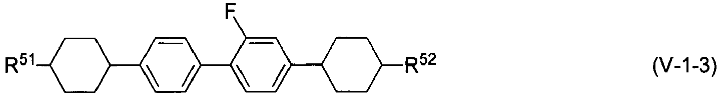

In General Formula (V-1-3), each of R⁵¹ and R⁵² has the same meaning as that in General Formula (V).

The compound represented by General Formula (V-1-3) is preferably contained in 1% by mass to 15% by mass, preferably contained in 2% by mass to 15% by mass, preferably contained in 3% by mass to 10% by mass, and preferably contained in 4% by mass to 8% by mass, with respect to the total mass of the liquid crystal composition of the present invention.

Furthermore, the compound represented by General Formula (V-1-3) is the compound represented by each of Formulas (22.1) to (22.3), and preferably the compound represented by Formula (22.1).

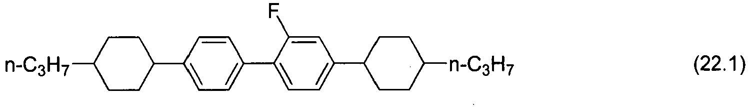

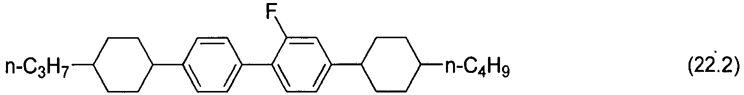

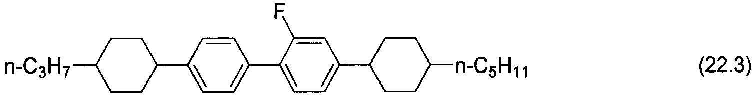

Furthermore, the compound represented by General Formula (V) according to the present invention is preferably the compound represented by General Formula (V-2).

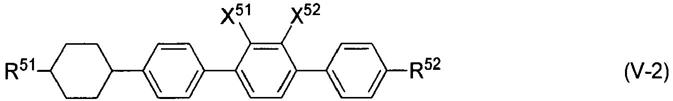

In General Formula (V-2), each of R⁵¹, R⁵², X⁵¹, and X⁵² has the same meaning as that in General Formula (V).

The types of compound capable of being combined are not particularly limited, and a compound is suitably combined depending on the required performance such as solubility at a low temperature, a transition temperature, electrical reliability, or birefringence. The type of compound used is, for example, one type in one embodiment of the present invention. In another embodiment of the present invention, two or more types are used.

For example, the content of the compound represented by General Formula (V-2) is 1% to 30% by mass with respect to the total mass of the liquid crystal composition of the present invention in one embodiment. In another embodiment of the present invention, the content of the compound is 2% to 25% by mass. In still another embodiment of the present invention, the content of the compound is 5% to 19% by mass. In still another embodiment of the present invention, the content of the compound is 6% to 10% by mass. In still another embodiment of the present invention, the content of the compound is 10% to 19% by mass. In addition, in still another embodiment of the present invention, the content of the compound is 4% to 8% by mass.

In the case of desiring an embodiment in which the liquid crystal composition of the present invention has a high Tni, it is preferable to increase the content of the compound represented by Formula (V-2), and in the case of desiring an embodiment having a low viscosity, it is preferable to decrease the content.

Furthermore, the compound represented by General Formula (V-2) according to the present invention is preferably the compound represented by General Formula (V-2-1).

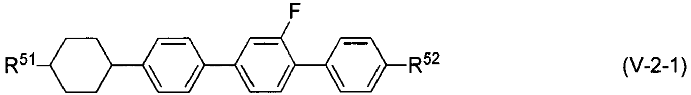

In General Formula (V-2), each of R⁵¹ and R⁵² has the same meaning as that in General Formula (V).

Furthermore, the compound represented by General Formula (V-2-1) is preferably the compound represented by each of Formulas (23.1) to (23.4), and preferably the compound represented by Formula (23.1) or/and (23.2).

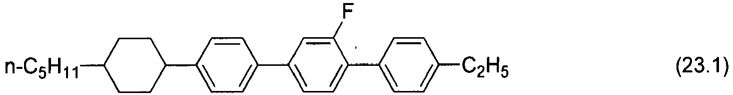

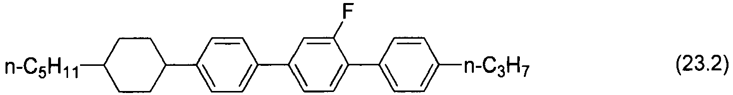

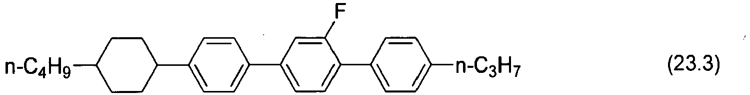

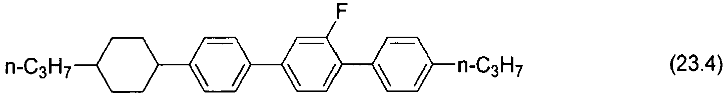

Furthermore, the compound represented by General Formula (V-2) according to the present invention is preferably the compound represented by General Formula (V-2-2).

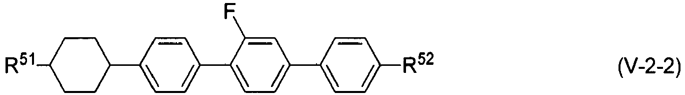

In General Formula (V-2-2), each of R⁵¹ and R⁵² has the same meaning as that in General Formula (V).

Furthermore, the compound represented by General Formula (V-2-2) is preferably the compound represented by each of Formulas (24.1) to (24.4), and preferably the compound represented by Formula (24.1) or/and (24.2).

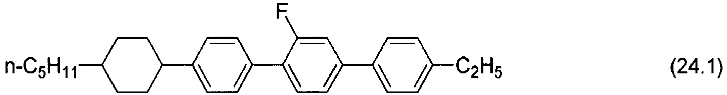

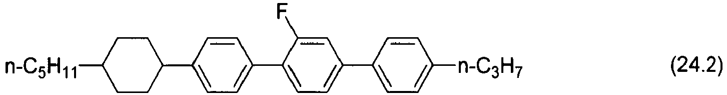

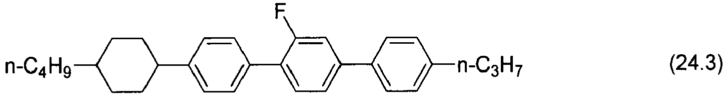

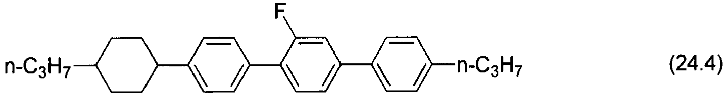

Furthermore, the compound represented by General Formula (V) according to the present invention is preferably the compound represented by General Formula (V-3).

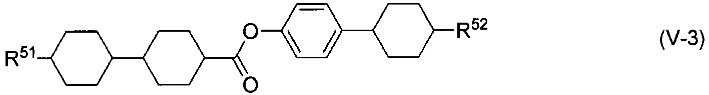

In General Formula (V-3), each of R⁵¹ and R⁵² has the same meaning as that in General Formula (V).

The types of compound capable of being combined are not particularly limited, and a compound is suitably combined depending on the required performance such as solubility at a low temperature, a transition temperature, electrical reliability, or birefringence. The type of compound used is, for example, one type in one embodiment of the present invention. In another embodiment of the present invention, two types are used. In addition, in still another embodiment of the present invention, three or more types are used.

The compound represented by General Formula (V-3) is preferably contained in 1% by mass to 16% by mass, preferably 1% by mass to 13% by mass, preferably 1% by mass to 9% by mass, and preferably 3% by mass to 9% by mass, with respect to the total mass of the liquid crystal composition of the present invention.

Furthermore, the compound represented by General Formula (V-3) is preferably the compound represented by each of Formulas (25.1) to (24.3).

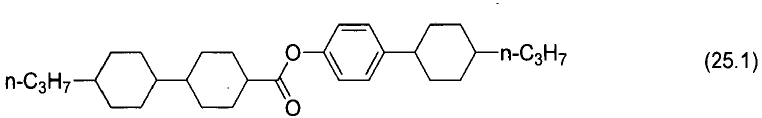

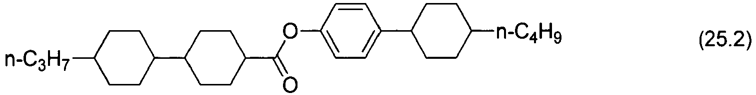

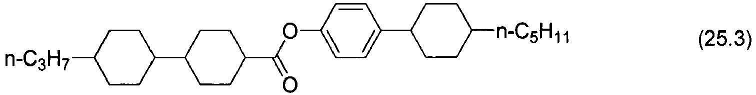

The compound represented by General Formula (V) according to the present invention is preferably the compound represented by General Formula (V-4).

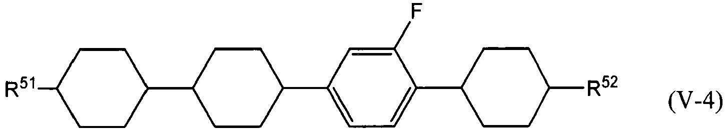

In General Formula (V-4), each of R⁵¹ and R⁵² independently represents an alkyl group having 1 to 5 carbon atoms, an alkenyl group having 2 to 5 carbon atoms, or an alkoxy group having 1 to 4 carbon atoms.

The compound represented by General Formula (V-4) is preferably contained in 1% by mass to 15% by mass, preferably contained in 2% by mass to 15% by mass, preferably contained in 3% by mass to 10% by mass, and preferably contained in 4% by mass to 8% by mass, with respect to the total mass of the liquid crystal composition of the present invention.

Furthermore, the compound represented by General Formula (V-4) is preferably at least one compound selected from the group consisting of compounds represented by Formulas (25.11) to (25.13), and more preferably the compound represented by Formula (25.13).

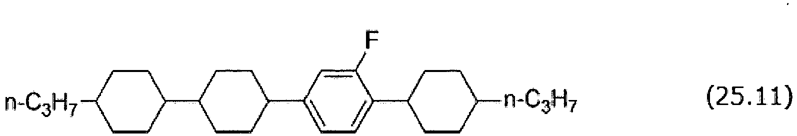

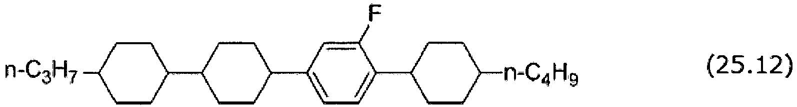

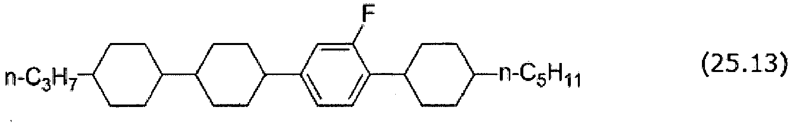

Preferably, the composition according to the present invention comprises the compound represented by General Formula (V'-5).

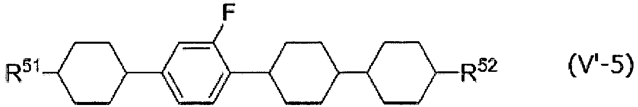

In General Formula (V'-5), each of R⁵¹ and R⁵² independently represents an alkyl group having 1 to 5 carbon atoms, an alkenyl group having 2 to 5 carbon atoms, or an alkoxy group having 1 to 4 carbon atoms.

The compound represented by General Formula (V'-5) is preferably contained in 1% by mass to 15% by mass, preferably contained in 2% by mass to 15% by mass, preferably contained in 2% by mass to 10% by mass, and preferably contained in 5% by mass to 10% by mass, with respect to the total mass of the liquid crystal composition of the present invention.

Furthermore, the compound represented by General Formula (V'-5) is preferably at least one compound selected from the group consisting of compounds represented by Formulas (25.21) to (25.24), and more preferably the compound represented by each of Formulas (25.21) and/or (25.23).

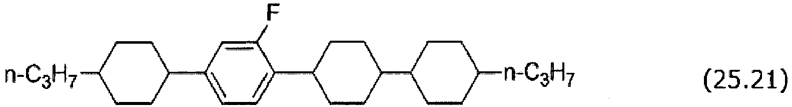

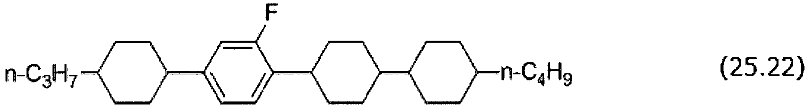

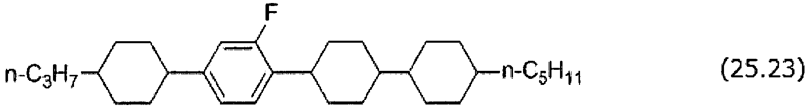

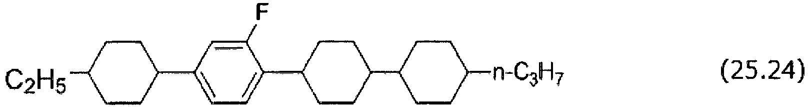

The liquid crystal composition of the present invention preferably further contains at least one or more types selected from the group consisting of the compounds represented by General Formulas (VI) and (VII). Preferably, the composition according to the present invention comprises the compound represented by General Formula (VI) and/or the compound represented by General Formula (VII).

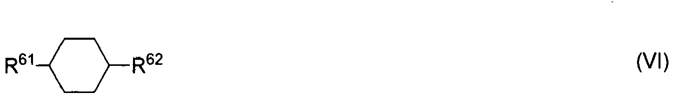

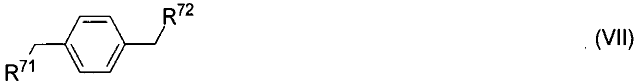

In General Formulas (VI) and (VII), each of R⁶¹, R⁶², R⁷¹, and R⁷² independently represents a linear alkyl group having 1 to 10 carbon atoms, a linear alkoxy group having 1 to 10 carbon atoms, or a linear alkenyl group having 2 to 10 carbon atoms.

As the compound represented by General Formula (VI), specifically, the following compounds can be suitably used.

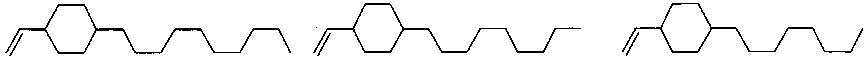

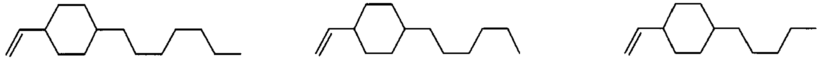

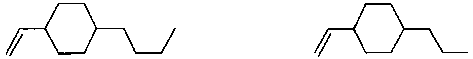

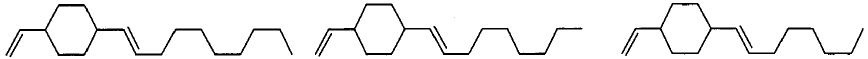

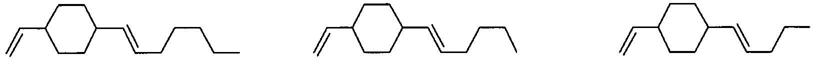

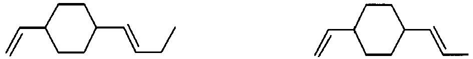

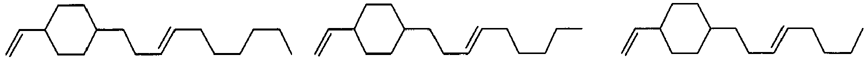

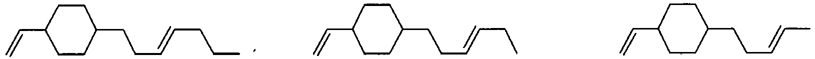

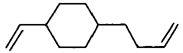

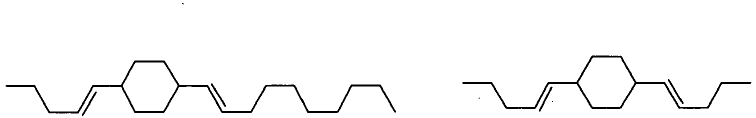

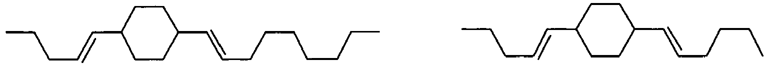

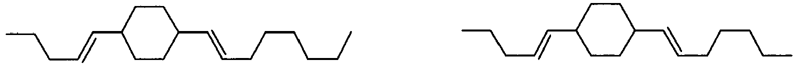

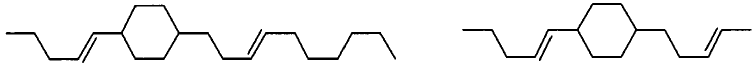

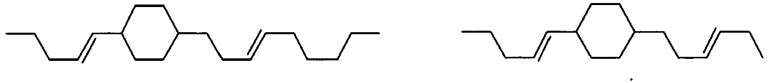

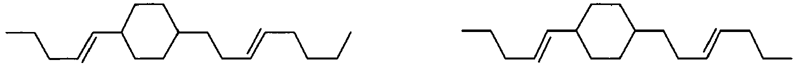

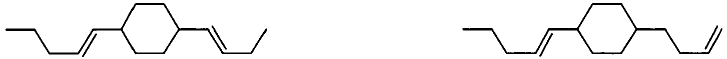

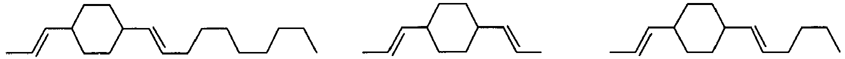

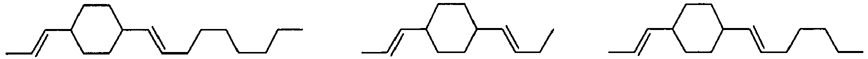

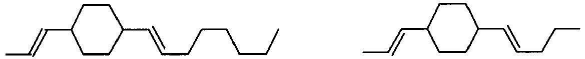

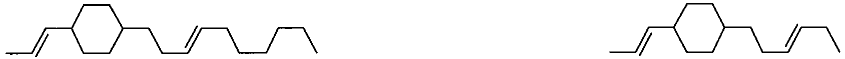

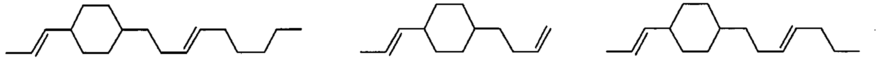

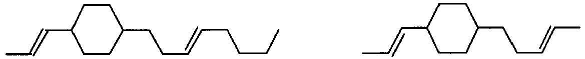

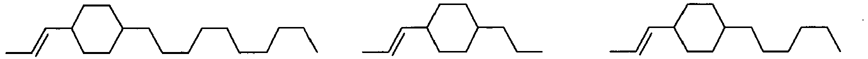

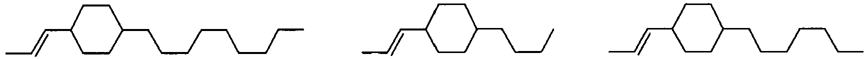

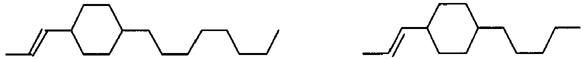

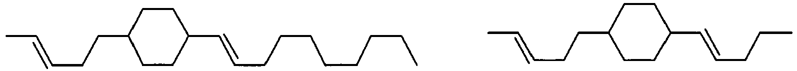

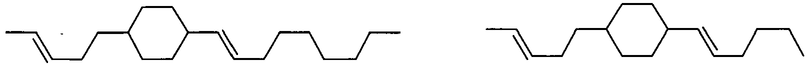

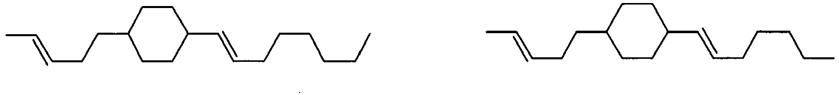

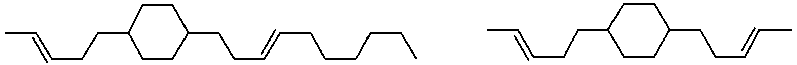

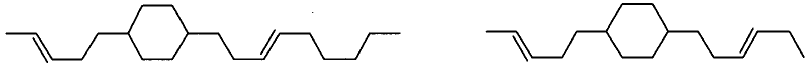

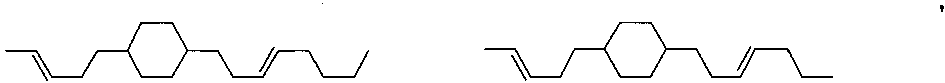

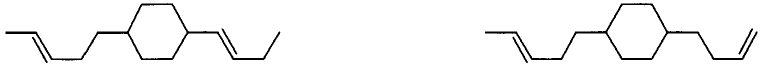

As the compound represented by General Formula (VII), specifically, the following compounds can be suitably used.

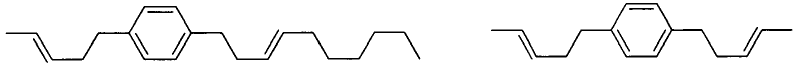

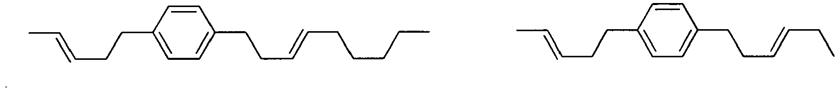

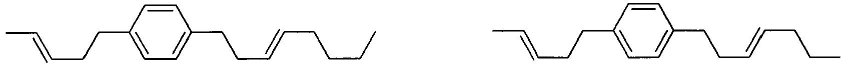

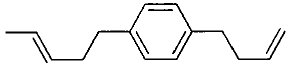

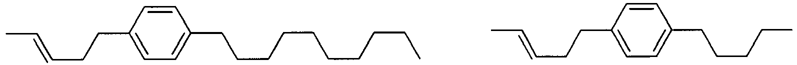

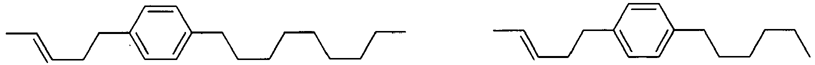

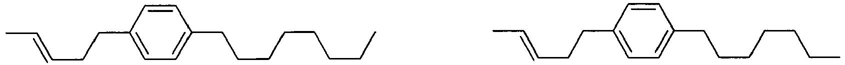

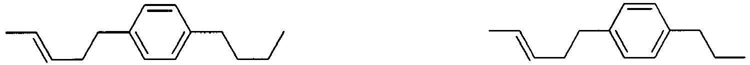

In each satisfying the compound represented by General Formula (VI) or (VII), combinable types of compounds which satisfy each structural formula are not particularly limited, and one to three types of these compounds are preferably mixed, one to four types are more preferably contained, and one to five of more types are particularly preferably contained, depending on the required performance such as solubility at a low temperature, a transition temperature, electrical reliability, or birefringence.

The content of the compound represented by General Formula (VI) is preferably 0 to 35% by mass, preferably 0 to 25% by mass, and preferably 0 to 15% by mass, with respect to the total mass of the liquid crystal composition of the present invention.

The content of the compound represented by General Formula (VII) is preferably 0 to 35% by mass, more preferably 0 to 25% by mass, and preferably 0 to 15% by mass, with respect to the total mass of the liquid crystal composition of the present invention.

The liquid crystal composition according to the present invention includes at least one or more types of compounds represented by General formula (M) as the second component. General Formula (M) as the second component is represented by the following chemical structure.

General Formula (M) according to the present invention is as follows.

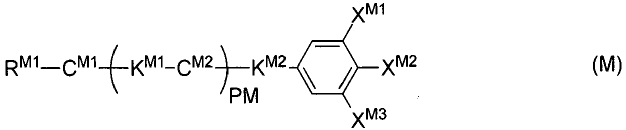

(In General Formula (M), R^{M1} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, one -CH₂- or two or more non-adjacent -CH₂-'s in the alkyl group, the alkenyl group, the alkoxy group, or the alkenyloxy group each may be independently substituted with -CH=CH-, -C≡C-, -O-, -CO-, -COO-, or -OCO-,
PM represents 0, 1 or 2,
each of C^{M1} and C^{M2} independently represents a group selected from the group consisting of the following (d) and (e),
(d) a 1, 4-cyclohexylene group (one -CH₂- or two or more non-adjacent -CH₂-'s present in the group may be substituted with -O- or -S-) and
(e) a 1, 4-phenylene group (one -CH= group or two or more non-adjacent -CH='s present in the group may be substituted with -N=),
each of the groups (d) and (e) may be independently substituted with a cyano group, a fluorine atom, or a chlorine atom,
each of K^{M1} and K^{M2} independently represents a single bond, -CH₂CH₂-, -(CH₂)₄-, -OCH₂-, -CH₂O-, -OCF₂-, -CF₂O-, -COO-, -OCO-, or -C≡C-,
when PM is 2 and a plurality of K^{M1}' s exist, the plurality of K^{M1}'s may be the same as or different from each other, when PM is 2 and a plurality of C^{M2}'s exist, the plurality of C^{M2}'s may be the same as or different from each other,
each of X^{M1} and X^{M3} independently represents a hydrogen atom, a chlorine atom, or a fluorine atom,
X^{M2} represents a hydrogen atom, a fluorine atom, a chlorine atom, a cyano group, a trifluoromethyl group, a fluoromethoxy group, a difluoromethoxy group, a trifluoromethoxy group, or a 2,2,2-trifluoroethyl group, wherein the compound represented by General Formula (M) is a compound represented by General Formula (VIII) or (XIII); 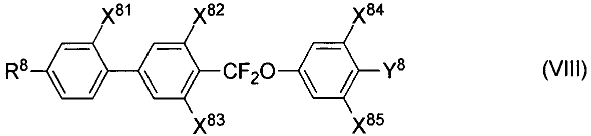 wherein in General Formula (VIII), R⁸ represents an alkyl group having 1 to 5 carbon atoms, an alkenyl group having 2 to 5 carbon atoms, or an alkoxy group having 1 to 4 carbon atoms, each of X⁸¹ to X⁸⁵ independently represents a hydrogen atom or a fluorine atom, and Y⁸ represents a fluorine atom or -OCF₃; 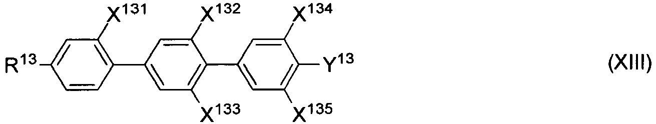 wherein, in General Formula (XIII), each of X¹³¹ and X¹³⁵ independently represents a fluorine atom or a hydrogen atom, R¹³ represents an alkyl group having 1 to 5 carbon atoms, an alkenyl group having 2 to 5 carbon atoms, or an alkoxy group having 1 to 4 carbon atoms, and Y¹³ represents a fluorine atom or -OCF₃, and
wherein Δε is from 1.5 to 3.5 and Δn is 0.08 to 0.20.

The types of compound represented by General Formula (M) capable of being combined as the second component are not particularly limited, and a compound is combined and used depending on the desired performance such as solubility at a low temperature, a transition temperature, electrical reliability, a dielectric constant, or birefringence. The type of compound used is, for example, one type in one embodiment of the present invention. In another embodiment of the present invention, two types are used. In still another embodiment of the present invention, three types are used. In still another embodiment of the present invention, four types are used. In still another embodiment of the present invention, five types are used. In still another embodiment of the present invention, six types are used. In addition, in still another embodiment of the present invention, seven or more types are used.

In the liquid crystal composition of the present invention, the content of the compound represented by General Formula (M) needs to be suitably adjusted depending on the required performance such as solubility at a low temperature, a transition temperature, electrical reliability, birefringence, process compatibility, dropping marks, burn-in, or dielectric anisotropy.

The content of the compound represented by General Formula (M) is 1% to 70% by mass with respect to the total mass of the liquid crystal composition of the present invention in one embodiment of the present invention. For example, in another embodiment of the present invention, the content of the compound is 1% to 65% by mass. For example, in still another embodiment of the present invention, the content of the compound is 1% to 60% by mass. For example, in still another embodiment of the present invention, the content of the compound is 1% to 55% by mass. For example, in still another embodiment of the present invention, the content of the compound is 1% to 54% by mass. For example, in still another embodiment of the present invention, the content of the compound is 1% to 51% by mass. For example, in still another embodiment of the present invention, the content of the compound is 1% to 47% by mass. For example, in still another embodiment of the present invention, the content of the compound is 1% to 42% by mass. For example, in still another embodiment of the present invention, the content of the compound is 1% to 40% by mass. For example, in still another embodiment of the present invention, the content of the compound is 1% to 39% by mass. For example, in still another embodiment of the present invention, the content of the compound is 1% to 37% by mass. For example, in still another embodiment of the present invention, the content of the compound is 1% to 35% by mass. For example, in still another embodiment of the present invention, the content of the compound is 1% to 33% by mass. For example, in still another embodiment of the present invention, the content of the compound is 1% to 32% by mass. For example, in still another embodiment of the present invention, the content of the compound is 1% to 31% by mass. For example, in still another embodiment of the present invention, the content of the compound is 1% to 30% by mass. For example, in still another embodiment of the present invention, the content of the compound is 1% to 29% by mass. For example, in still another embodiment of the present invention, the content of the compound is 1% to 25% by mass. For example, in still another embodiment of the present invention, the content of the compound is 1% to 24% by mass. For example, in still another embodiment of the present invention, the content of the compound is 1% to 20% by mass. For example, in still another embodiment of the present invention, the content of the compound is 1% to 19% by mass. For example, in still another embodiment of the present invention, the content of the compound is 1% to 10% by mass. For example, in still another embodiment of the present invention, the content of the compound is 1% to 9% by mass. For example, in still another embodiment of the present invention, the content of the compound is 1% to 8% by mass. For example, in still another embodiment of the present invention, the content of the compound is 3% to 54% by mass. For example, in still another embodiment of the present invention, the content of the compound is 9% to 54% by mass. For example, in still another embodiment of the present invention, the content of the compound is 19% to 54% by mass. For example, in still another embodiment of the present invention, the content of the compound is 20% to 54% by mass. For example, in still another embodiment of the present invention, the content of the compound is 22% to 54% by mass. For example, in still another embodiment of the present invention, the content of the compound is 26% to 54% by mass. For example, in still another embodiment of the present invention, the content of the compound is 28% to 54% by mass. For example, in still another embodiment of the present invention, the content of the compound is 29% to 54% by mass. For example, in still another embodiment of the present invention, the content of the compound is 30% to 54% by mass. For example, in still another embodiment of the present invention, the content of the compound is 31% to 54% by mass. For example, in still another embodiment of the present invention, the content of the compound is 32% to 54% by mass. For example, in still another embodiment of the present invention, the content of the compound is 33% to 54% by mass. For example, in still another embodiment of the present invention, the content of the compound is 39% to 54% by mass. For example, in still another embodiment of the present invention, the content of the compound is 42% to 54% by mass. For example, in still another embodiment of the present invention, the content of the compound is 46% to 54% by mass. For example, in still another embodiment of the present invention, the content of the compound is 48% to 54% by mass. For example, in still another embodiment of the present invention, the content of the compound is 52% to 54% by mass. For example, in still another embodiment of the present invention, the content of the compound is 3% to 8% by mass. For example, in still another embodiment of the present invention, the content of the compound is 9% to 10% by mass. For example, in still another embodiment of the present invention, the content of the compound is 19% to 25% by mass. For example, in still another embodiment of the present invention, the content of the compound is 22% to 24% by mass. For example, in still another embodiment of the present invention, the content of the compound is 26% to 29% by mass. For example, in still another embodiment of the present invention, the content of the compound is 28% to 35% by mass. For example, in still another embodiment of the present invention, the content of the compound is 28% to 33% by mass. For example, in still another embodiment of the present invention, the content of the compound is 31% to 32% by mass. For example, in still another embodiment of the present invention, the content of the compound is 32% to 33% by mass. For example, in still another embodiment of the present invention, the content of the compound is 33% to 42% by mass. For example, in still another embodiment of the present invention, the content of the compound is 39% to 42% by mass. For example, in still another embodiment of the present invention, the content of the compound is 42% to 47% by mass. In addition, for example, in still another embodiment of the present invention, the content of the compound is 48% to 51% by mass.

In a case where it is required that the viscosity of the liquid crystal composition of the present invention be kept low and the liquid crystal composition have a high response speed, it is preferable that the above-described lower limit value is small and the above-described upper limit value is small. In a case where it is required that Tni of the liquid crystal composition of the present invention be kept high and the liquid crystal composition have good temperature stability, it is preferable that the above-described lower limit value is small and the above-described upper limit value is small. In addition, when it is desired to increase the dielectric anisotropy in order to keep the driving voltage low, it is preferable that the above-described lower limit value is great and the above-described upper limit value is great.

In a case where the ring structure to which R^{M1} is bonded is a phenyl group (aromatic group), R^{M1} is preferably a linear alkyl group having 1 to 5 carbon atoms, a linear alkoxy group having 1 to 4 carbon atoms, or an alkenyl group having 4 or 5 carbon atoms, and in a case where the ring structure to which R^{M1} is bonded is a saturated ring structure such as cyclohexane, pyran, or dioxane, R^{M1} is preferably a linear alkyl group having 1 to 5 carbon atoms, a linear alkoxy group having 1 to 4 carbon atoms, or a linear alkenyl group having 2 to 5 carbon atoms.

In a case where chemical stability of the liquid crystal composition is required, the compound represented by General Formula (M) according to the present invention preferably does not have a chlorine atom in the molecule. The content of the compound having a chlorine atom in the liquid crystal composition is preferably 5% by mass or less, preferably 3% by mass or less, preferably 1% by mass or less, and preferably 0.5% by mass or less, and the compound having a chlorine atom is preferably substantially not contained. Here, the "substantially does not contain" means that only the compound which unintentionally includes a chlorine atom, such as a compound produced as an impurity at the time of manufacturing a compound is mixed in the liquid crystal composition.

The compound represented by General Formula (M) according to the present disclosure is preferably a compound represented by General Formula (B).

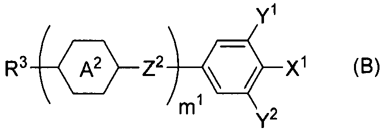

In General Formula (B), R³ represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, methylene groups in the alkyl group, the alkenyl group, the alkoxy group, or the alkenyloxy group each may be substituted with an oxygen atom as long as the oxygen atom is not continuously bonded to another oxygen atom or each may be substituted with a carbonyl group as long as the carbonyl group is not continuously bonded to another carbonyl group,
each of A²'s independently represents a 1, 4-cyclohexylene cyclohexylene group, a 1, 4-phenylene group, a tetrahydropyran-2,5-diyl group, a dioxane-2,5-diyl group, or a pyrimidine-2,5-diyl group, and in a case where A¹ represents a 1,4-phenylene group, one or more hydrogen atoms in the 1, 4-phenylene group may be substituted with a fluorine atom,
each of Z²'s independently represents a single bond, -OCH₂-, -OCF₂-, -CH₂O-, or -CF₂O-,
each of Y¹ and Y² independently represents a fluorine atom or a hydrogen atom, and X¹ represents a fluorine atom, a -CN group, or an -OCF₃ group, and
m¹ represents 1, 2, 3, or 4.

In addition, in the compound represented by General Formula (B) according to the present disclosure, m¹ is preferably 2 or 3. When m¹ is 2, there is a characteristic that the driving voltage is lower. In addition, when m¹ is 3, there is a characteristic that the transition temperature is higher.

The compound represented by General Formula (M) according to the present disclosure is preferably the compound represented by General Formula (X).

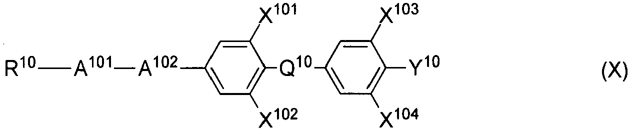

In General Formula (X), each of X¹⁰¹ to X¹⁰⁴ independently represents a fluorine atom or a hydrogen atom, Y¹⁰ represents a fluorine atom, a chlorine atom, or -OCF₃, Q¹⁰ represents a single bond or -CF₂O-, R¹⁰ represents an alkyl group having 1 to 5 carbon atoms, an alkenyl group having 2 to 5 carbon atoms, or an alkoxy group having 1 to 4 carbon atoms, each of A¹⁰¹ and A¹⁰² independently represents a 1,4-cyclohexylene group, a 1,4-phenylene group, or any one of groups represented by the following formulas, and here, a hydrogen atom of the 1,4-phenylene group may be substituted with a fluorine atom.

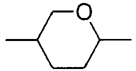

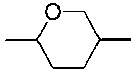

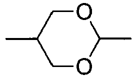

The compound capable of being combined in the compounds represented by General Formula (X) is not particularly limited, and in consideration of solubility at a low temperature, a transition temperature, electrical reliability, and birefringence, a compound is suitably combined. For example, in one embodiment of the present disclosure, one type is combined. In another embodiment of the present disclosure, two types are combined. In still another embodiment of the present disclosure, three types are combined. In still another embodiment of the present disclosure, four types are combined. In addition, in still another embodiment of the present disclosure, five or more types are combined.

The content of the compound represented by General Formula (X) is suitably adjusted with respect to each embodiment in consideration of characteristics such as solubility at a low temperature, a transition temperature, electrical reliability, and birefringence. For example, the content of the compound represented by General Formula (X) is 1% to 35% by mass in one embodiment of the present disclosure, 1% to 30% by mass in another embodiment of the present disclosure, 1% to 25% by mass in still another embodiment of the present disclosure, 1% to 24% by mass in still another embodiment of the present disclosure, 1% to 20% by mass in still another embodiment of the present disclosure, 1% to 19% by mass in still another embodiment of the present disclosure, 1% to 16% by mass in still another embodiment of the present disclosure, 1% to 12% by mass in still another embodiment of the present disclosure, 1% to 11% by mass in still another embodiment of the present disclosure, 1% to 10% by mass in still another embodiment of the present disclosure, 1% to 9% by mass in still another embodiment of the present disclosure, 1% to 8% by mass in still another embodiment of the present disclosure, 1% to 7% by mass in still another embodiment of the present disclosure, 1% to 3% by mass in still another embodiment of the present disclosure, 3% to 24% by mass in still another embodiment of the present disclosure, 5% to 24% by mass in still another embodiment of the present disclosure, 6% to 24% by mass in still another embodiment of the present disclosure, 8% to 24% by mass in still another embodiment of the present disclosure, 11% to 24% by mass in still another embodiment of the present disclosure, 13% to 24% by mass in still another embodiment of the present disclosure, 15% to 24% by mass in still another embodiment of the present disclosure, 17% to 24% by mass in still another embodiment of the present disclosure, 3% to 7% by mass in still another embodiment of the present disclosure, 5% to 10% by mass in still another embodiment of the present disclosure, 6% to 9% by mass in still another embodiment of the present disclosure, 6% to 8% by mass in still another embodiment of the present disclosure, 8% to 11% by mass in still another embodiment of the present disclosure, 11% to 19% by mass in still another embodiment of the present disclosure, 11% to 12% by mass in still another embodiment of the present disclosure, 13% to 16% by mass in still another embodiment of the present disclosure, 15% to 19% by mass in still another embodiment of the present disclosure, and 17% to 20% by mass in still another embodiment of the present disclosure, with respect to the total mass of the liquid crystal composition of the present disclosure.

In a case where it is required that the viscosity of the liquid crystal composition of the present disclosure be kept low and the liquid crystal composition have a high response speed, it is preferable that the above-described lower limit value is small and the above-described upper limit value is small. In a case where it is required that the liquid crystal composition is less likely to generate burn-in, it is preferable that the above-described lower limit value is small and the above-described upper limit value is small. In addition, when it is desired to increase the dielectric anisotropy in order to keep the driving voltage low, it is preferable that the above-described lower limit value is great and the above-described upper limit value is great.

The compound represented by General Formula (M) according to the present disclosure is preferably the compound represented by General Formula (X-1).

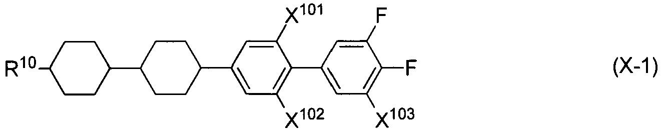

In General Formula (X-1), each of X¹⁰¹ to X¹⁰³ and R¹⁰ has the same meaning as that in General Formula (X).

The compounds capable of being combined are not particularly limited, and in consideration of solubility at a low temperature, a transition temperature, electrical reliability, and birefringence, a compound is suitably combined with respect to each embodiment. For example, in one embodiment of the present disclosure, one type is combined. In another embodiment of the present disclosure, two types are combined. In still another embodiment of the present disclosure, three types are combined. In still another embodiment of the present disclosure, four types are combined. In addition, in still another embodiment of the present disclosure, five or more types are combined.

The content of the compound represented by General Formula (X-1) is suitably adjusted in consideration of characteristics such as solubility at a low temperature, a transition temperature, electrical reliability, and birefringence.

For example, the content of the compound represented by General Formula (X-1) is 1% to 20% by mass in one embodiment of the present disclosure, 1% to 15% by mass in another embodiment of the present disclosure, 1% to 10% by mass in still another embodiment of the present disclosure, 1% to 9% by mass in still another embodiment of the present disclosure, 1% to 8% by mass in still another embodiment of the present disclosure, 1% to 7% by mass in still another embodiment of the present disclosure, 1% to 6% by mass in still another embodiment of the present disclosure, 1% to 3% by mass in still another embodiment of the present disclosure, 3% to 9% by mass in still another embodiment of the present disclosure, 4% to 9% by mass in still another embodiment of the present disclosure, 5% to 9% by mass in still another embodiment of the present disclosure, 6% to 9% by mass in still another embodiment of the present disclosure, 8% to 9% by mass in still another embodiment of the present disclosure, 3% to 7% by mass in still another embodiment of the present disclosure, 5% to 7% by mass in still another embodiment of the present disclosure, and 6% to 7% by mass in still another embodiment of the present disclosure, with respect to the total mass of the liquid crystal composition of the present disclosure.

Furthermore, the compound represented by General Formula (X-1) according to the present disclosure is preferably the compound represented by General Formula (X-1-1).

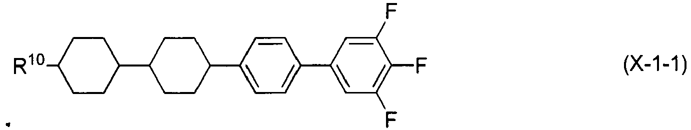

In General Formula (X-1-1), R¹⁰ has the same meaning as that in General Formula (X).

The content of the compound represented by General Formula (X-1-1) is suitably adjusted in consideration of characteristics such as solubility at a low temperature, a transition temperature, electrical reliability, and birefringence.

For example, the content of the compound represented by General Formula (X-1-1) is 1 to 25% by mass in one embodiment of the present disclosure, 1 to 20% by mass in another embodiment, 1 to 15% by mass in still another embodiment, 1 to 10% by mass in still another embodiment, 3 to 10% by mass in still another embodiment, and 5 to 10% by mass in still another embodiment, with respect to the total mass of the liquid crystal composition of the present disclosure.

Furthermore, the compound represented by General Formula (X-1-1) used in the liquid crystal composition of the present disclosure, specifically, is preferably the compound represented by each of Formulas (36.1) to (36.4), and among these, preferably contains the compound represented by each of Formulas (36.1) and/or (36.2).

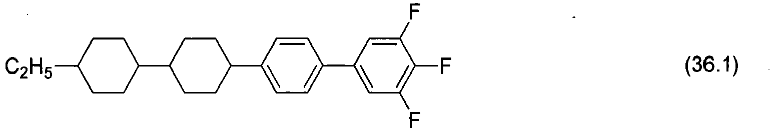

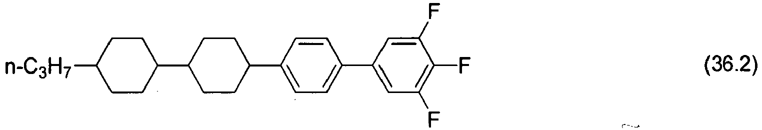

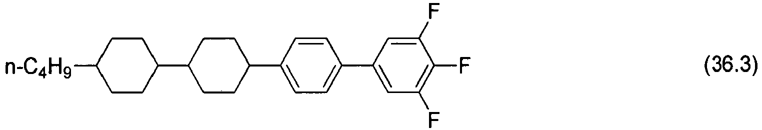

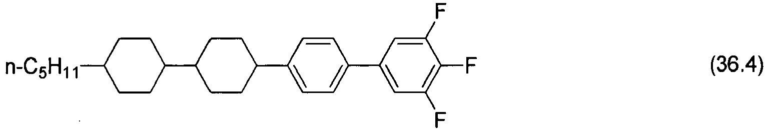

The compound represented by General Formula (X-1) used in the liquid crystal composition of the present disclosure is preferably the compound represented by General Formula (X-1-2).

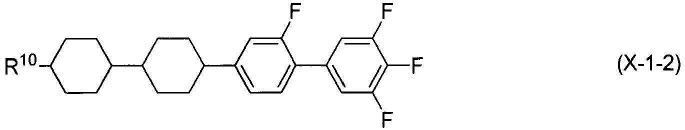

In General Formula (X-1-2), R¹⁰ represents an alkyl group having 1 to 5 carbon atoms, an alkenyl group having 2 to 5 carbon atoms, or an alkoxy group having 1 to 4 carbon atoms.

The content of the compound represented by General Formula (X-1-2) is preferably 1% by mass or greater, more preferably 2% by mass or greater, and still more preferably 6% by mass or greater, with respect to the total amount of liquid crystal composition of the present disclosure. In addition, in consideration of solubility at a low temperature, a transition temperature, and electrical reliability, the maximum ratio is preferably 20% by mass or less, more preferably 16% by mass or less, still more preferably 12% by mass or less, and particularly preferably 10% by mass or less.

Furthermore, the compound represented by General Formula (X-1-2), specifically, is preferably the compound represented by each of Formulas (37.1) to (37.4), and among these, preferably contains the compound represented by Formula (37.2).

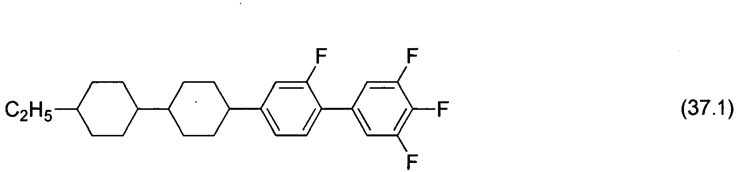

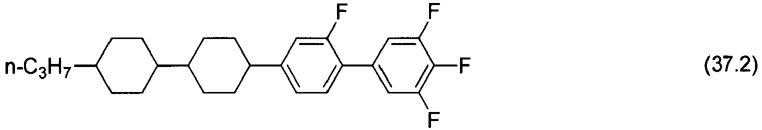

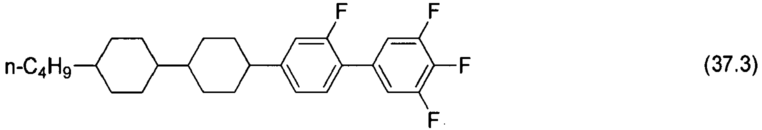

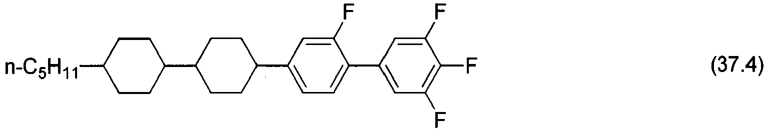

Furthermore, the compound represented by General Formula (X-1) according to the present disclosure is preferably the compound represented by General Formula (X-1-3).

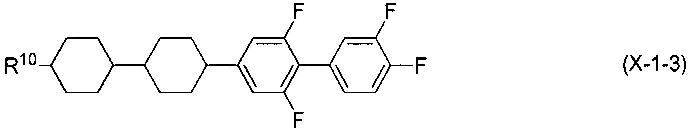

In General Formula (X-1-3), R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined.

The content of the compound represented by General Formula (X-1-3) is preferably 1% by mass or greater, more preferably 2% by mass or greater, and still more preferably 6% by mass or greater, with respect to the total amount of the liquid crystal composition of the present disclosure. In addition, in consideration of solubility at a low temperature, a transition temperature, and electrical reliability, the maximum ratio is preferably 20% by mass or less, more preferably 16% by mass or less, still more preferably 12% by mass or less, and particularly preferably 10% by mass or less.

Furthermore, the compound represented by General Formula (X-1-3) used in the liquid crystal composition of the present disclosure, specifically, is preferably the compound represented by each of Formulas (38.1) to (38.4), and among these, preferably contains the compound represented by Formula (38.2).

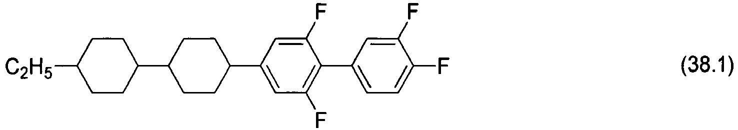

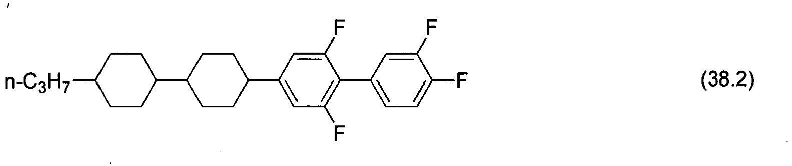

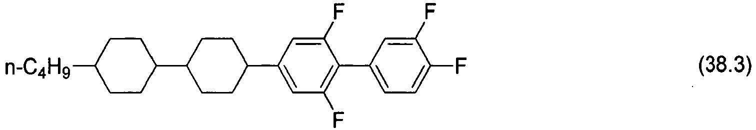

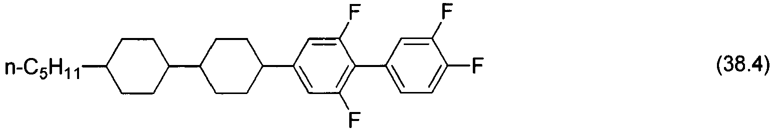

The compound represented by General Formula (X) according to the liquid crystal composition of the present disclosure is preferably the compound represented by General Formula (X-2).

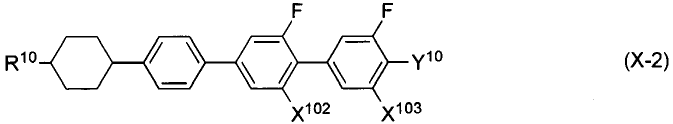

In General Formula (X-2), each of X¹⁰² and X¹⁰³ independently represents a fluorine atom or a hydrogen atom, Y¹⁰ represents a fluorine atom, a chlorine atom, or -OCF₃, R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined.

Furthermore, the compound represented by General Formula (X-2) according to the present disclosure is preferably the compound represented by General Formula (X-2-1).

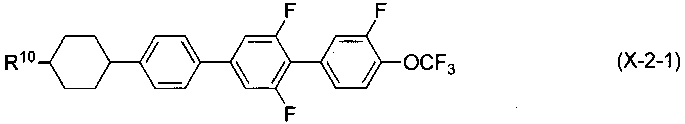

In General Formula (X-2-1), R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined, and one to three or more types are more preferably combined.

The content of the compound represented by General Formula (X-2-1) is preferably 3% by mass or greater, more preferably 6% by mass or greater, and still more preferably 9% by mass or greater, with respect to the total amount of the liquid crystal composition of the present disclosure. In addition, in consideration of solubility at a low temperature, a transition temperature, and electrical reliability, the maximum ratio is preferably 20% by mass or less, more preferably 16% by mass or less, still more preferably 12% by mass or less, and particularly preferably 10% by mass or less.

Furthermore, the compound represented by General Formula (X-2-1) used in the liquid crystal composition of the present disclosure, specifically, is preferably the compound represented by each of Formulas (39.1) to (39.4), and among these, preferably contains the compound represented by Formula (39.2).

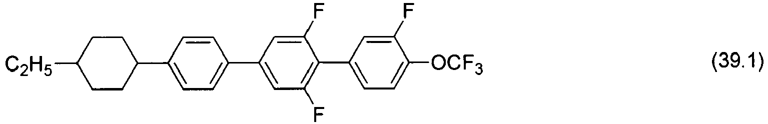

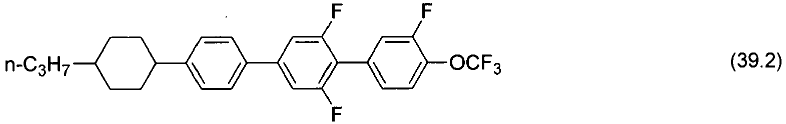

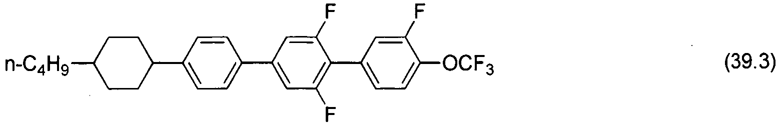

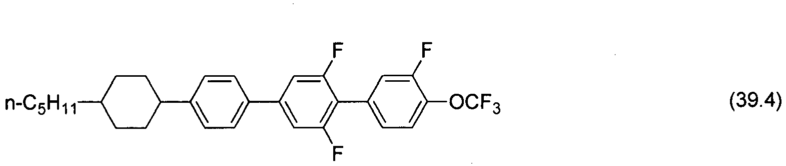

Furthermore, the compound represented by General Formula (X-2) according to the present disclosure is preferably the compound represented by General Formula (X-2-2).

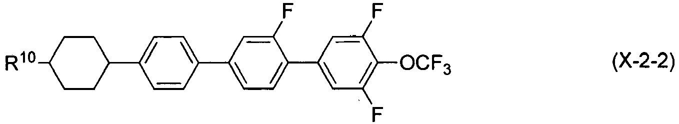

In General Formula (X-2-2), R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined. The content of the compound represented by General Formula (X-2-2) is preferably 3% by mass or greater, more preferably 6% by mass or greater, and still more preferably 9% by mass or greater, with respect to the total amount of the liquid crystal composition of the present disclosure. In addition, in consideration of solubility at a low temperature, a transition temperature, and electrical reliability, the maximum ratio is preferably 20% by mass or less, more preferably 16% by mass or less, still more preferably 12% by mass or less, and particularly preferably 10% by mass or less.

Furthermore, the compound represented by General Formula (X-2-2) used in the liquid crystal composition of the present disclosure, specifically, is preferably the compound represented by each of Formulas (40.1) to (40.4), and among these, preferably contains the compound represented by Formula (40.2).

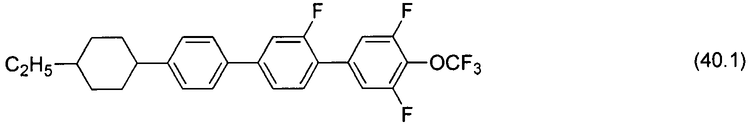

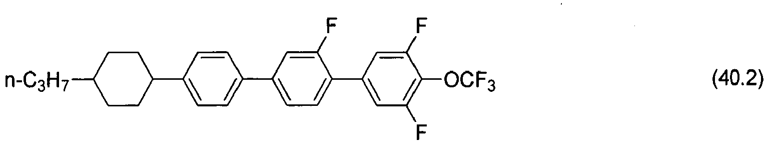

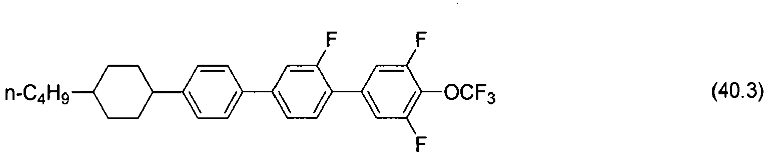

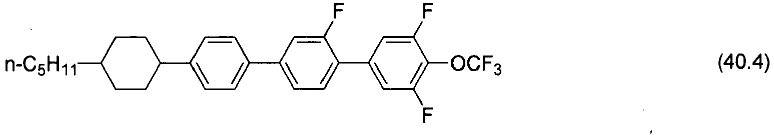

The compound represented by General Formula (M) according to the present disclosure is preferably the compound represented by General Formula (IIb).

At least one type of compound is preferably selected from the group consisting of compounds represented by General Formula (IIb).

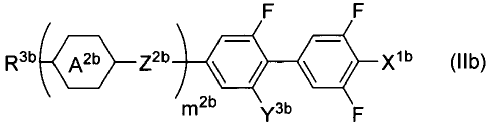

In General Formula (IIb), R^{3b} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, methylene groups in the alkyl group, the alkenyl group, the alkoxy group, or the alkenyloxy group each may be substituted with an oxygen atom as long as the oxygen atom is not continuously bonded to another oxygen atom or each may be substituted with a carbonyl group as long as the carbonyl group is not continuously bonded to another carbonyl group,
each of A^{2b}'s independently represents a 1, 4-cyclohexylene cyclohexylene group, a 1,4-phenylene group, a tetrahydropyran-2,5-diyl group, a dioxane-2,5-diyl group, or a pyrimidine-2,5-diyl group, and in a case where A^{2b} represents a 1,4-phenylene group, one or more hydrogen atoms in the 1, 4-phenylene group may be substituted with a fluorine atom,
each of Z^{2b}'s independently represents a single bond, -OCH₂-, -OCF₂-, -CH₂O-, or -CF₂O-,
m^{2b} represents 1, 2, 3, or 4, each of Y^{3b}'s independently represents a fluorine atom or a hydrogen atom, and X^{1b} represents a fluorine atom, a -CN group, or an -OCF₃ group. and m^{2b} is more preferably 2 or 3.

The content of the compound represented by General Formula (IIb) has the upper limit value and the lower limit value in each embodiment in consideration of characteristics such as solubility at a low temperature, a transition temperature, electrical reliability, and birefringence. For example, the lower limit value of the content of the compound is 0.01% in one embodiment of the present disclosure, 0.05% in another embodiment, 0.1% in still another embodiment, 0.2% in still another embodiment, 0.3% in still another embodiment, 0.4% in still another embodiment, and 0.5% in still another embodiment, with respect to the total amount of the liquid crystal composition of the present disclosure. In addition, for example, the upper limit value of the content of the compound represented by General Formula (IIb) is, for example, 10% in one embodiment of the present disclosure, 8% in another embodiment, 2% in still another embodiment, 1% in still another embodiment, 0.8% in still another embodiment, and 0.7% in still another embodiment.

When the compound represented by General Formula (IIa) is included in the liquid crystal composition, dielectricity such as Δε can be ensured, and compatibility with General Formula (A) is also not impaired.

The compound represented by General Formula (X) according to the present disclosure is preferably the compound represented by General Formula (X-3).

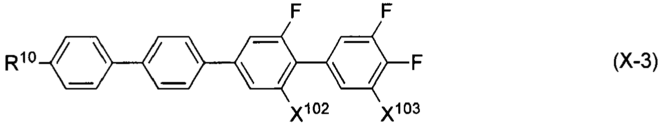

In General Formula (X-3), each of X¹⁰² and X¹⁰³ independently represents a fluorine atom or a hydrogen atom, and R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined. When the compound represented by General Formula (X-3) is included in the liquid crystal composition, dielectricity such as Δε can be ensured, and compatibility with the first component such as General Formula (A) is also not impaired.

The content of the compound represented by General Formula (X-3) is preferably 0.1% by mass or greater, more preferably 0.2% by mass or greater, and still more preferably 0.3% by mass or greater, with respect to the total amount of the liquid crystal composition of the present disclosure. In addition, in consideration of solubility at a low temperature, a transition temperature, and electrical reliability, the maximum ratio is preferably 8% by mass or less, more preferably 5% by mass or less, still more preferably 2% by mass or less, and particularly preferably 1% by mass or less.

Furthermore, the compound represented by General Formula (X-3) used in the liquid crystal composition of the present disclosure is preferably the compound represented by General Formula (X-3-1).

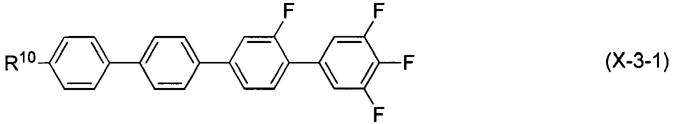

In General Formula (X-3-1), R¹⁰ represents an alkyl group having 1 to 5 carbon atoms, an alkenyl group having 2 to 5 carbon atoms, or an alkoxy group having 1 to 4 carbon atoms.

In the compound which satisfies General Formula (X-3-1), the compounds capable of being combined are not particularly limited, and in consideration of solubility at a low temperature, a transition temperature, electrical reliability, or birefringence, one type or two or more types are preferably combined.

The content of the compound represented by General Formula (X-3-1) is preferably 0.05% by mass or greater, more preferably 0.2% by mass or greater, and still more preferably 0.3% by mass or greater, with respect to the total amount of the liquid crystal composition of the present disclosure. In addition, in consideration of solubility at a low temperature, a transition temperature, and electrical reliability, the maximum ratio is preferably 5% by mass or less, more preferably 3% by mass or less, still more preferably 2% by mass or less, and particularly preferably 1% by mass or less.

Furthermore, the compound represented by General Formula (X-3-1) used in the liquid crystal composition of the present disclosure, specifically, is preferably the compound represented by each of Formulas (41.1) to (41.4), and among these, preferably contains the compound represented by Formula (41.2). When the compound represented by each of Formulas (41.1) to (41.4) is included in the liquid crystal composition, dielectricity such as Δε can be ensured, and compatibility with the first component which is non-polar is also not impaired.

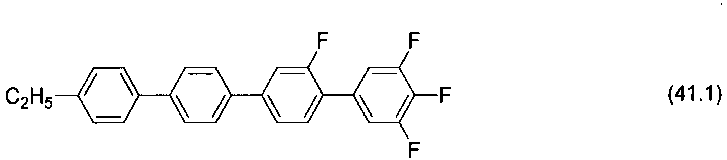

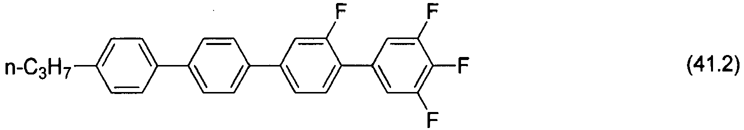

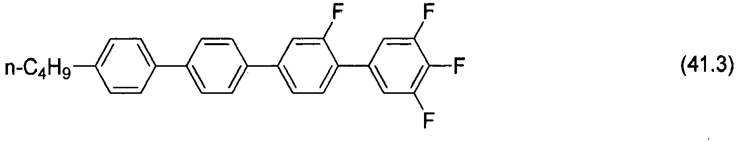

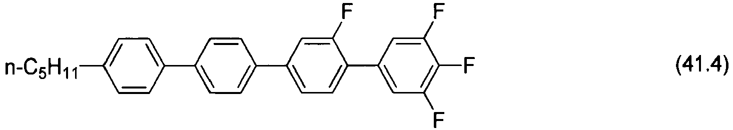

Furthermore, the compound represented by General Formula (X) is preferably the compound represented by General Formula (X-4).

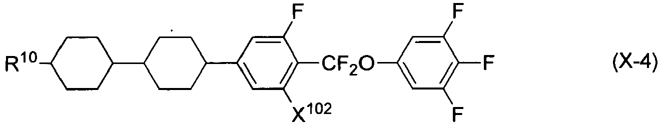

In General Formula (X-4), X¹⁰² represents a fluorine atom or a hydrogen atom, R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined, and one to three or more types are more preferably combined.

Furthermore, the compound represented by General Formula (X-4) according to the present disclosure is preferably the compound represented by General Formula (X-4-1).

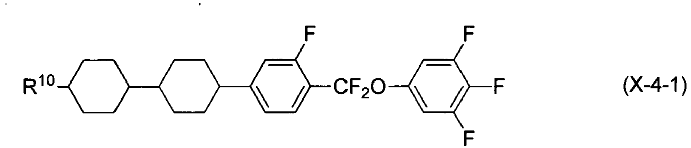

In General Formula (X-4-1), R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined, and one to three or more types are more preferably combined.

The content of the compound represented by General Formula (X-4-1) is preferably 2% by mass or greater, more preferably 5% by mass or greater, and still more preferably 10% by mass or greater, with respect to the total amount of the liquid crystal composition of the present disclosure. In addition, in consideration of solubility at a low temperature, a transition temperature, and electrical reliability, the maximum ratio is preferably 20% by mass or less, more preferably 17% by mass or less, still more preferably 15% by mass or less, and particularly preferably 13% by mass or less.

Furthermore, the compound represented by General Formula (X-4-1) used in the liquid crystal composition of the present disclosure, specifically, is preferably the compound represented by each of Formulas (42.1) to (42.4), and among these, preferably contains the compound represented by Formula (42.3).

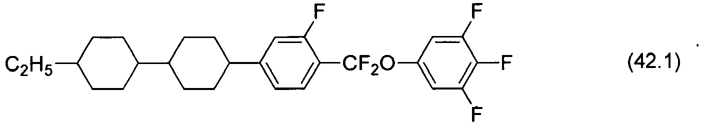

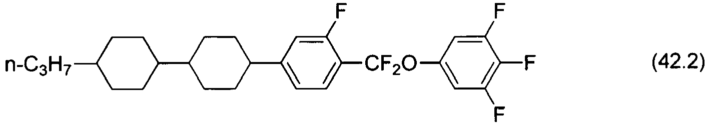

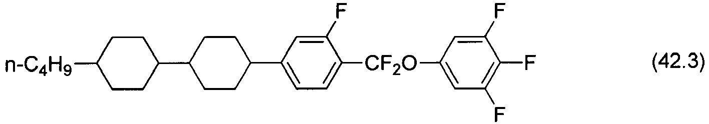

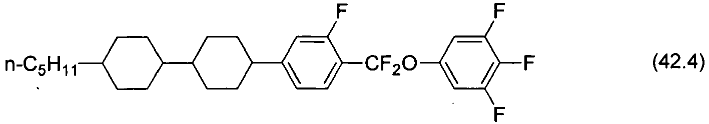

Furthermore, the compound represented by General Formula (X) according to the present disclosure is preferably the compound represented by General Formula (X-5).

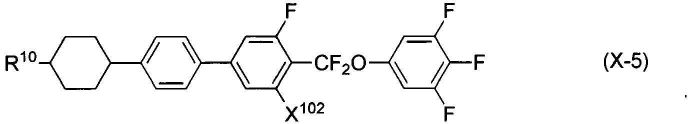

In General Formula (X-5), X¹⁰² represents a fluorine atom or a hydrogen atom, R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined, and one to three or more types are more preferably combined.

Furthermore, the compound represented by General Formula (X-5) used in the liquid crystal composition of the present disclosure is preferably the compound represented by General Formula (X-5-1).

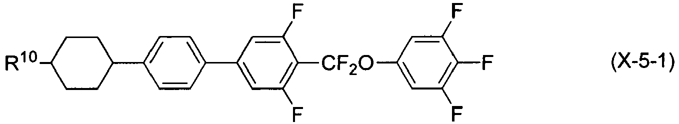

In General Formula (X-5-1), R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined, and one to three or more types are more preferably combined.

Furthermore, the compound represented by General Formula (X-5-1) used in the liquid crystal composition of the present disclosure, specifically, is preferably the compound represented by each of Formulas (43.1) to (43.4), and among these, preferably contains the compound represented by Formula (43.2).

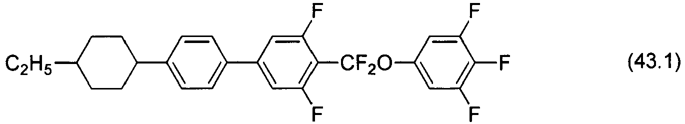

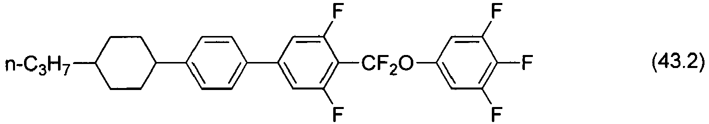

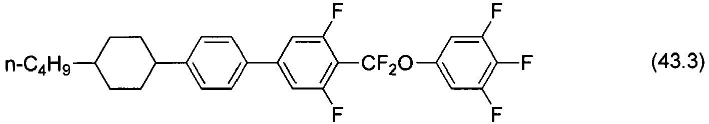

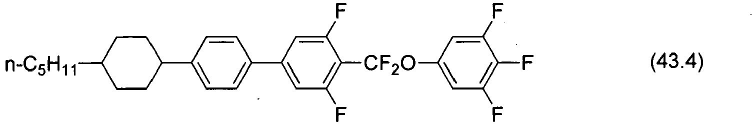

The compound represented by General Formula (M) used in the liquid crystal composition of the present disclosure is preferably the compound represented by General Formula (IIa).

At least one type of compound is preferably selected from the group consisting of compounds represented by General Formula (IIa), and at least two types of compounds are more preferably selected from the group consisting of compounds represented by General Formula (IIa).

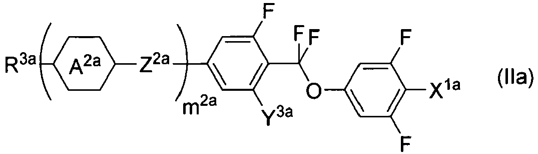

In General Formula (IIa), R^{3a} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, methylene groups in the alkyl group, the alkenyl group, the alkoxy group, or the alkenyloxy group each may be substituted with an oxygen atom as long as the oxygen atom is not continuously bonded to another oxygen atom or each may be substituted with a carbonyl group as long as the carbonyl group is not continuously bonded to another carbonyl group,
each of A^{2a}'s independently represents a 1, 4-cyclohexylene cyclohexylene group, a 1, 4-phenylene group, a tetrahydropyran-2,5-diyl group, a dioxane-2,5-diyl group, or a pyrimidine-2,5-diyl group, and in a case where A^{2a} represents a 1,4-phenylene group, one or more hydrogen atoms in the 1, 4-phenylene group may be substituted with a fluorine atom,
each of Z^{2a}'s independently represents a single bond, -OCH₂-, -OCF₂-, -CH₂O-, or -CF₂O-,
m^{2a} represents 1, 2, 3, or 4, each of Y^{3a}'s independently represents a fluorine atom or a hydrogen atom, and X^{1a} represents a fluorine atom, a -CN group, or an -OCF₃ group. In addition, in General Formula (IIa), m^{2a} is more preferably 2, 3, or 4, m^{2a} is still more preferably 2 or 3, and m^{2a} is particularly preferably 3.

It was confirmed that compatibility is significantly improved by combination of compounds having commonality of the chemical skeleton or characteristics of the chemical skeleton. Among these, in the liquid crystal composition of the present disclosure including a second component obtained by combining a compound represented by the following General Formula (X-6) and the compound represented by the following General Formula (XI-1) which are subordinate concepts of the compound represented by General Formula (IIa) and a first component obtained by combining the compound represented by General Formula (II-2) and preferably the compound represented by General Formula (I-1), precipitation of the liquid crystal compound which had been a problem in the related art was solved.

The content of the compound represented by General Formula (IIa) has the upper limit value and the lower limit value in each embodiment in consideration of characteristics such as solubility at a low temperature, a transition temperature, electrical reliability, and birefringence. For example, the lower limit value of the content of the compound is 2% in one embodiment of the present disclosure, 3% in another embodiment, 4% in still another embodiment, 5% in still another embodiment, 6% in still another embodiment, 7% in still another embodiment, and 8% in still another embodiment, with respect to the total amount of the liquid crystal composition of the present disclosure. In addition, the lower limit value is 9% in still another embodiment. The lower limit value is 11% in still another embodiment, 15% in still another embodiment, and 18% in still another embodiment. In addition, for example, the upper limit value of the content of the compound represented by General Formula (IIa) is 30% in one embodiment of the present invention, 20% in another embodiment, 13% in still another embodiment, 10% in still another embodiment, 7% in still another embodiment, and 3% in still another embodiment.

The compound represented by General Formula (X) preferably used in the liquid crystal composition of the present disclosure is preferably the compound represented by General Formula (X-6).

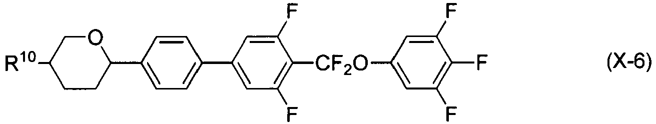

In General Formula (X-6), R¹⁰ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined.

In the liquid crystal composition according to the present disclosure, when the compound represented by General Formula (X-6) is present, it is confirmed that a high transition point, a great Δε dielectric constant, and in a tetracyclic compound, low viscosity are observed. In addition, it is confirmed that specifically good compatibility is exhibited with respect to General Formulas (I-1), (II-2), and (IV).

The content of the compound represented by General Formula (X-6) has the upper limit value and the lower limit value in each embodiment in consideration of characteristics such as solubility at a low temperature, a transition temperature, electrical reliability, and birefringence. For example, the lower limit value of the content is 4% in one embodiment of the present disclosure, 5% in another embodiment, 6% in still another embodiment, 8% in still another embodiment, 9% in still another embodiment, 11% in still another embodiment, and 14% in still another embodiment, with respect to the total amount of the liquid crystal composition of the present disclosure. In addition, the lower limit value is 18% in still another embodiment.

In addition, for example, the upper limit value of the content is 30% in one embodiment of the present disclosure, 20% in another embodiment, 13% in still another embodiment, 10% in still another embodiment, 7% in still another embodiment, and 3% in still another embodiment.

Furthermore, the compound represented by General Formula (X-6) used in the liquid crystal composition of the present disclosure, specifically, is preferably the compound represented by each of Formulas (44.1) to (44.4), and among these, preferably contains the compound represented by each of Formulas (44.1) and/or (44.2).

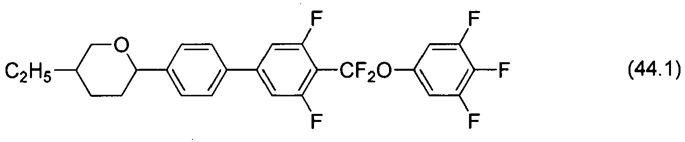

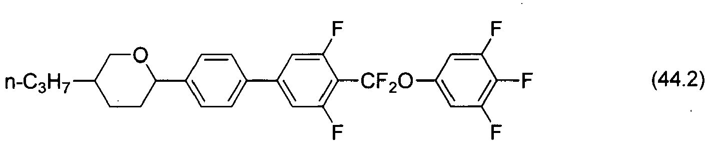

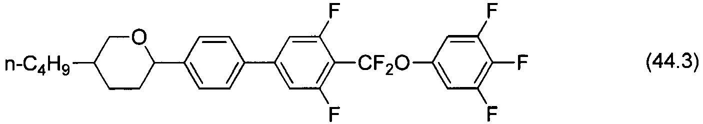

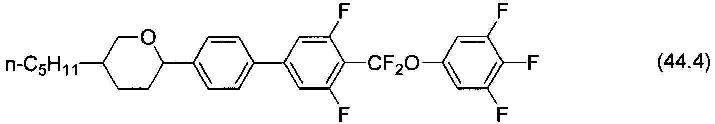

Furthermore, the compound represented by General Formula (X) is preferably a compound selected from the group represented by General Formula (XI).

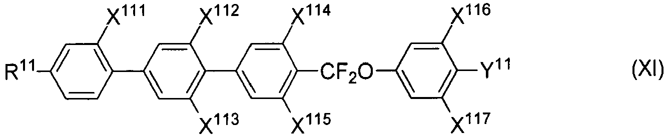

In General Formula (XI), each of X¹¹¹ to X¹¹⁷ independently represents a fluorine atom or a hydrogen atom, at least one of X¹¹¹ to X¹¹⁷ represents a fluorine atom, R¹¹ represents an alkyl group having 1 to 5 carbon atoms, an alkenyl group having 2 to 5 carbon atoms, or an alkoxy group having 1 to 4 carbon atoms, and Y¹¹ represents a fluorine atom or -OCF₃.

The compounds capable of being combined are not particularly limited, and in consideration of solubility at a low temperature, a transition temperature, electrical reliability, or birefringence, one type to three or more types are preferably combined.

When the compound represented by General Formula (XI) is present in the liquid crystal composition, it is confirmed that a high transition point, a great Δε dielectric constant, a high Δn, and in a tetracyclic compound, low viscosity are observed. Furthermore, it is confirmed that the compound represented by General Formula (X-6) exhibits specifically good compatibility with respect to the compound represented by General Formula (I-1), (II-2), or (IV). Thus, in the liquid crystal composition according to the present disclosure, General Formula (XI) is particularly preferably included as General Formula (M).

The content of the compound represented by General Formula (XI) has the upper limit value and the lower limit value in each embodiment in consideration of characteristics such as solubility at a low temperature, a transition temperature, electrical reliability, and birefringence. For example, the lower limit value of the content is 2% in one embodiment of the present disclosure, 4% in another embodiment, 5% in still another embodiment, 7% in still another embodiment, 9% in still another embodiment, 10% in still another embodiment, and 12% in still another embodiment, with respect to the total amount of the liquid crystal composition of the present disclosure. In addition, the lower limit value is 13% in still another embodiment. In addition, the lower limit value is 15% in still another embodiment. In addition, the lower limit value is 18% in still another embodiment.

In addition, for example, the upper limit value of the content is 30% in one embodiment of the present disclosure, 25% in another embodiment, 20% in still another embodiment, 15% in still another embodiment, 10% in still another embodiment, and 5% in still another embodiment.

In a case where the liquid crystal composition of the present disclosure is used in a liquid crystal display element having a small cell gap, it is suitable that the content of the compound represented by General Formula (XI) is great. In a case where the liquid crystal composition of the present disclosure is used in a liquid crystal display element having a low driving voltage, it is suitable that the content of the compound represented by General Formula (XI) is great. In a case where the liquid crystal composition of the present disclosure is used in a liquid crystal display element which is used in a low temperature environment, it is suitable that the content of the compound represented by General Formula (XI) is small. In a case where the liquid crystal composition of the present disclosure is used in a liquid crystal display element having a high response speed, it is suitable that the content of the compound represented by General Formula (XI) is small.

Moreover, the cell gap in the specification refers to an average distance between the alignment layers facing each other, and in other words, refers to the average thickness of a liquid crystal layer filled with the liquid crystal composition (for example, the thickness is obtained by averaging 10 points).

Furthermore, the compound represented by General Formula (XI) used in the liquid crystal composition of the present disclosure is preferably the compound represented by General Formula (XI-1).

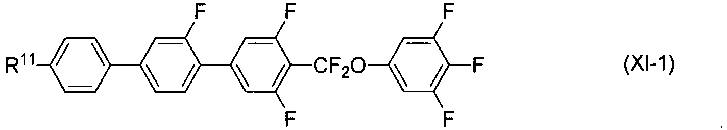

In General Formula (XI-1), R¹¹ represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, a compound is suitably combined with respect to each embodiment. For example, in one embodiment of the present disclosure, one type thereof is combined, in another embodiment, two types thereof are combined, and in still another embodiment, three or more types thereof are combined.

In addition, it is also thought that the fluorine atom on the second benzene ring from the left in the compound represented by General Formula (XI-1) particularly contributes to the compatibility, and it is confirmed that a high transition point, a great Δε dielectric constant, a high Δn, and in a tetracyclic compound, low viscosity are observed. Furthermore, it is confirmed that the compound represented by General Formula (X-6) exhibits specifically good compatibility with respect to a composition including the compound represented by General Formula (I-1-1), (I-1-2), (I-4), (II-2), or (IV).

The content of the compound represented by General Formula (XI-1) is preferably 1% by mass or greater, more preferably 3% by mass or greater, still more preferably 4% by mass or greater, still more preferably 6% by mass or greater, and particularly preferably 9% by mass or greater, with respect to the total amount of the liquid crystal composition of the present invention. In addition, in consideration of solubility at a low temperature, a transition temperature, and electrical reliability, the maximum ratio is preferably 20% by mass or less, more preferably 15% by mass or less, still more preferably 12% by mass or less, and particularly preferably 8% by mass or less.

Furthermore, the compound represented by General Formula (XI-1) used in the liquid crystal composition of the present invention, specifically, is preferably the compound represented by each of Formulas (45.1) to (45.4), and among these, the compound represented by Formulas (45.2) or (45.4) is preferably contained, and the compound represented by Formula (45.2) is more preferably contained.

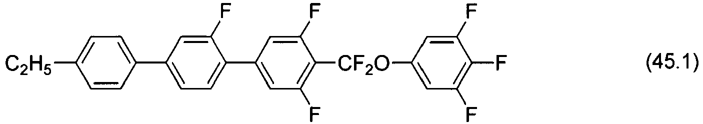

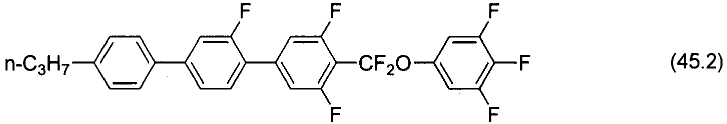

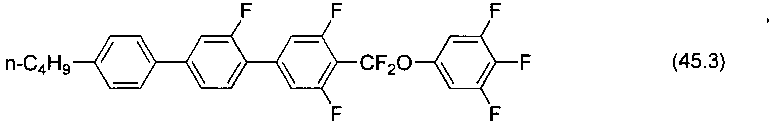

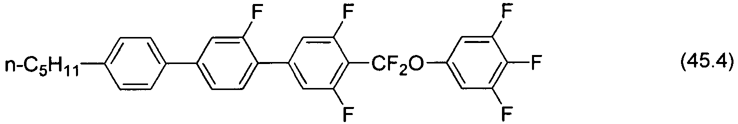

Furthermore, the compound represented by General Formula (X) is preferably a compound selected from the group represented by General Formula (XII).

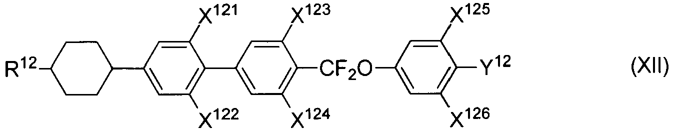

In General Formula (XII), each of X¹²¹ to X¹²⁶ independently represents a fluorine atom or a hydrogen atom, R¹² represents an alkyl group having 1 to 5 carbon atoms, an alkenyl group having 2 to 5 carbon atoms, or an alkoxy group having 1 to 4 carbon atoms, and Y¹² represents a fluorine atom or -OCF₃.

The compounds capable of being combined are not particularly limited, and in consideration of solubility at a low temperature, a transition temperature, electrical reliability, or birefringence, one type to three or more types are preferably combined, and one to four or more types are more preferably combined.

The compound represented by General Formula (XII) used in the liquid crystal composition of the present disclosure is preferably the compound represented by General Formula (XII-1).

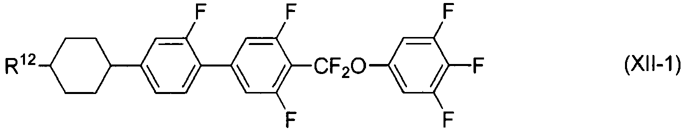

In General Formula (XII-1), R¹² represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably suitably combined, and one to three or more types are more preferably combined.

The content of the compound represented by General Formula (XII-1) is preferably 1% by mass or greater, more preferably 2% by mass or greater, still more preferably 3% by mass or greater, and particularly preferably 4% by mass or greater, with respect to the total amount of the liquid crystal composition of the present disclosure. In addition, in consideration of solubility at a low temperature, a transition temperature, and electrical reliability, the maximum ratio is preferably 15% by mass or less, more preferably 10% by mass or less, still more preferably 8% by mass or less, and particularly preferably 6% by mass or less.

Furthermore, the compound represented by General Formula (XII-1) used in the liquid crystal composition of the present disclosure, specifically, is preferably the compound represented by each of Formulas (46.1) to (46.4), and among these, preferably contains the compound represented by each of Formulas (46.2) to (46.4).

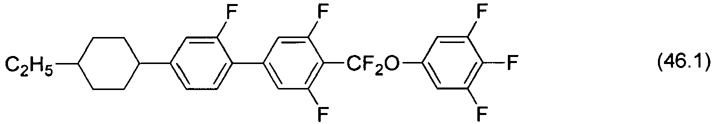

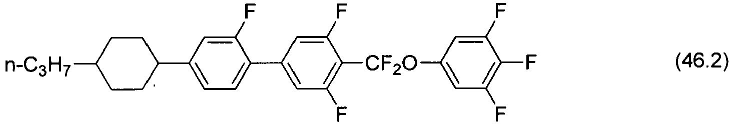

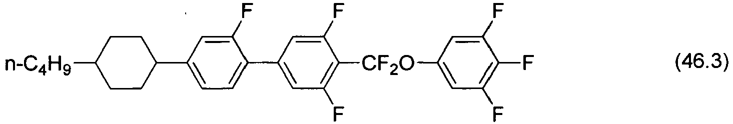

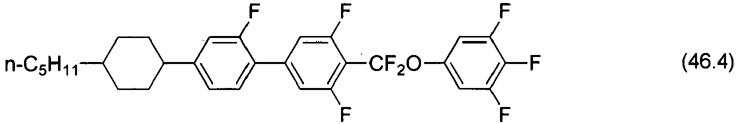

Furthermore, the compound represented by General Formula (XII) is preferably the compound represented by General Formula (XII-2).

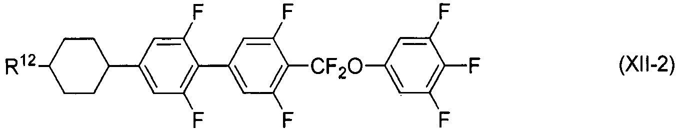

In General Formula (XII-2), R¹² represents an alkyl group having 1 to 5 carbon atoms, an alkenyl group having 2 to 5 carbon atoms, or an alkoxy group having 1 to 4 carbon atoms.

The compounds capable of being combined are not particularly limited, and in consideration of solubility at a low temperature, a transition temperature, electrical reliability, or birefringence, one type or two or more types are preferably combined, and one to three or more types are more preferably combined.

The content of the compound represented by General Formula (XII-2) is preferably 1% by mass or greater, more preferably 3% by mass or greater, still more preferably 4% by mass or greater, still more preferably 6% by mass or greater, and particularly preferably 9% by mass or greater, with respect to the total amount of the liquid crystal composition of the present disclosure. In addition, in consideration of solubility at a low temperature, a transition temperature, and electrical reliability, the maximum ratio is preferably 20% by mass or less, more preferably 17% by mass or less, still more preferably 15% by mass or less, and particularly preferably 13% by mass or less.

Furthermore, the compound represented by General Formula (XII-2) used in the liquid crystal composition of the present disclosure, specifically, is preferably the compound represented by each of Formulas (47.1) to (47.4), and among these, preferably contains the compound represented by each of Formulas (47.2) to (47.4).

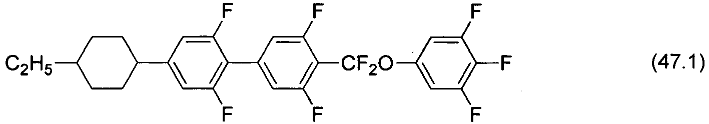

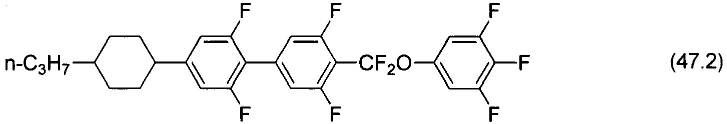

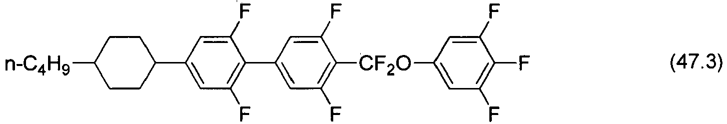

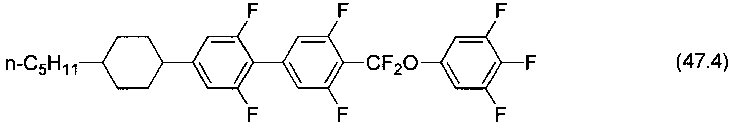

The compound represented by General Formula (M) according to the present invention is, for example, preferably a compound selected from the group consisting of compounds represented by General Formula (VIII).

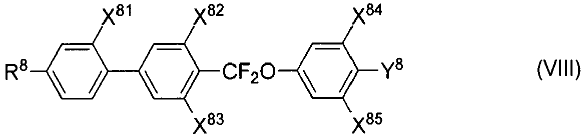

In General Formula (VIII), R⁸ represents an alkyl group having 1 to 5 carbon atoms, an alkenyl group having 2 to 5 carbon atoms, or an alkoxy group having 1 to 4 carbon atoms, each of X⁸¹ to X⁸⁵ independently represents a hydrogen atom or a fluorine atom, and Y⁸ represents a fluorine atom or -OCF₃.

The types of compound capable of being combined are not particularly limited, and a compound is suitably combined and used depending on the desired performance such as solubility at a low temperature, a transition temperature, electrical reliability, or birefringence. The type of compound used is, for example, one type in one embodiment of the present invention. In another embodiment of the present invention, two types are used. In addition, in still another embodiment of the present invention, three or more types are used. When the compound represented by General Formula (VIII) is present in the liquid crystal composition, a high Δn is exhibited, and action and effect in which the transition point is likely to be controlled by a ratio adjustment with other 4-ring compounds are exhibited.

In the liquid crystal composition of the present invention, the content of the compound represented by General Formula (VIII) needs to be suitably adjusted depending on the required performance such as solubility at a low temperature, a transition temperature, electrical reliability, birefringence, process compatibility, dropping marks, burn-in, or dielectric anisotropy.

For example, the content of the compound represented by General Formula (VIII) is 1% to 25% by mass with respect to the total mass of the liquid crystal composition of the present invention in one embodiment of the present invention. For example, in another embodiment of the present invention, the content of the compound is 1% to 20% by mass. For example, in still another embodiment of the present invention, the content of the compound is 1% to 15% by mass. For example, in still another embodiment of the present invention, the content of the compound is 1% to 10% by mass. For example, in still another embodiment of the present invention, the content of the compound is 1% to 7% by mass. For example, in still another embodiment of the present invention, the content of the compound is 1% to 6% by mass. For example, in still another embodiment of the present invention, the content of the compound is 1% to 5% by mass. For example, in still another embodiment of the present invention, the content of the compound is 1% to 4% by mass. For example, in still another embodiment of the present invention, the content of the compound is 3% to 7% by mass. For example, in still another embodiment of the present invention, the content of the compound is 3% to 6% by mass. In addition, for example, in still another embodiment of the present invention, the content of the compound is 4% to 7% by mass.

In a case where it is required that the viscosity of the liquid crystal composition of the present invention be kept low and the liquid crystal composition have a high response speed, it is preferable that the above-described lower limit value is small and the above-described upper limit value is small. In a case where it is required that Tni of the liquid crystal composition of the present invention be kept high and the liquid crystal composition have good temperature stability, it is preferable that the above-described lower limit value is small and the above-described upper limit value is small. In addition, when it is desired to increase the dielectric anisotropy in order to keep the driving voltage low, it is preferable that the above-described lower limit value is great and the above-described upper limit value is great.

Furthermore, the compound represented by General Formula (VIII) according to the present invention is preferably the compound represented by General Formula (VIII-1).

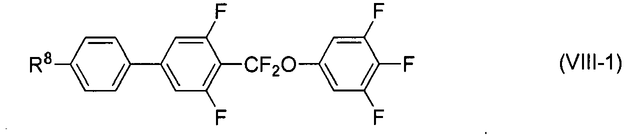

In General Formula (VIII-1), R⁸ has the same meaning as that in General Formula (VIII).

The compound represented by General Formula (VIII-1) is, specifically, preferably the compound represented by each of Formulas (26.1) to (26.4), preferably the compound represented by Formula (26.1) or (26.2), and more preferably the compound represented by Formula (26.2).

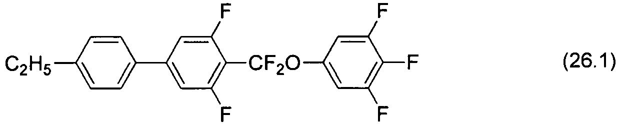

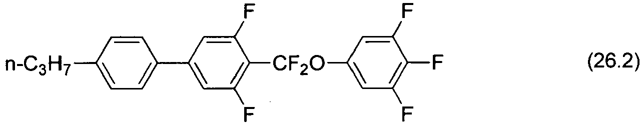

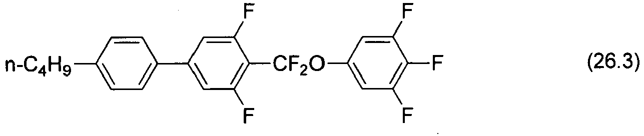

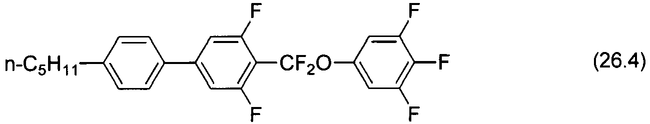

The content of the compound represented by General Formula (26.1) is preferably 1% by mass to 20% by mass, more preferably 1% by mass to 15% by mass, still more preferably 1% by mass to 10% by mass, and preferably 1% by mass to 7% by mass, with respect to the total mass of the liquid crystal composition of the present invention, in consideration of solubility at a low temperature, a transition temperature, electrical reliability, and birefringence. Within the above ranges, for example, 1% by mass to 6% by mass, 1% by mass to 5% by mass, 3% by mass to 7% by mass, 3% by mass to 6% by mass, or 4% by mass to 7% by mass is preferable.

Furthermore, the compound represented by General Formula (VIII) according to the present invention is preferably the compound represented by General Formula (VIII-2).

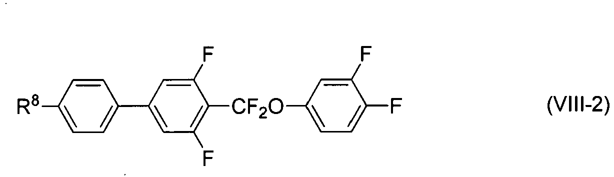

In General Formula (VIII-2), R⁸ has the same meaning as that in General Formula (VIII).

The types of compound capable of being combined as General Formula (VIII-2) are not particularly limited, and a compound is suitably combined and used depending on the desired performance such as solubility at a low temperature, a transition temperature, electrical reliability, or birefringence. The type of compound used is, for example, one type in one embodiment of the present invention. In another embodiment of the present invention, two types are used. In addition, in still another embodiment of the present invention, three or more types are used.

The content of the compound represented by General Formula (VIII-2) is preferably 2.5% by mass to 25% by mass, preferably 8% by mass to 25% by mass, preferably 10% by mass to 20% by mass, and preferably 12% by mass to 15% by mass, with respect to the total mass of the liquid crystal composition of the present invention, in consideration of solubility at a low temperature, a transition temperature, electrical reliability, and birefringence.

Furthermore, the compound represented by General Formula (VIII-2), for example, is preferably the compound represented by each of Formulas (27.1) to (27.4), and preferably the compound represented by Formula (27.2).

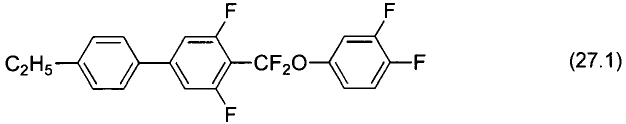

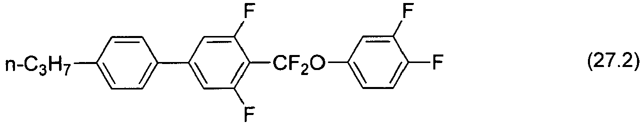

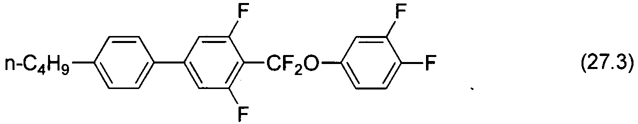

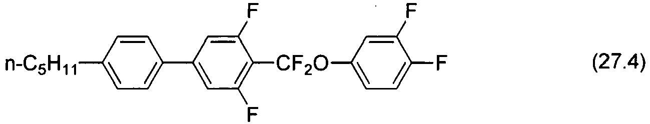

Furthermore, the compound represented by General Formula (M) according to the present disclosure is, for example, preferably a compound selected from the group consisting of compounds represented by General Formula (IX).

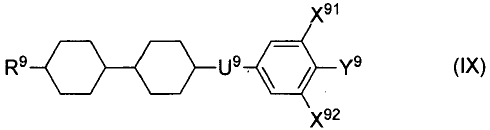

In General Formula (IX), R⁹ represents an alkyl group having 1 to 5 carbon atoms, an alkenyl group having 2 to 5 carbon atoms, or an alkoxy group having 1 to 4 carbon atoms, each of X⁹¹ and X⁹² independently represents a hydrogen atom or a fluorine atom, Y⁹ represents a fluorine atom, a chlorine atom, or -OCF₃, and U⁹ represents a single bond, -COO-, or -CF₂O-.

The types of compound capable of being combined are not particularly limited, and a compound is suitably combined and used depending on the desired performance such as solubility at a low temperature, a transition temperature, electrical reliability, or birefringence. The type of compound used is, for example, one type in one embodiment of the present disclosure. In another embodiment of the present disclosure, two or more types are used.

The content of the compound represented by General Formula (VIII-3) is preferably 0.5% by mass to 15% by mass, preferably 0.5% by mass to 10% by mass, preferably 0.5% by mass to 5% by mass, and preferably 1% by mass to 5% by mass, with respect to the total mass of the liquid crystal composition of the present disclosure, in consideration of solubility at a low temperature, a transition temperature, electrical reliability, and birefringence.

In a case where it is required that the viscosity of the liquid crystal composition of the present disclosure be kept low and the liquid crystal composition have a high response speed, it is preferable that the above-described lower limit value is small and the above-described upper limit value is small. In a case where it is required that Tni of the liquid crystal composition of the present disclosure be kept high and the liquid crystal composition is less likely to generate burn-in, it is preferable that the above-described lower limit value is small and the above-described upper limit value is small. In addition, when it is desired to increase the dielectric anisotropy in order to keep the driving voltage low, it is preferable that the above-described lower limit value is great and the above-described upper limit value is great.

Furthermore, the compound represented by General Formula (IX) according to the present disclosure is preferably the compound represented by General Formula (IX-1).

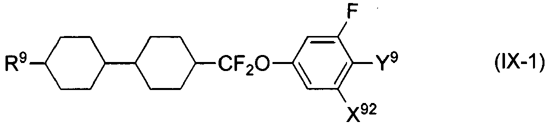

In General Formula (IX-1), each of R⁹ and X⁹² has the same meaning as that in General Formula (IX).

Furthermore, the compound represented by General Formula (IX-1) according to the present disclosure is preferably the compound represented by General Formula (IX-1-1).

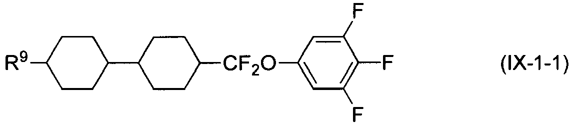

In General Formula (IX-1-1), R⁹ has the same meaning as that in General Formula (IX).

The types of compound capable of being combined are not particularly limited, and a compound is suitably combined and used depending on the desired performance such as solubility at a low temperature, a transition temperature, electrical reliability, or birefringence. The type of compound used is, for example, one type in one embodiment of the present disclosure. In another embodiment of the present disclosure, two types are used. In addition, in still another embodiment of the present disclosure, three or more types are used.

The content of the compound represented by General Formula (IX-1-1) is suitably adjusted depending on an embodiment in consideration of solubility at a low temperature, a transition temperature, electrical reliability, or birefringence.

For example, the content of the compound represented by General Formula (IX-1-1) is 1% to 30% by mass with respect to the total mass of the liquid crystal composition of the present disclosure in one embodiment of the present disclosure. For example, in another embodiment of the present disclosure, the content of the compound is 2% to 25% by mass. For example, in still another embodiment of the present disclosure, the content of the compound is 3% to 20% by mass. For example, in still another embodiment of the present disclosure, the content of the compound is 9% to 15% by mass. In addition, for example, in still another embodiment of the present disclosure, the content of the compound is 12% to 20% by mass.

Furthermore, the compound represented by General Formula (IX-1-1) is preferably the compound represented by each of Formulas (28.1) to (28.5), and preferably the compound represented by Formula (28.3) or/and (28.5).

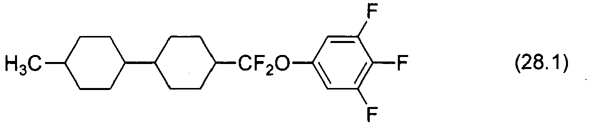

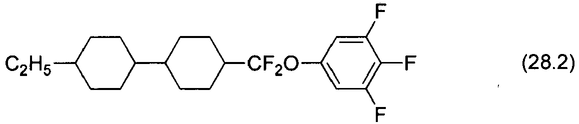

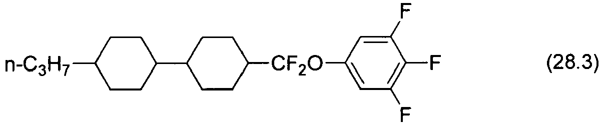

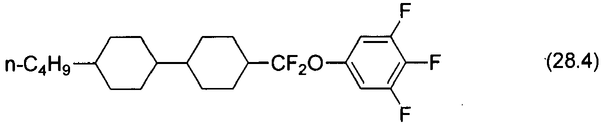

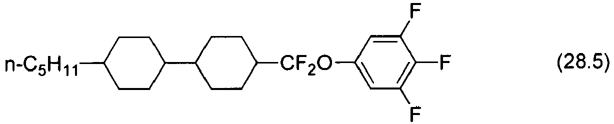

Furthermore, the compound represented by General Formula (IX-1) according to the present disclosure is preferably the compound represented by General Formula (IX-1-2).

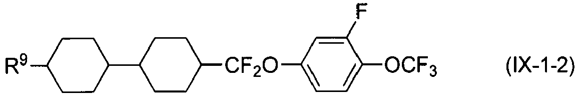

In General Formula (IX-1-2), R⁹ has the same meaning as that in General Formula (IX).

The types of compound capable of being combined are not particularly limited, and in consideration of solubility at a low temperature, a transition temperature, electrical reliability, or birefringence, one to three types are preferably combined, and one to four types are more preferably combined.

The content of the compound represented by General Formula (IX-1-2) is preferably 1% by mass to 30% by mass, preferably 5% by mass to 25% by mass, and preferably 8% by mass to 20% by mass, with respect to the total mass of the liquid crystal composition of the present disclosure, in consideration of solubility at a low temperature, a transition temperature, and electrical reliability.

Furthermore, the compound represented by General Formula (IX-1-2) is preferably the compound represented by each of Formulas (29.1) to (29.4), and preferably the compound represented by Formula (29.2) or/and (29.4).

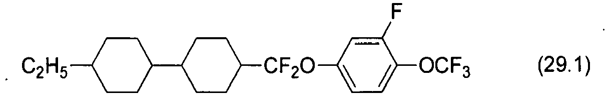

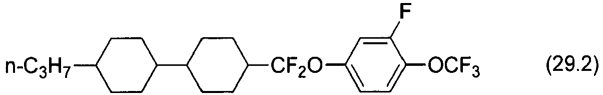

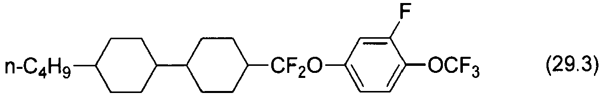

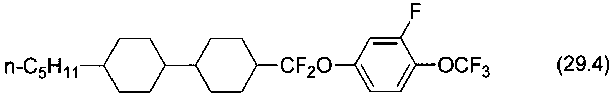

Furthermore, the compound represented by General Formula (IX) is preferably the compound represented by General Formula (IX-2).

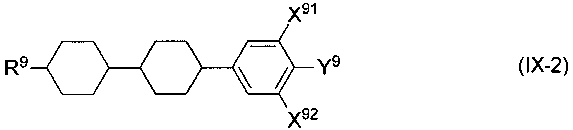

In General Formula (IX-2), each of R⁹, X⁹¹, and X⁹² has the same meaning as that in General Formula (IX).

Furthermore, the compound represented by General Formula (IX-2) according to the present invention is preferably the compound represented by General Formula (IX-2-1).

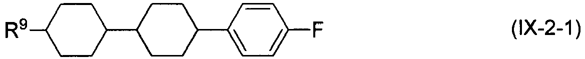

In General Formula (IX-2-1), R⁹ has the same meaning as that in General Formula (IX).

For example, in one embodiment of the present disclosure, the content of the compound represented by General Formula (IX-2-1) is 1% to 25% by mass with respect to the total mass of the liquid crystal composition of the present disclosure. In another embodiment of the present disclosure, the content of the compound is 1% to 20% by mass. In still another embodiment of the present disclosure, the content of the compound is 1% to 15% by mass. In still another embodiment of the present disclosure, the content of the compound is 1% to 10% by mass. In still another embodiment of the present disclosure, the content of the compound is 1% to 5% by mass. In addition, in still another embodiment of the present disclosure, the content of the compound is 1% to 4% by mass.

Furthermore, the compound represented by General Formula (IX-2-1), for example, is preferably the compound represented by each of Formulas (30.1) to (30.4), and preferably the compound represented by each of Formulas (30.1) to (30.2).

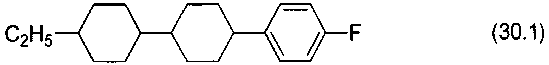

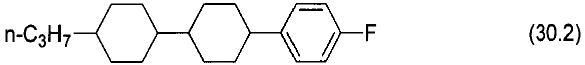

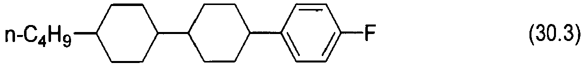

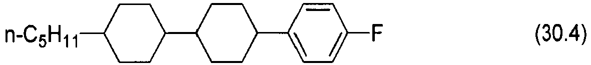

Furthermore, the compound represented by General Formula (IX-2) according to the present disclosure is preferably the compound represented by General Formula (IX-2-2).

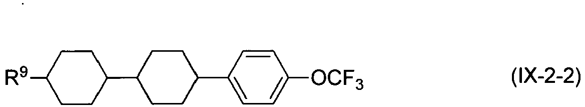

In General Formula (IX-2-2), R⁹ has the same meaning as that in General Formula (IX).

The content of the compound represented by General Formula (IX-2-2) is suitably adjusted with respect to each embodiment in consideration of characteristics such as solubility at a low temperature, a transition temperature, electrical reliability, and birefringence.

The content of the compound represented by General Formula (IX-2-2) is 1% to 30% by mass in one embodiment of the present disclosure, 1% to 25% by mass in another embodiment of the present disclosure, 1% to 20% by mass in still another embodiment of the present disclosure, 1% to 17% by mass in still another embodiment of the present disclosure, 1% to 16% by mass in still another embodiment of the present disclosure, 1% to 12% by mass in still another embodiment of the present disclosure, 1% to 11% by mass in still another embodiment of the present disclosure, 1% to 10% by mass in still another embodiment of the present disclosure, 1% to 9% by mass in still another embodiment of the present disclosure, 2% to 17% by mass in still another embodiment of the present disclosure, 6% to 17% by mass in still another embodiment of the present disclosure, 8% to 17% by mass in still another embodiment of the present disclosure, 9% to 17% by mass in still another embodiment of the present disclosure, 14% to 17% by mass in still another embodiment of the present disclosure, 14% to 16% by mass in still another embodiment of the present disclosure, 2% to 9% by mass in still another embodiment of the present disclosure, 6% to 10% by mass in still another embodiment of the present disclosure, 8% to 11% by mass in still another embodiment of the present disclosure, and 9% to 12% by mass in still another embodiment of the present disclosure, with respect to the total mass of the liquid crystal composition of the present disclosure.

Furthermore, the compound represented by General Formula (IX-2-2), for example, is preferably the compound represented by each of Formulas (31.1) to (31.4), and preferably the compound represented by each of Formulas (31.1) to (31.4).

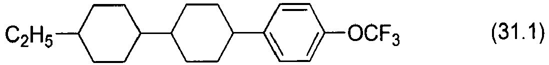

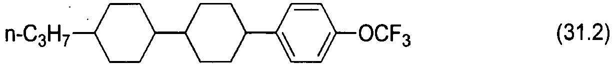

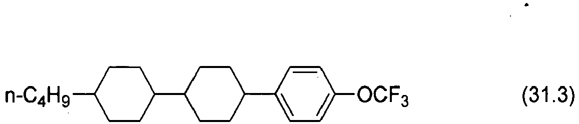

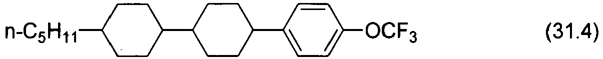

Furthermore, the compound represented by General Formula (IX-2) is preferably the compound represented by General Formula (IX-2-3).

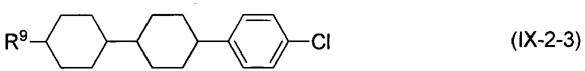

In General Formula (IX-2-3), R⁹ has the same meaning as that in General Formula (IX).

The types of compound capable of being combined are not particularly limited, and in consideration of solubility at a low temperature, a transition temperature, electrical reliability, and birefringence, one type or two types are preferably combined.

The content of the compound represented by General Formula (IX-2-3) is preferably 1% by mass to 30% by mass, more preferably 3% by mass to 20% by mass, still more preferably 6% by mass to 15% by mass, and still more preferably 8% by mass to 10% by mass, with respect to the total mass of the liquid crystal composition of the present disclosure, in consideration of solubility at a low temperature, a transition temperature, and electrical reliability.

Furthermore, the compound represented by General Formula (IX-2-3) is preferably the compound represented by each of Formulas (32.1) to (32.4), and preferably the compound represented by each of Formulas (32.2) and/or (32.4).

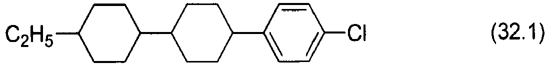

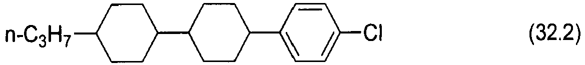

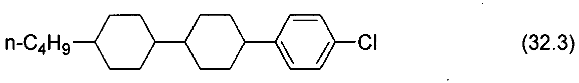

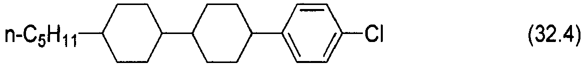

Furthermore, the compound represented by General Formula (IX-2) according to the present disclosure is preferably the compound represented by General Formula (IX-2-4).

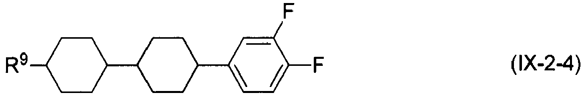

In General Formula (IX-2-4), R⁹ has the same meaning as that in General Formula (IX).

The content of the compound represented by General Formula (IX-2-4) is preferably 1% by mass to 25% by mass, preferably 1% by mass to 20% by mass, preferably 1% by mass to 15% by mass, preferably 1% by mass to 12% by mass, preferably 5% by mass to 12% by mass, and preferably 7% by mass to 12% by mass, with respect to the total mass of the liquid crystal composition of the present disclosure, in consideration of solubility at a low temperature, a transition temperature, and electrical reliability.

Furthermore, the compound represented by General Formula (IX-2-4) is preferably the compound represented by each of Formulas (33.1) to (33.5), and preferably the compound represented by each of Formulas (33.1) and/or (33.3).

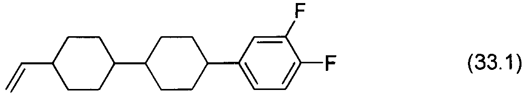

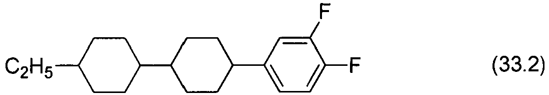

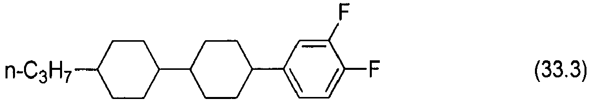

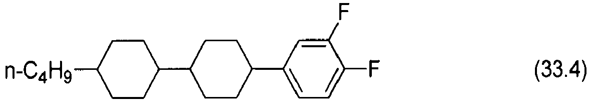

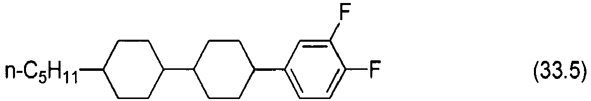

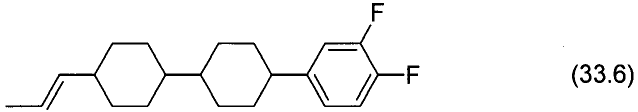

Furthermore, the compound represented by General Formula (IX-2) according to the present disclosure is preferably the compound represented by General Formula (IX-2-5).

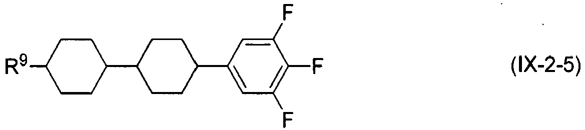

In General Formula (IX-2-5), R⁹ has the same meaning as that in General Formula (IX).

The types of compound capable of being combined are not limited, and in consideration of solubility at a low temperature, a transition temperature, electrical reliability, and birefringence, a compound is suitably combined and used with respect to each embodiment. For example, in an embodiment of the present disclosure, one type thereof is combined, in another embodiment, two types thereof are combined, in still another embodiment, three types thereof are combined, and in still another embodiment, four or more types thereof are combined.

The content of the compound represented by General Formula (IX-2-5) is suitably adjusted with respect to each embodiment in consideration of characteristics such as solubility at a low temperature, a transition temperature, electrical reliability, and birefringence.

For example, the content of the compound represented by General Formula (IX-2-5) is 1 to 40% by mass in one embodiment of the present disclosure, 1 to 35% by mass in another embodiment, 5 to 35% by mass in still another embodiment, 8 to 35% by mass in still another embodiment, 12 to 35% by mass in still another embodiment, 30 to 35% by mass in still another embodiment, and 8 to 12% by mass in still another embodiment, with respect to the total mass of the liquid crystal composition of the present disclosure.

In a case where it is required that the viscosity of the liquid crystal composition of the present disclosure be kept low and the liquid crystal composition have a high response speed, it is preferable that the above-described lower limit value is small and the above-described upper limit value is small. In a case where it is required that Tni of the liquid crystal composition of the present disclosure be kept high and the liquid crystal composition is less likely to generate burn-in, it is preferable that the above-described lower limit value is small and the above-described upper limit value is small. In addition, when it is desired to increase the dielectric anisotropy in order to keep the driving voltage low, it is preferable that the above-described lower limit value is great and the above-described upper limit value is great.

Furthermore, the compound represented by General Formula (IX-2-5) is preferably the compound represented by each of Formulas (34.1) to (34.5), and preferably the compound represented by each of Formulas (34.1), (34.2), (34.3) and/or (34.5).

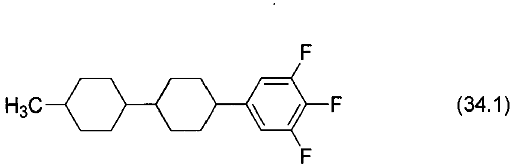

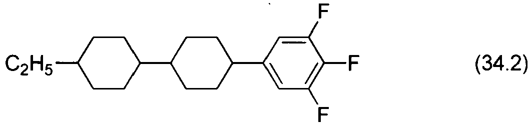

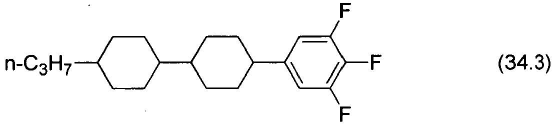

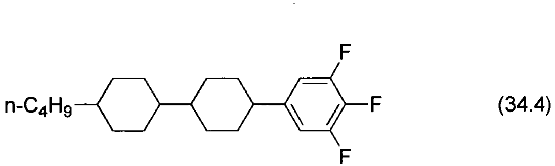

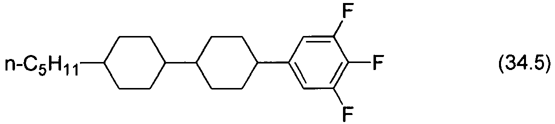

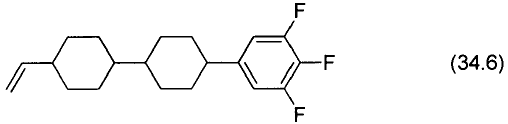

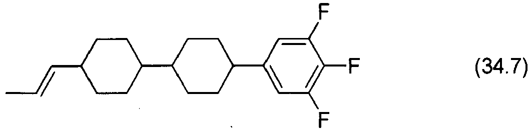

Furthermore, the compound represented by General Formula (IX) according to the present disclosure is preferably the compound represented by General Formula (IX-3).

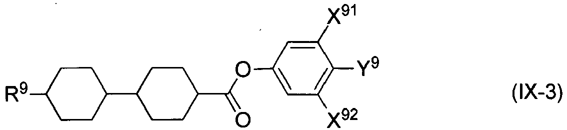

In General Formula (IX-3), each of R⁹, X⁹¹, and X⁹² has the same meaning as that in General Formula (IX).

Furthermore, the compound represented by General Formula (IX-3) is preferably the compound represented by General Formula (IX-3-1).

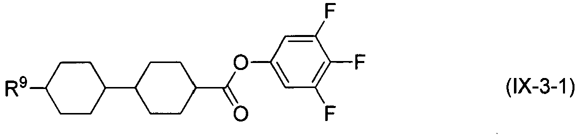

In General Formula (IX-3-1), R⁹ has the same meaning as that in General Formula (IX).

The types of compound capable of being combined are not particularly limited, and in consideration of solubility at a low temperature, a transition temperature, electrical reliability, and birefringence, one type or two types are preferably combined.

The content of the compound represented by General Formula (IX-3-1) is preferably 3% by mass to 30% by mass, preferably 7% by mass to 30% by mass, preferably 13% by mass to 20% by mass, and preferably 15% by mass to 18% by mass, with respect to the total mass of the liquid crystal composition of the present disclosure, in consideration of solubility at a low temperature, a transition temperature, and electrical reliability.

Furthermore, the compound represented by General Formula (IX-3-1) is preferably the compound represented by each of Formulas (35.1) to (35.4), and preferably the compound represented by each of Formulas (35.1) and/or (35.2).

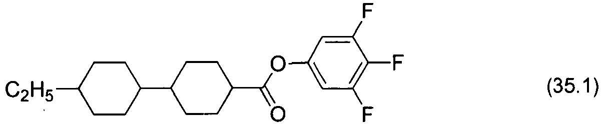

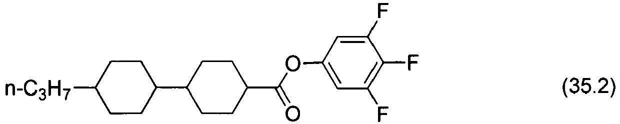

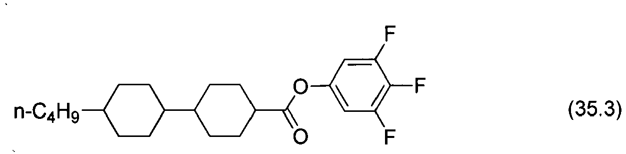

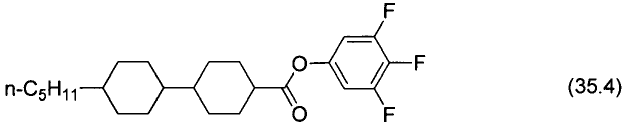

Furthermore, the compound represented by General Formula (M) according to the present invention is preferably a compound selected from the group consisting of compounds represented by General Formula (XIII).

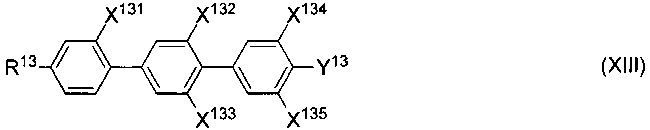

In General Formula (XIII), each of X¹³¹ and X¹³⁵ independently represents a fluorine atom or a hydrogen atom, R¹³ represents an alkyl group having 1 to 5 carbon atoms, an alkenyl group having 2 to 5 carbon atoms, or an alkoxy group having 1 to 4 carbon atoms, and Y¹³ represents a fluorine atom or -OCF₃.

The types of compounds capable of being combined are not particularly limited, and one type or two types of these compounds are preferably contained, one type to three types are more preferably contained, and one type to four types are further more preferably contained.

The content of the compound represented by General Formula (XIII) has the upper limit value and the lower limit value in each embodiment in consideration of characteristics such as solubility at a low temperature, a transition temperature, electrical reliability, and birefringence. For example, the lower limit value of the content is 2% in one embodiment of the present invention, 4% in another embodiment, 5% in still another embodiment, 7% in still another embodiment, 9% in still another embodiment, 11% in still another embodiment, and 13% in still another embodiment, with respect to the total amount of the liquid crystal composition of the present invention. In addition, the lower limit value is 14% in still another embodiment. In addition, the lower limit value is 16% in still another embodiment. In addition, the lower limit value is 20% in still another embodiment.

In addition, for example, the upper limit value of the content is 30% in one embodiment of the present invention, 25% in another embodiment, 20% in still another embodiment, 15% by mass in still another embodiment, 10% in still another embodiment, and 5% in still another embodiment.

In a case where the liquid crystal composition of the present invention is used in a liquid crystal display element having a small cell gap, it is suitable that the content of the compound represented by General Formula (XIII) is great. In a case where the liquid crystal composition of the present invention is used in a liquid crystal display element having a low driving voltage, it is suitable that the content of the compound represented by General Formula (XIII) is great. In a case where the liquid crystal composition of the present invention is used in a liquid crystal display element which is used in a low temperature environment, it is suitable that the content of the compound represented by General Formula (XIII) is small. In a case where the liquid crystal composition of the present invention is used in a liquid crystal display element having a high response speed, it is suitable that the content of the compound represented by General Formula (XIII) is small.

Furthermore, the compound represented by General Formula (XIII) according to the present invention is preferably the compound represented by General Formula (XIII-1) .

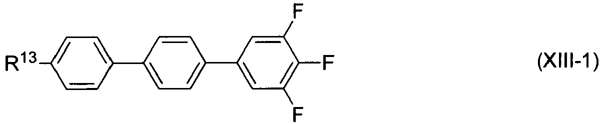

In General Formula (XIII-1), R¹³ represents an alkyl group having 1 to 5 carbon atoms, an alkenyl group having 2 to 5 carbon atoms, or an alkoxy group having 1 to 4 carbon atoms.

The compound represented by General Formula (XIII-1) is preferably contained in 1% by mass or greater, more preferably contained in 3% by mass or greater, still more preferably contained in 5% by mass or greater, and particularly preferably contained in 10% by mass or greater, with respect to the total amount of the liquid crystal composition of the present invention. In addition, the maximum content ratio is preferably 25% by mass or less, more preferably 20% by mass or less, and still more preferably 15% by mass or less.

Furthermore, the compound represented by General Formula (XIII-1), for example, is preferably the compound represented by each of Formulas (48.1) to (48.4), and preferably the compound represented by Formula (48.2).

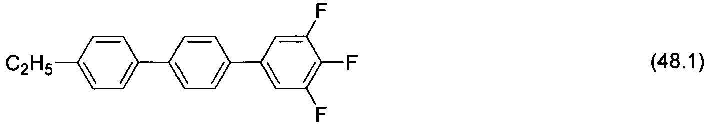

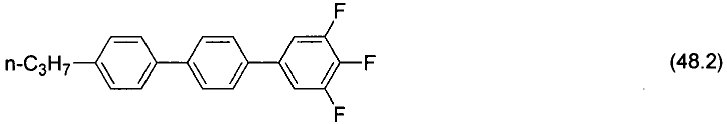

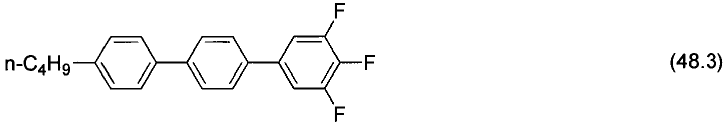

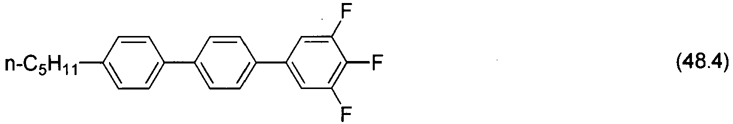

Furthermore, the compound represented by General Formula (XIII) according to the present invention is preferably the compound represented by General Formula (XIII-2).

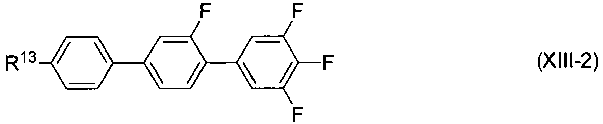

In General Formula (XIII-2), R¹³ represents an alkyl group having 1 to 5 carbon atoms, an alkenyl group having 2 to 5 carbon atoms, or an alkoxy group having 1 to 4 carbon atoms.

The types of compounds capable of being combined are not particularly limited, and one type or two or more types of these compounds are preferably contained.

The compound represented by General Formula (XIII-2) is preferably contained in 5% by mass or greater, more preferably contained in 6% by mass or greater, still more preferably contained in 8% by mass or greater, and particularly preferably contained in 10% by mass or greater, with respect to the total amount of the liquid crystal composition of the present invention. In addition, the maximum content ratio is preferably 25% by mass or less, more preferably 20% by mass or less, and still more preferably 15% by mass or less.

Furthermore, the compound represented by General Formula (XIII-2) is preferably the compound represented by each of Formulas (49.1) to (49.4), and preferably the compound represented by Formula (49.1) or/and (49.2).

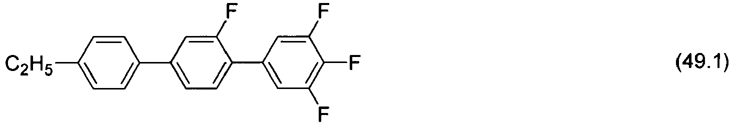

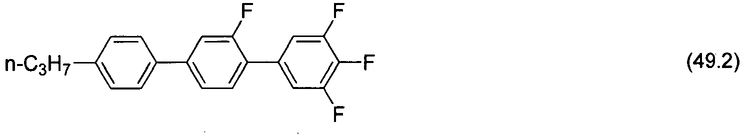

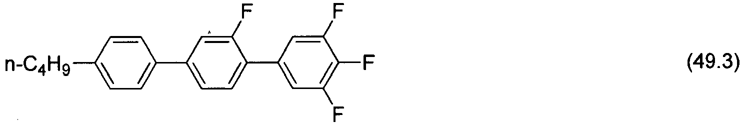

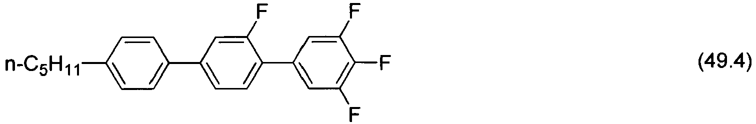

Furthermore, the compound represented by General Formula (XIII) according to the present invention is preferably the compound represented by General Formula (XIII-3).

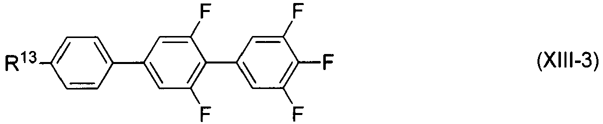

In General Formula (XIII-3), R¹³ represents an alkyl group having 1 to 5 carbon atoms, an alkenyl group having 2 to 5 carbon atoms, or an alkoxy group having 1 to 4 carbon atoms.

The types of compounds capable of being combined are not particularly limited, and one type or two types of these compounds are preferably contained.

The compound represented by General Formula (XIII-3) is preferably contained in 2% by mass or greater, more preferably contained in 4% by mass or greater, still more preferably contained in 9% by mass or greater, and particularly preferably contained in 11% by mass or greater, with respect to the total amount of the liquid crystal composition of the present invention. In addition, the maximum content ratio is preferably 20% by mass or less, more preferably 17% by mass or less, and still more preferably 14% by mass or less.

Furthermore, the compound represented by General Formula (XIII-3) is preferably the compound represented by each of Formulas (50.1) to (50.4), and preferably the compound represented by Formula (50.1) or/and (50.2).

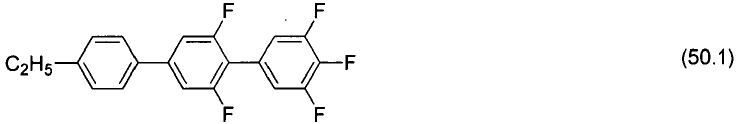

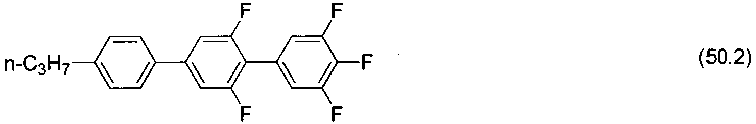

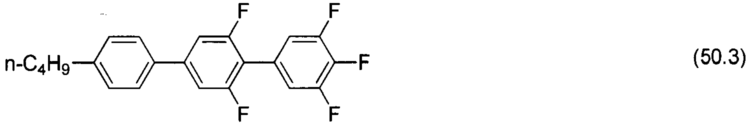

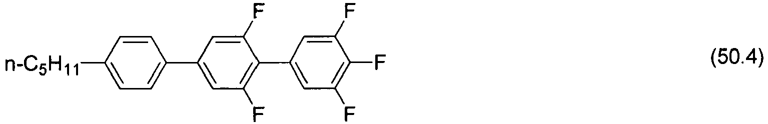

Furthermore, the compound represented by General Formula (M) according to the present disclosure is preferably a compound selected from the group consisting of compounds represented by General Formula (XIV).

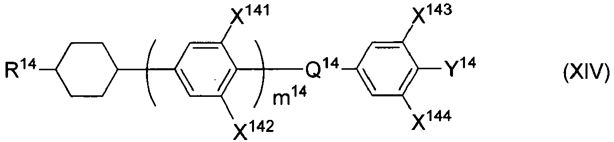

In General Formula (XIV), R¹⁴ represents an alkyl group having 1 to 7 carbon atoms, an alkenyl group having 2 to 7 carbon atoms, or an alkoxy group having 1 to 7 carbon atoms, each of X¹⁴¹ to X¹⁴⁴ independently represents a fluorine atom or a hydrogen atom, Y¹⁴ represents a fluorine atom, a chlorine atom, or -OCF₃, Q¹⁴ represents a single bond, -COO-, or -CF₂O-, and m¹⁴ is 0 or 1.

The types of compound capable of being combined are not limited, and in consideration of solubility at a low temperature, a transition temperature, electrical reliability, or birefringence, a compound is suitably combined with respect to each embodiment. For example, in one embodiment of the present disclosure, one type is used. In another embodiment of the present disclosure, two types are used. In still another embodiment of the present disclosure, three types are used. In still another embodiment of the present disclosure, four types are used. In still another embodiment of the present disclosure, five types are used. In addition, in still another embodiment of the present disclosure, six or more types are used.

The content of the compound represented by General Formula (XIV) has the upper limit value and the lower limit value in each embodiment in consideration of characteristics such as solubility at a low temperature, a transition temperature, electrical reliability, and birefringence. For example, the lower limit value of the content is 3% in one embodiment of the present disclosure, 7% in another embodiment, 8% in still another embodiment, 11% in still another embodiment, 12% in still another embodiment, 16% in still another embodiment, and 18% in still another embodiment, with respect to the total amount of the liquid crystal composition of the present disclosure. In addition, the lower limit value is 19% in still another embodiment. In addition, the lower limit value is 22% in still another embodiment. In addition, the lower limit value is 25% in still another embodiment.

In addition, for example, the upper limit value of the content is 40% in one embodiment of the present disclosure, 35% in another embodiment, 30% in still another embodiment, 25% in still another embodiment, 20% in still another embodiment, and 15% in still another embodiment.

In a case where the liquid crystal composition of the present disclosure is used in a liquid crystal display element having a low driving voltage, it is suitable that the content of the compound represented by General Formula (XIV) is great. In a case where the liquid crystal composition of the present disclosure is used in a liquid crystal display element having a high response speed, it is suitable that the content of the compound represented by General Formula (XIV) is small.

Furthermore, the compound represented by General Formula (XIV) according to the present disclosure is preferably the compound represented by General Formula (XIV-1).

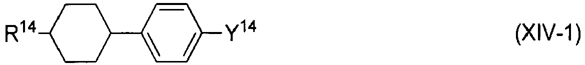

In General Formula (XIV-1), R¹⁴ represents an alkyl group having 1 to 7 carbon atoms, an alkenyl group having 2 to 7 carbon atoms, or an alkoxy group having 1 to 7 carbon atoms, and Y¹⁴ represents a fluorine atom, a chlorine atom, or -OCF₃.

The types of compound capable of being combined are not particularly limited, and in consideration of solubility at a low temperature, a transition temperature, electrical reliability, or birefringence, one type to three types are preferably combined.

Furthermore, the compound represented by General Formula (XIV-1) is preferably the compound represented by General Formula (XIV-1-1).

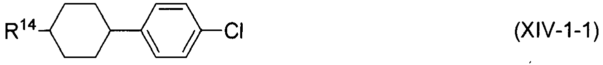

In General Formula (XIV-1), R¹⁴ represents an alkyl group having 1 to 7 carbon atoms, an alkenyl group having 2 to 7 carbon atoms, or an alkoxy group having 1 to 7 carbon atoms.

The content of the compound represented by General Formula (XIV-1) is preferably 2% by mass or greater, more preferably 4% by mass or greater, still more preferably 7% by mass or greater, still more preferably 10% by mass or greater, and particularly preferably 18% by mass or greater, with respect to the total amount of the liquid crystal composition of the present disclosure. In addition, in consideration of solubility at a low temperature, a transition temperature, and electrical reliability, the maximum ratio is preferably 30% by mass or less, more preferably 27% by mass or less, still more preferably 24% by mass or less, and particularly preferably less than 21% by mass.

Furthermore, the compound represented by General Formula (XIV-1-1), specifically, is preferably the compound represented by each of Formulas (51.1) to (51.4), and more preferably contains the compound represented by Formula (51.1).

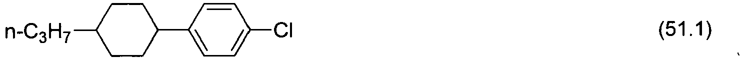

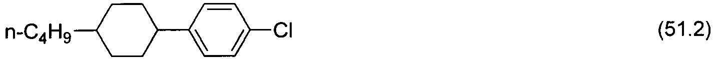

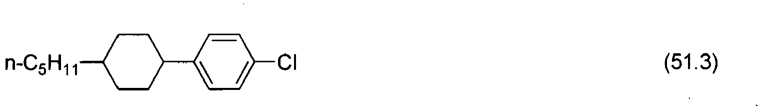

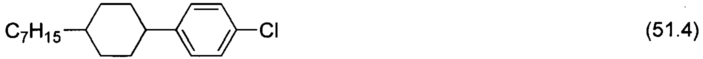

Furthermore, the compound represented by General Formula (XIV-1) is preferably the compound represented by General Formula (XIV-1-2).

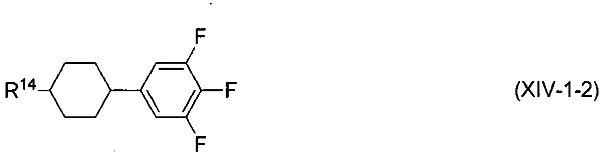

In General Formula (XIV-1-2), R¹⁴ represents an alkyl group having 1 to 7 carbon atoms, an alkenyl group having 2 to 7 carbon atoms, or an alkoxy group having 1 to 7 carbon atoms.

The content of the compound represented by General Formula (XIV-1-2) is preferably 1% by mass or greater, more preferably 3% by mass or greater, still more preferably 5% by mass or greater, and particularly preferably 7% by mass or greater, with respect to the total amount of the liquid crystal composition of the present disclosure. In addition, in consideration of solubility at a low temperature, a transition temperature, and electrical reliability, the maximum ratio is preferably 15% by mass or less, more preferably 13% by mass or less, still more preferably 11% by mass or less, and particularly preferably less than 9% by mass.

Furthermore, the compound represented by General Formula (XIV-1-2), specifically, is preferably the compound represented by each of Formulas (52.1) to (52.4), and among these, preferably contains the compound represented by Formula (52.4).

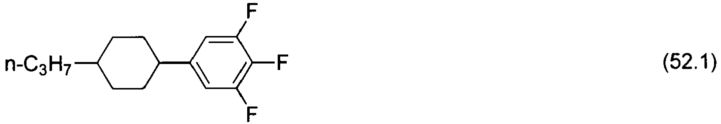

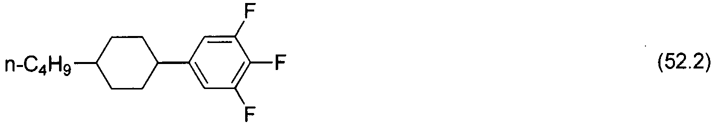

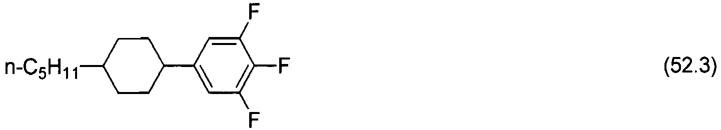

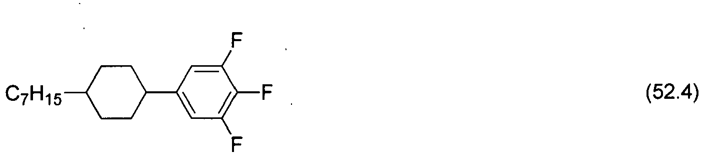

Furthermore, the compound represented by General Formula (XIV) according to the present disclosure is preferably the compound represented by General Formula (XIV-2).

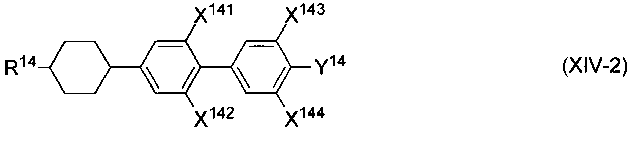

In General Formula (XIV-2), R¹⁴ represents an alkyl group having 1 to 5 carbon atoms, an alkenyl group having 2 to 5 carbon atoms, or an alkoxy group having 1 to 4 carbon atoms, each of X¹⁴¹ to X¹⁴⁴ independently represents a fluorine atom or a hydrogen atom, and Y¹⁴ represents a fluorine atom, a chlorine atom, or -OCF₃.

The types of compound capable of being combined are not limited, and in consideration of solubility at a low temperature, a transition temperature, electrical reliability, or birefringence, a compound is suitably combined with respect to each embodiment. For example, in one embodiment of the present disclosure, one type is used. In another embodiment of the present disclosure, two types are used. In still another embodiment of the present disclosure, three types are used. In still another embodiment of the present disclosure, four types are used. In addition, in still another embodiment of the present disclosure, five or more types are used.

The content of the compound represented by General Formula (XIV-2) has the upper limit value and the lower limit value in each embodiment in consideration of characteristics such as solubility at a low temperature, a transition temperature, electrical reliability, and birefringence. For example, the lower limit value of the content is 3% in one embodiment of the present disclosure, 7% in another embodiment, 8% in still another embodiment, 10% in still another embodiment, 11% in still another embodiment, 12% in still another embodiment, and 18% in still another embodiment, with respect to the total amount of the liquid crystal composition of the present disclosure. In addition, the lower limit value is 19% in still another embodiment. In addition, the lower limit value is 21% in still another embodiment. In addition, the lower limit value is 22% in still another embodiment.

In addition, for example, the upper limit value of the content is 40% in one embodiment of the present disclosure, 35% in another embodiment, 25% in still another embodiment, 20% in still another embodiment, 15% in still another embodiment, and 10% in still another embodiment.

In a case where the liquid crystal composition of the present disclosure is used in a liquid crystal display element having a low driving voltage, it is suitable that the content of the compound represented by General Formula (XIV-2) is great. In a case where the liquid crystal composition of the present disclosure is used in a liquid crystal display element having a high response speed, it is suitable that the content of the compound represented by General Formula (XIV-2) is small.

Furthermore, the compound represented by General Formula (XIV-2) according to the present disclosure is preferably the compound represented by General Formula (XIV-2-1) .

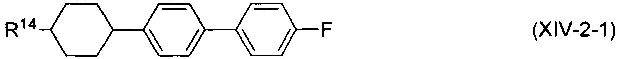

In General Formula (XIV-2-1), R¹⁴ represents an alkyl group having 1 to 5 carbon atoms, an alkenyl group having 2 to 5 carbon atoms, or an alkoxy group having 1 to 4 carbon atoms.

The content of the compound represented by General Formula (XIV-2-1) is preferably 1% by mass or greater, more preferably 3% by mass or greater, still more preferably 5% by mass or greater, and particularly preferably 7% by mass or greater, with respect to the total amount of the liquid crystal composition of the present disclosure. In addition, in consideration of solubility at a low temperature, a transition temperature, and electrical reliability, the maximum ratio is preferably 15% by mass or less, more preferably 13% by mass or less, still more preferably 11% by mass or less, and particularly preferably less than 9% by mass.

Furthermore, the compound represented by General Formula (XIV-2-1), specifically, is preferably the compound represented by each of Formulas (53.1) to (53.4), and among these, preferably contains the compound represented by Formula (53.4).

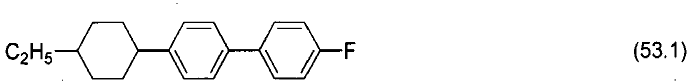

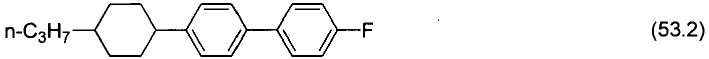

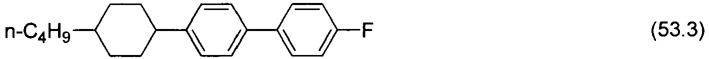

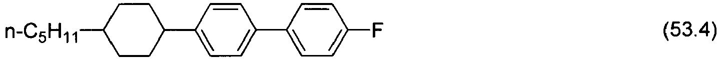

Furthermore, the compound represented by General Formula (XIV-2) is preferably the compound represented by General Formula (XIV-2-2).

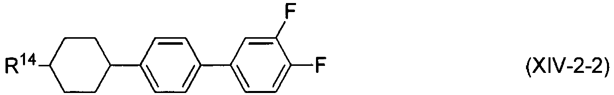

In General Formula (XIV-2-2), R¹⁴ represents an alkyl group having 1 to 5 carbon atoms, an alkenyl group having 2 to 5 carbon atoms, or an alkoxy group having 1 to 4 carbon atoms.

The content of the compound represented by General Formula (XIV-2-2) is preferably 3% by mass or greater, more preferably 6% by mass or greater, still more preferably 9% by mass or greater, and particularly preferably 12% by mass or greater, with respect to the total amount of the liquid crystal composition of the present disclosure. In addition, in consideration of solubility at a low temperature, a transition temperature, and electrical reliability, the maximum ratio is preferably 20% by mass or less, more preferably 17% by mass or less, still more preferably 15% by mass or less, and particularly preferably 14% by mass or less.

Furthermore, the compound represented by General Formula (XIV-2-2), specifically, is preferably the compound represented by each of Formulas (54.1) to (54.4), and among these, preferably contains the compound represented by each of Formulas (54.2) and/or (54.4).

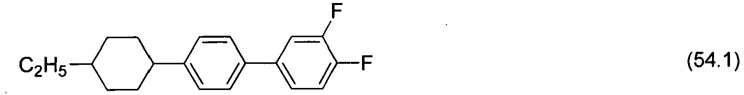

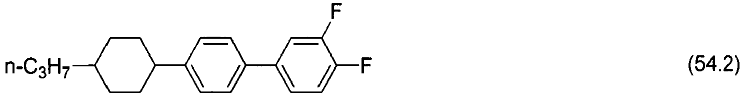

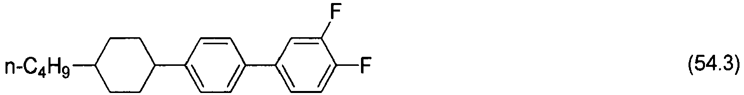

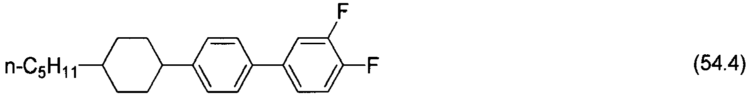

Furthermore, the compound represented by General Formula (XIV-2) is preferably the compound represented by General Formula (XIV-2-3).

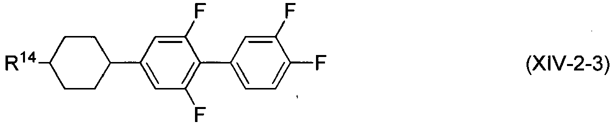

In General Formula (XIV-2-3), R¹⁴ represents an alkyl group having 1 to 5 carbon atoms, an alkenyl group having 2 to 5 carbon atoms, or an alkoxy group having 1 to 4 carbon atoms.

The content of the compound represented by General Formula (XIV-2-3) is preferably 5% by mass or greater, more preferably 9% by mass or greater, and particularly preferably 12% by mass or greater, with respect to the total amount of the liquid crystal composition of the present disclosure. In addition, in consideration of solubility at a low temperature, a transition temperature, and electrical reliability, the maximum ratio is preferably 30% by mass or less, more preferably less than 27% by mass, still more preferably 24% by mass or less, and particularly preferably less than 20% by mass.

Furthermore, the compound represented by General Formula (XIV-2-3), specifically, is preferably the compound represented by each of Formulas (55.1) to (55.4), and among these, preferably contains the compound represented by each of Formulas (55.2) and/or (55.4).

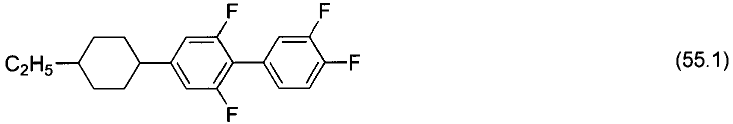

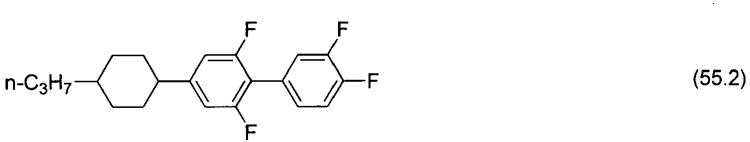

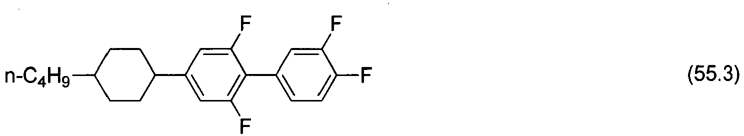

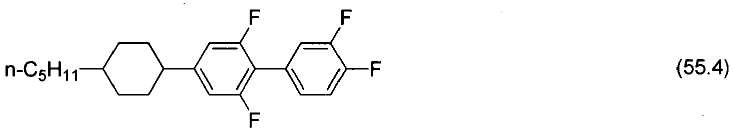

Furthermore, the compound represented by General Formula (XIV-2) is preferably the compound represented by General Formula (XIV-2-4).

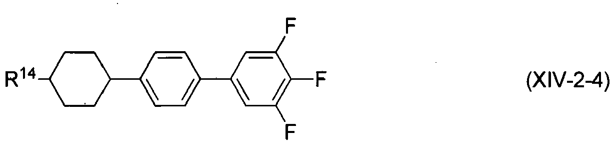

In General Formula (XIV-2-4), R¹⁴ represents an alkyl group having 1 to 5 carbon atoms, an alkenyl group having 2 to 5 carbon atoms, or an alkoxy group having 1 to 4 carbon atoms.

The types of compound capable of being combined are not limited, and in consideration of solubility at a low temperature, a transition temperature, electrical reliability, or birefringence, a compound is suitably combined with respect to each embodiment. For example, in one embodiment of the present disclosure, one type is used. In another embodiment of the present disclosure, two types are used. In addition, in still another embodiment of the present disclosure, three or more types are used.

The content of the compound represented by General Formula (XIV-2-4) has the upper limit value and the lower limit value in each embodiment in consideration of characteristics such as solubility at a low temperature, a transition temperature, electrical reliability, and birefringence. For example, the lower limit value of the content is 2% in one embodiment of the present disclosure, 5% in another embodiment, 8% in still another embodiment, 9% in still another embodiment, 10% in still another embodiment, 18% in still another embodiment, and 21% in still another embodiment, with respect to the total amount of the liquid crystal composition of the present disclosure. In addition, the lower limit value is 22% in still another embodiment. In addition, the lower limit value is 24% in still another embodiment.

In addition, for example, the upper limit value of the content is 35% in one embodiment of the present disclosure, 30% in another embodiment, 25% in still another embodiment, 20% in still another embodiment, 15% in still another embodiment, and 10% in still another embodiment.

In a case where the liquid crystal composition of the present disclosure is used in a liquid crystal display element having a low driving voltage, it is suitable that the content of the compound represented by General Formula (XIV-2-4) is great. In a case where the liquid crystal composition of the present disclosure is used in a liquid crystal display element having a high response speed, it is suitable that the content of the compound represented by General Formula (XIV-2-4) is small.

Furthermore, the compound represented by General Formula (XIV-2-4), specifically, is preferably the compound represented by each of Formulas (56.1),to (56.4), and among these, preferably contains the compound represented by each of Formulas (56.1), (56.2), and (56.4).

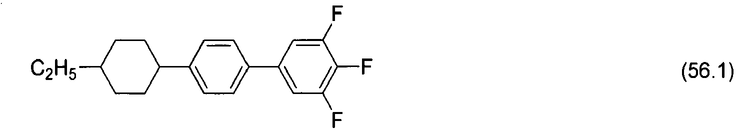

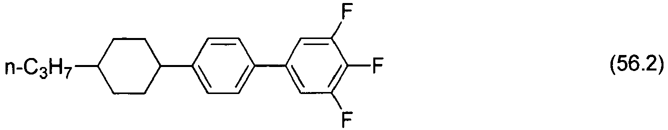

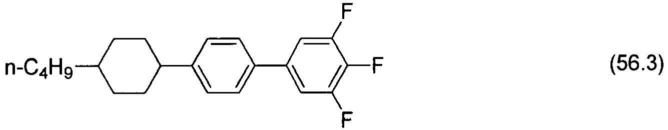

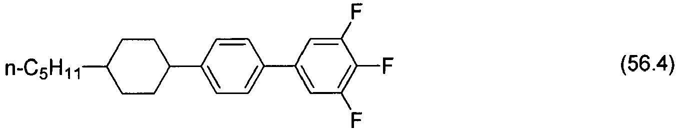

Furthermore, the compound represented by General Formula (XIV-2) is preferably the compound represented by General Formula (XIV-2-5).

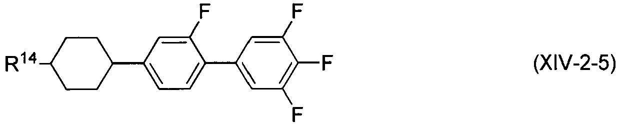

In General Formula (XIV-2-5), R¹⁴ represents an alkyl group having 1 to 5 carbon atoms, an alkenyl group having 2 to 5 carbon atoms, or an alkoxy group having 1 to 4 carbon atoms.

The content of the compound represented by General Formula (XIV-2-5) is preferably 5% by mass or greater, more preferably 10% by mass or greater, and particularly preferably 13% by mass or greater, with respect to the total amount of the liquid crystal composition of the present disclosure. In addition, in consideration of solubility at a low temperature, a transition temperature, and electrical reliability, the maximum ratio is preferably 25% by mass or less, more preferably less than 22% by mass, still more preferably 18% by mass or less, and particularly preferably less than 15% by mass.

Furthermore, the compound represented by General Formula (XIV-2-5) is, specifically, the compound represented by each of Formulas (57.1) to (57.4), and preferably contains the compound represented by Formula (57.1).

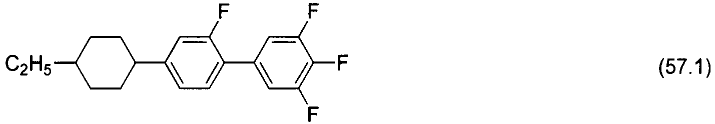

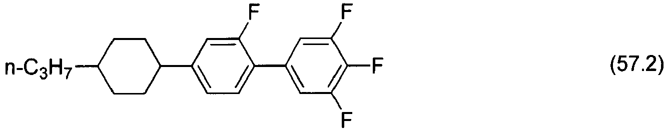

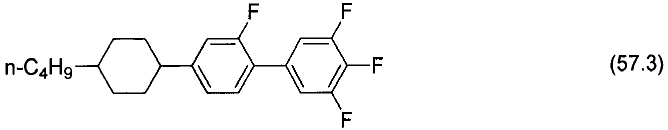

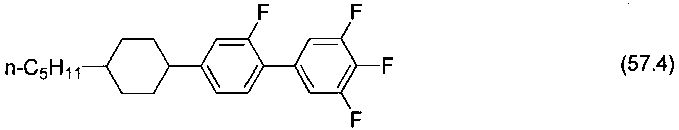

Furthermore, the compound represented by General Formula (XIV-2) is preferably the compound represented by General Formula (XIV-2-6).

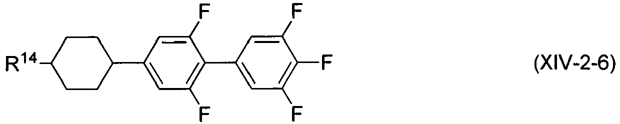

In the formula, R¹⁴ represents an alkyl group having 1 to 5 carbon atoms, an alkenyl group having 2 to 5 carbon atoms, or an alkoxy group having 1 to 4 carbon atoms.

The content of the compound represented by General Formula (XIV-2-6) is preferably 5% by mass or greater, more preferably 10% by mass or greater, and particularly preferably 15% by mass or greater, with respect to the total amount of the liquid crystal composition of the present disclosure. In addition, in consideration of solubility at a low temperature, a transition temperature, and electrical reliability, the maximum ratio is preferably 25% by mass or less, more preferably 22% by mass or less, still more preferably 20% by mass or less, and particularly preferably less than 17% by mass.

Furthermore, the compound represented by General Formula (XIV-2-6), specifically, is preferably the compound represented by each of Formulas (58.1) to (58.4), and among these, preferably contains the compound represented by Formula (58.2).

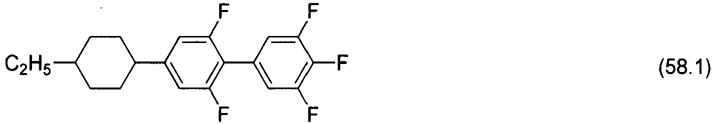

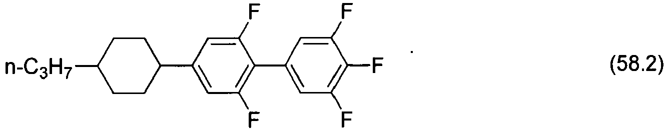

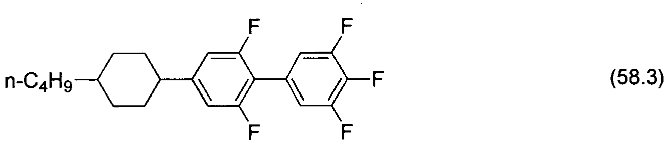

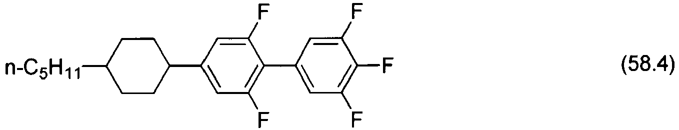

The compound used in the present disclosure does not have a peracid (-CO-OO-) structure in the molecule. In a case where the reliability or the long-term stability of the liquid crystal composition matters, it is preferable not to use a compound having a carbonyl group. In addition, in a case where the stability with respect to UV irradiation matters, it is desirable not to use a compound in which a chlorine atom has been substituted. The compound used in the present disclosure is also preferably only compound in which all the ring structures in the molecule are six-membered rings.

In the liquid crystal composition according to the present invention, as the first component, at least two types are selected from a group consisting of compounds represented by each of the following General Formulas (I-a) and (I-b), and three types are more preferably selected.

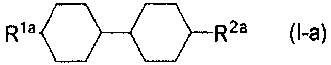

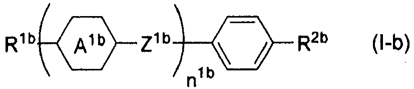

In General Formulas (Ia) and (Ib), R^{1a}, R^{2a}, R^{1b} and R^{2b} independently represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, n^{1b} represents 1 or 2, A^{1b} represents a 1,4-cyclohexylene group, a 1,4-phenylene group, or a tetrahydropyran-2,5-diyl group, and in a case where A^{1b} represents a 1,4-phenylene group, one hydrogen atom in the 1,4-phenylene group may be substituted with a fluorine atom, and Z^{1b} represents a single bond, -OCH₂ -, -OCF₂ -, -CH₂O-, or CF₂O-, and when a plurality of Z^{1b} exist, each of Z^{1b}s is independent.

In addition, at least two types of compounds selected from the group consisting of compounds represented by each of General Formulas (I-a) and (I-b) are contained in 85% to 95% by mass, more preferably contained in 86% to 95% by mass, still more preferably contained in 87% to 95% by mass, still more preferably contained in 88% to 95% by mass, and particularly preferably contained in 89% to 95% by mass, in the entirety of the liquid crystal composition.

In a case where the combination of General Formulas (I-a) and (I-b) occupies 85% to 95% of the total liquid crystal composition, effects of a high speed response are exhibited, and in the case of using in combination with the combination of a second component described below, the compatibility is improved from the viewpoint of a chemical structure or specificity, and the storage stability is improved, and thus, it is possible to suppress and prevent the problem of precipitation of the liquid crystal compound.

The second component according to the present invention is preferably configured of a tetracyclic compound represented by General Formula (X), and in this case, the low temperature stability is significantly improved compared to a case where a tricyclic compound as represented by General Formula (VIII), (IX), (XIII), or (XIV) is included in the composition.

In a more preferable embodiment of the liquid crystal composition according to the present disclosure, 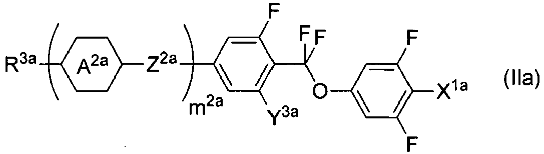 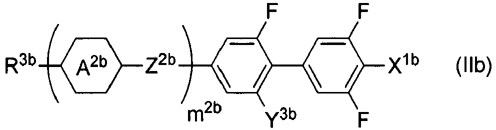 as the second component, at least two types of compounds are preferably selected from the group consisting of compounds represented by each of the following General Formulas (IIa) and (IIb).

In addition, the total amount of at least two types of compounds selected from the group consisting of compounds represented by each of General Formulas (IIa) and (IIb) is preferably contained in 2% to 16% by mass, more preferably contained in 4% to 14% by mass, still more preferably contained in 5% to 12% by mass, still more preferably contained in 6% to 11% by mass, and particularly preferably contained in 7% to 10% by mass, in the entirety of the liquid crystal composition.

In a case where the combination of General Formulas (IIa) and (IIb) occupies 2% to 16% of the total liquid crystal composition, effects in which Δn is improved and drivable Δε is ensured are exhibited, and in the case of using in combination with a suitable combination of a first component, 85% by mass or greater, as the total amount of the first component, is contained, and thus, it is possible to maintain a high speed response. Furthermore, since the combination of General Formula (IIa) or (IIb) and General Formula (I-1) or (I-0) specifically improves the compatibility between the compounds of the components of the liquid crystal composition, it is possible to suppress and prevent the problem of precipitation of the liquid crystal compound by improving the storage stability of the liquid crystal composition.

That is, in the liquid crystal composition according to the present invention, in a case where at least two types of compounds are selected from the group consisting of compounds represented by each of General Formulas (I-1) and (I-0) as the first component and at least two types are selected from the group consisting of compounds represented by each of General Formulas (IIa) and (IIb) as the second component, the problem relating to the low temperature stability that the liquid crystal compound is precipitated and the problem of dropping marks are solved, and the effect of maintaining a high speed response is achieved.

In the liquid crystal composition according to the present invention, in order to manufacture a liquid crystal display element of a PSA mode or a horizontal electric field type PSA mode, a polymerizable compound may be contained. As the polymerizable compound capable of being used, a photopolymerizable monomer which is polymerized by energy rays such as light is exemplified, and as the structure, a polymerizable compound having a liquid crystal skeleton in which a plurality of 6-membered rings such as biphenyl derivatives or terphenyl derivatives is connected is exemplified. In addition, specifically, the bifunctional monomer represented by General Formula (XX) is preferable.

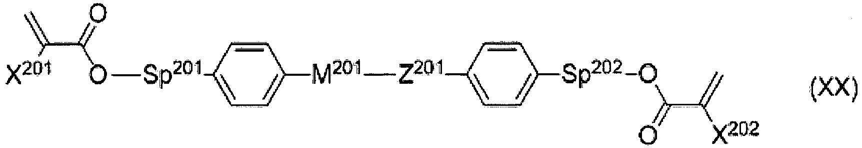

In General Formula (XX), each of X²⁰¹ and X²⁰² independently represents a hydrogen atom or an alkyl group having 1 to 3 carbon atoms (a methyl group, an ethyl group, or a propyl group),
each of Sp²⁰¹ and Sp²⁰² independently represents a single bond, an alkylene group having 1 to 8 carbon atoms, or -O-(CH₂)ₛ-(in the formula, s represents an integer of 2 to 7, and an oxygen atom is bonded to an aromatic ring),

Z²⁰¹ represents -OCH₂-, -CH₂O-, -COO-, -OCO-, -CF₂O-, -OCF₂-, -CH₂CH₂-, -CF₂CF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CY¹=CY²- (in the formula, each of Y¹ and Y² independently represents a fluorine atom or a hydrogen atom), -C=C-, or a single bond,
M²⁰¹ represents a trans-1,4-cyclohexylene group, a single bond, or a 1,4-phenylene group in which any hydrogen atom may be substituted with a fluorine atom, and
in all 1, 4-phenylene groups in General Formula (XX), any hydrogen atom may be substituted with a fluorine atom.

As the preferable form of the polymerizable compound according to the present invention, a diacrylate derivative in which both X²⁰¹ and X²⁰² represent hydrogen atoms and a dimethacrylate derivative in which both X²⁰¹ and X²⁰² have methyl groups are preferable, and a compound in which one of X²⁰¹ and X²⁰² represents a hydrogen atom, and the other represents a methyl group is also preferable. In the polymerization rate of these compounds, diacrylate derivatives are the fastest, diacrylate derivatives are slow, and asymmetric compounds are therebetween. It is possible to use a more preferable embodiment according to the application thereof. In a PSA display element, a dimethacrylate derivative is particularly preferable.

Each of Sp²⁰¹ and Sp²⁰² independently represents a single bond, an alkylene group having 1 to 8 carbon atoms, or -O-(CH₂)ₛ-, and in a PSA display element, at least one of Sp²⁰¹ and Sp²⁰² is preferably a single bond, and compounds in which both Sp²⁰¹ and Sp²⁰² represent single bonds, or an embodiment in which one of Sp²⁰¹ and Sp²⁰² represents a single bond and the other represents an alkylene group having 1 to 8 carbon atoms or -O-(CH₂)ₛ- are preferable. In this case, an alkylene group having 1 to 4 carbon atoms is more preferable, and s is preferably 1 to 4.

Z²⁰¹ is preferably -OCH₂-, -CH₂O-, -COO-, -OCO-, -CF₂O-, -OCF₂-, -CH₂CH₂-, -CF₂CF₂-, or a single bond, more preferably -COO-, -OCO-, or a single bond, and particularly preferably a single bond.

M²⁰¹ represents a 1,4-phenylene group in which any hydrogen atom may be substituted with a fluorine atom, a trans-1,4-cyclohexylene group, or a single bond, and a 1,4-phenylene group in which any hydrogen atom may be substituted with a fluorine atom or a single bond is preferable. In a case where M²⁰¹ represents a ring structure other than a single bond, Z²⁰¹ is preferably a linking group other than a single bond, and in a case where M²⁰¹ is a single bond, Z²⁰¹ is preferably a single bond.

From these points of view, in General formula (XX), as the ring structure between Sp²⁰¹ and Sp²⁰², specifically, the structures of Formulas (XXa-1) to (XXa-5) described below are preferable.

In General Formula (XX), M²⁰¹ represents a single bond, and in a case where the ring structure is formed of two rings, the ring structure preferably represents the following Formulas (XXa-1) to (XXa-5), more preferably represents Formulas (XXa-1) to (XXa-3), and particularly preferably represents Formula (XXa-1).

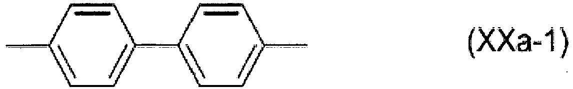

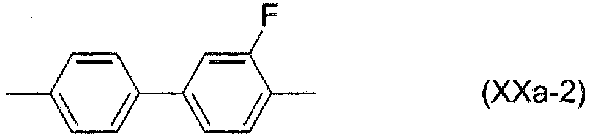

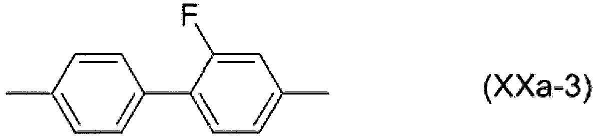

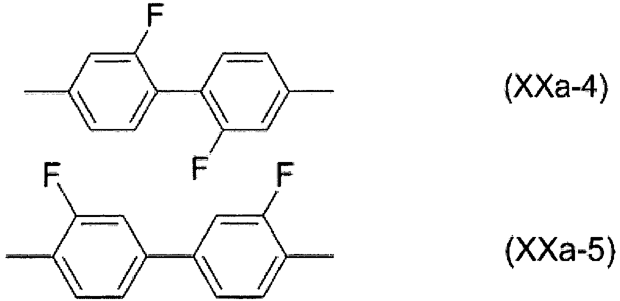

In Formulas (XXa-1) to (XXa-5), both ends in each formula are bonded to Sp²⁰¹ or Sp²⁰².

In polymerizable compound including these skeletons, since a force for restricting the alignment after polymerization is optimal to the PSA type liquid crystal display element, and excellent alignment state is obtained, display unevenness is suppressed, or is not generated.

From the above, the polymerizable compound is preferably at least one compound selected from the group consisting of compounds represented by each of General Formulas (XX-1) to (XX-4), and among these, more preferably the compound represented by General Formula (XX-2).

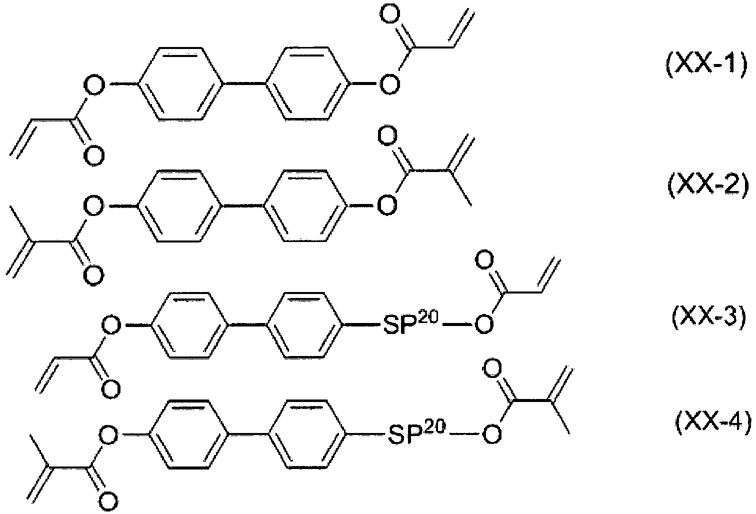

In General Formulas (XX-3) and (XX-4), Sp²⁰ represents an alkylene group having 2 to 5 carbon atoms.

In a case where a polymerizable compound is added to the liquid crystal composition according to the present invention, polymerization proceeds even in a case where the polymerization initiator is not present; however, the polymerization initiator may be contained in order to promote the polymerization. Examples of the polymerization initiator include benzoin ethers, benzophenones, acetophenones, benzyl ketals, and acyl phosphine oxides.

The liquid crystal composition according to the present invention can further contain the compound represented by General Formula (Q) as an antioxidant.

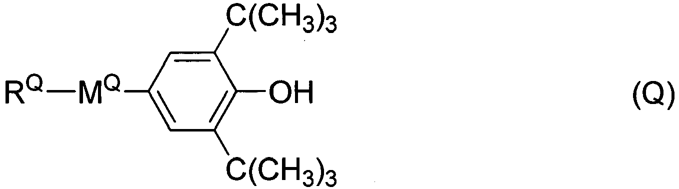

In General Formula (Q), R^{Q} represents an alkyl group or an alkoxy group having 1 to 22 carbon atoms, one or more CH₂ groups in the alkyl group may be substituted with -O-, -CH=CH-, -CO-, -OCO-, -COO-, -C≡C-, -CF₂O-, or -OCF₂- such that the oxygen atom does not become directly adjacent, and M^{Q} represents a trans-1,4-cyclohexylene group, a 1,4-phenylene group, or a single bond.

In General Formula (Q), R^{Q} is preferably an alkyl group or an alkoxy group having 1 to 22 carbon atoms, the alkyl group (which includes an alkyl group in the alkoxy group) may be linear or branched. In addition, R^{Q} represents a linear or branched alkyl group or a linear or branched alkoxy group having 1 to 22 carbon atoms, and one or more CH₂ groups in the alkyl group (which includes the alkyl group in the alkoxy group) may be substituted with -O-, -CH=CH-, -CO-, -OCO-, -COO-, -C=C-, -CF₂O-, or -OCF₂-, such that an oxygen atom does not become directly adjacent. R^{Q} in General Formula (Q) is preferably at least one selected from the group consisting of a linear alkyl group or a linear alkoxy group having 1 to 20 carbon atoms, a linear alkyl group in which one CH₂ group has been substituted with -OCO- or -COO-, a branched alkyl group, a branched alkoxy group, and a branched alkyl group in which one CH₂ group has been substituted with -OCO- or -COO-, and more preferably at least one selected from the group consisting of a linear alkyl group having 1 to 10 carbon atoms, a linear alkyl group in which one CH₂ group has been substituted with -OCO- or -COO-, a branched alkyl group, a branched alkoxy group, and a branched alkyl group in which one CH₂ group has been substituted with -OCO- or -COO-.

M^{Q} represents a trans-1,4-cyclohexylene group, a 1,4-phenylene group, or a single bond, and a trans-1,4-cyclohexylene group or a 1,4-phenylene group is preferable.

The compound represented by General Formula (Q) is preferably at least one compound selected from the group consisting of compounds represented by each of the following General Formulas (Q-a) to (Q-d), and more preferably the compound represented by each of General Formulas (Q-a) and/or (Q-c) .

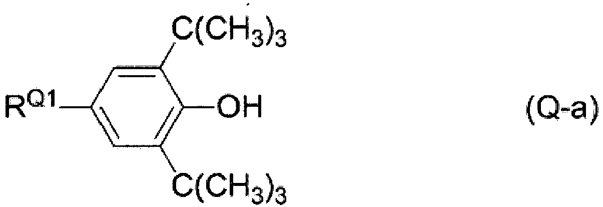

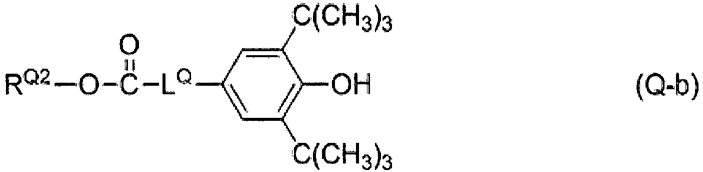

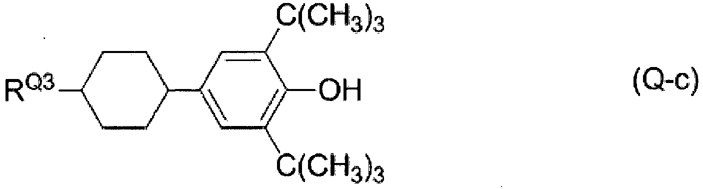

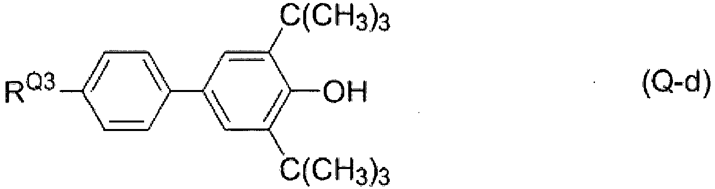

In General Formulas (Q-a) to (Q-d), R^{Q1} is preferably a linear alkyl group or a branched alkyl group having 1 to 10 carbon atoms, R^{Q2} is preferably a linear alkyl group or a branched alkyl group having 1 to 20 carbon atoms, R^{Q3} is preferably a linear alkyl group, a branched alkyl group, a linear alkoxy group, or a branched alkoxy group, having 1 to 8 carbon atoms, and L^{Q} is preferably a linear alkylene group or a branched alkylene group, having 1 to 8 carbon atoms. Among these, the compound represented by General Formula (Q) is more preferably the compound represented by each of the following Formulas (Q-a-1) and/or (Q-c-1).

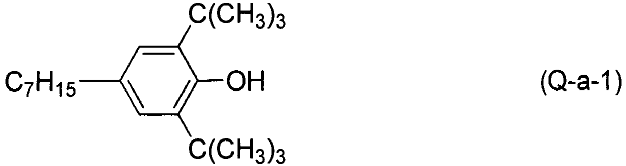

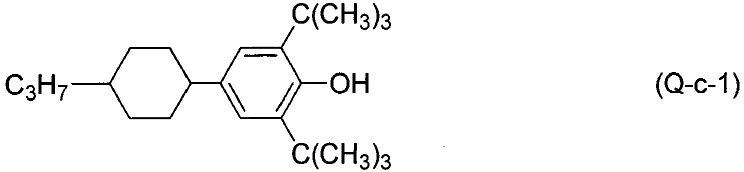

In the liquid crystal composition of the present invention, one type or two types of compounds represented by General Formula (Q) is preferably contained, one to five types is more preferably contained, and the content thereof is preferably 0.001% to 1% by mass, preferably 0.001% to 0.1% by mass, and preferably 0.001% to 0.05% by mass, with respect to the total mass of the liquid crystal composition of the present invention.

### <Liquid Crystal Display Element>

Preferably, the polymerizable compound-containing liquid crystal composition according to the present invention has a liquid crystal alignment capability by polymerizing a polymerizable compound included therein using irradiation with ultraviolet rays, and is preferably used in the liquid crystal display element which controls the light transmission amount using birefringence of the liquid crystal composition. The composition is useful for the liquid crystal display element such as an ECB-LCD, a VA-LCD, a VA-IPS-LCD, a FFS-LCD, or an AM-LCD (active matrix liquid crystal display element), a TN (nematic liquid crystal display element), an STN-LCD (super twisted nematic liquid crystal display element), an OCB-LCD, and an IPS-LCD (in-plane switching liquid crystal display element), is particularly useful for the AM-LCD, and can be used for a transmissive or reflective liquid crystal display element.

As two substrates of the liquid crystal cell used in the liquid crystal display element, a transparent material having flexibility such as glass or plastic can be used, and the other substrate may be an opaque material such as silicon. For example, a transparent substrate having a transparent electrode layer can be obtained by sputtering indium tin oxide (ITO) onto a transparent substrate such as a glass plate.

For example, the color filter can be produced by a pigment dispersion method, a printing method, an electrodeposition method, or a staining method. To describe a method for producing the color filter by the pigment dispersion method as an example, a curable coloring composition for a color filter is coated onto the transparent substrate, a patterning process is performed, and heating or light irradiation is performed for curing. By performing the step on each of red, green, and blue, it is possible to produce a pixel portion for the color filter. In addition, a pixel electrode in which an active element such as a TFT or a thin-film diode is provided may be installed on the substrate.

The above-described substrate is disposed such that the transparent electrode layer becomes the inner side. At that time, the space between substrates may be adjusted through a spacer. At this time, the space is preferably adjusted such that the thickness of the obtained light adjusting layer (liquid crystal layer) is in the range of 1 to 100 µm. The thickness is still more preferably in the range of 1.5 to 10 µm, and in a case where a polarizing plate is used, the product of the refractive index anisotropy Δn of the liquid crystal and the cell thickness G is preferably adjusted such that the contrast is maximum. Moreover, in a case where there are two polarizing plates, a polarization axis of each polarizing plate can be adjusted such that a viewing angle and a contrast are good. In addition, a phase difference film for widening the viewing angle can also be used. For example, as the spacer, a post spacer consisting of glass particles, plastic particles, alumina particles, photoresist material, and the like is exemplified. Thereafter, a sealing agent such as an epoxy-based thermosetting composition is screen-printed onto the substrate in the form provided with the liquid crystal injection port, and the substrates are bonded to each other and are heated, whereby the sealing agent is cured.

As a method of sandwiching the liquid crystal composition (which contains a polymerizable compound, as necessary) between two substrates, a general vacuum injection method or an ODF method can be used. In the vacuum injection method, dropping marks are less likely to be generated, but there is a problem in that injection marks may remain. In the present invention, the display element which is manufactured using the ODF method can be more suitably used. In the liquid crystal display element manufacturing step by the ODF method, a sealing agent of an epoxy-based photo-heat combination curable type is drawn in a closed loop bank shape on any substrate between a back plane or a front plane using a dispenser, and after dropping a predetermined amount of the liquid crystal composition in a degassed state therein, the front plane and the back plane are joined, whereby a liquid crystal display element can be manufactured. Since dropping of the liquid crystal composition in the ODF step can be stably performed, the liquid crystal composition of the present invention can be suitably used.

As a method for polymerizing polymerizable compounds, since in order to obtain a good alignment capability of liquid crystal, an appropriate polymerization rate is desirable, a method in which polymerization is performed by radiating active energy rays such as ultraviolet rays or electron beams singly or sequentially or in combination thereof is preferable. In the case where ultraviolet rays are used, a polarized light source may be used, and a non-polarized light source may be used. In addition, in the case where polymerization is performed in a state where the polymerizable compound-containing liquid crystal composition is sandwiched between two substrates, appropriate transparency with respect to active energy rays is necessarily applied to at least the substrate of the irradiation surface side. In addition, a method in which after polymerizing only a specific portion using a mask during light irradiation, the alignment state of the unpolymerized portion is changed by changing conditions such as an electric field, a magnetic field, or temperature, and irradiation with active energy rays is further performed to polymerize may be used. In particular, when ultraviolet ray exposure is performed, ultraviolet ray exposure is preferably performed while applying an AC electric field to the polymerizable compound-containing liquid crystal composition. The AC electric field to be applied is an alternating current having a frequency preferably in the range of 10 Hz to 10 kHz, and more preferably in the range of 60 Hz to 10 kHz, and voltage is selected according to a desired pretilt angle of the liquid crystal display element. In other words, the pretilt angle of the liquid crystal display element can be controlled by an applied voltage. In the liquid crystal display element of a horizontal electric field type MVA mode, the pretilt angle is preferably controlled to be in the range of 80° to 89.9° from the viewpoint of alignment stability and contrast.

The temperature at the time of the irradiation is preferably in the temperature range in which the liquid crystal state of the liquid crystal composition of the present invention is maintained. The polymerization is preferably performed at a temperature around room temperature, that is, typically, at a temperature in the range of 15 to 35°C. As the lamp and the like for generating ultraviolet rays, a metal halide lamp, a high pressure mercury lamp, an ultrahigh pressure mercury lamp can be used. In addition, as the wavelength of ultraviolet rays with which are irradiated, ultraviolet rays in a wavelength range which is not an absorption wavelength range of the liquid crystal composition are preferably applied, and if necessary, ultraviolet rays are preferably cut to use. The intensity of ultraviolet rays with which are irradiated is preferably in the range of 0.1 mW/cm² to 100 W/cm², and more preferably in the range of 2 mW/cm² to 50 W/cm². The amount of energy of ultraviolet rays with which are irradiated can be suitably adjusted, and is preferably in the range of 10 mJ/cm² to 500 J/cm², and more preferably in the range of 100 mJ/cm² to 200 J/cm². When ultraviolet rays are applied, the intensity may be changed. The application time of ultraviolet rays is suitably selected according to the intensity of ultraviolet rays applied, and is preferably in the range of 10 seconds to 3,600 seconds, and more preferably in the range of 10 seconds to 600 seconds.

The liquid crystal display element using the liquid crystal composition of the present invention is useful one which satisfies both a high speed response and suppression of display defects, and in particular, is useful for the liquid crystal display element for driving active matrix, and can be applied to a liquid crystal display element for a VA mode, a PSVA mode, a PSA mode, an IPS (in-plane switching) mode, a VA-IPS mode, a FSS (fringe field switching) mode, or an ECB mode.

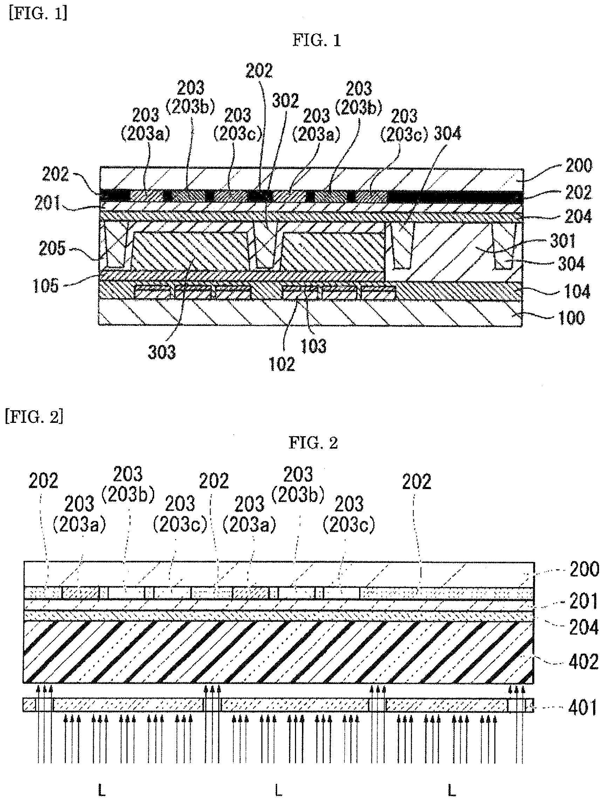

Hereinafter, the preferred embodiments of the liquid crystal display element (one example of a liquid crystal display) according to the present invention will be described in detail with reference to the drawings. Fig. 1 is a sectional view showing a liquid crystal display element having two substrates facing each other, a seal material provided between the substrates, and a liquid crystal sealed in the sealing region surrounded by the seal material.

Specifically, a specific embodiment of the liquid crystal display element having a back plane in which a TFT layer 102 and a pixel electrode 103 are provided on a first substrate 100, and a passivation film 104 and a first alignment film 105 are provided thereon, a front plane in which a black matrix 202, a color filter 203, a planarization film (overcoat layer) 201, and a transparent electrode 204 are provided on a second substrate 200, and a second alignment film 205 is provided thereon, and which is disposed to face the back plane, a seal material 301 provided between the substrates, and a liquid crystal layer 303 sealed in a sealing region surrounded by the seal material, and provided with projections (post spacers) 302 and 304 on the substrate surface with which the seal material 301 comes into contact is shown.

The first substrate or the second substrate is not particularly limited as long as the material is substantially transparent, and glass, ceramics, plastics, and the like can be used. As the plastic substrate, cellulose, cellulose derivatives such as triacetyl cellulose, and diacetyl cellulose, polycycloolefin derivatives, polyesters such as polyethylene terephthalate and polyethylene naphthalate, polyolefins such as polypropylene and polyethylene, polycarbonate, polyvinyl alcohol, polyvinyl chloride, polyvinylidene chloride, polyamide, polyimide, polyimideamide, polystyrene, polyacrylate, polymethyl methacrylate, polyether sulfone, polyarylate, and inorganic-organic composite materials such as a glass fiber-epoxy resin, and a glass fiber-acrylic resin can be used.

Moreover, when a plastic substrate is used, a barrier film is preferably provided. The function of the barrier film is to reduce moisture permeability of the plastic substrate, and to improve the reliability of the electrical characteristics of the liquid crystal display element. As the barrier film, which is not particularly limited as long as the transparency is high and the water vapor permeability is low, respectively, a thin film formed by a vapor deposition or sputtering, chemical vapor deposition method (CVD method) using an inorganic material such as silicon oxide is generally used.

In the present invention, the material of the first substrate or the second substrate may be the same, or different, and it is not particularly limited. If a glass substrate is used, a liquid crystal display element having excellent heat resistance and dimensional stability can be produced, and therefore the glass substrate is preferably used. If a plastic substrate is used, the plastic substrate is suitable for manufacturing by a roll-to-roll method, and reducing weight or making flexible, and therefore the plastic substrate is preferably used. When to impart flatness and heat resistance, it is possible to obtain excellent results by combining the plastic substrate and the glass substrate.

Moreover, in the examples described below, a substrate is used as the material of the first substrate 100 or the second substrate 200.

In the back plane, the TFT layer 102 and the pixel electrode 103 are provided on the first substrate 100. These are manufactured by a general array process. The back plane is obtained by providing the passivation film 104 and the first alignment film 105 thereon.

The passivation film 104 (also referred to as inorganic protective film) is a film to protect the TFT layer, and in general, nitride film (SiNx), oxide film (SiOx), or the like is formed by the chemical vapor deposition (CVD) technique.

In addition, the first alignment film 105 is a film having a function of aligning the liquid crystal, and generally, a polymeric material such as polyimide is used in many cases. As a coating solution, an alignment agent solution consisting of a polymeric material and a solvent is used. Since the alignment film has the possibility of inhibiting the adhesive force with a seal material, the alignment film is pattern-coated in the sealing region. In coating, a printing method such as a flexographic printing method or a liquid droplet discharge method such as an ink-jet is used. After the solvent of the coated alignment agent solution is evaporated by temporary drying, the coated alignment agent solution is cross-linked and cured by baking. Thereafter, the alignment processing is performed in order to give the aligning function.

The alignment processing is performed by a general rubbing method. By rubbing the polymer film formed as described above in one direction using a rubbing cloth made of fibers such as rayon, a liquid crystal alignment capability is generated.

In addition, a photo-alignment method can also be used. The photo-alignment method is a method of generating the alignment capability by irradiating with polarized light on the alignment film including an organic material having photosensitivity, and generation of scratches and dust on the substrate by the rubbing method does not occur. As the organic material in the photo-alignment method, a material containing a dichroic dye is exemplified. As the dichroic dye, a dye having a group generating a photoreaction which is the origin of the liquid crystal alignment capability (hereinafter, referred to as photo-alignment group), such as an alignment induction of molecules or an isomerization reaction by Weigert's effect due to photodichroism (example: an azobenzene group), a dimerization reaction (example: a cinnamoyl group), a photo-crosslinking reaction (example: a benzophenone group), or a photodegradation reaction (example: a polyimide group) can be used. After the solvent of the coated alignment agent solution is evaporated by temporary drying, it is possible to obtain an alignment film having an alignment capability in an arbitrary direction by irradiating with light (polarized light) having an arbitrary polarization.

The front plane is provided with the black matrix 202, the color filter 203, the planarization film 201, the transparent electrode 204, and the second alignment film 205 on the second substrate 200.

For example, the black matrix 202 is produced by the pigment dispersion method. Specifically, a color resin liquid in which a black colorant for forming a black matrix is homogeneously dispersed is coated on the second substrate 200 provided with a barrier film 201 to form a coloration layer. Subsequently, the coloration layer is baked to cure. A photoresist is coated on this, and the resultant product is pre-baked. After the photoresist is exposed through a mask pattern, development is performed to pattern the coloration layer. After this, the photoresist layer is peeled off, and the coloration layer is baked to complete the black matrix 202.

Alternatively, a photoresist type pigment dispersion may be used. In this case, the photoresist type pigment dispersion is coated, the resultant product is pre-baked and exposed through a mask pattern, and development is performed to pattern the coloration layer. After this, the photoresist layer is peeled off, and the coloration layer is baked to complete the black matrix 202.

The color filter 203 is produced by the pigment dispersion method, the electrodeposition method, the printing method, the staining method, or the like. To provide an example of the pigment dispersion method, a color resin liquid in which a pigment (for example, red) is homogeneously dispersed is coated on the second substrate 200, the resultant product is baked to cure, the photoresist is coated on this, and the resultant product is pre-baked. After the photoresist is exposed through a mask pattern, patterning is performed by developing. After this, the photoresist layer is peeled off, and baked again to complete the (red) color filter 203. There is no particular limitation to the order of colors which are produced. In the same manner, a green color filter 203 and a blue color filter 203 are formed.

The transparent electrode 204 is provided on the color filter 203 (the overcoat layer (201) is provided on the color filter 203 for surface planarization, as necessary). The transparent electrode 204 preferably has higher transmittance, and lower electric resistance. The transparent electrode 204 is manufactured by forming an oxide film such as ITO by a sputtering method or the like.

In addition, in order to protect the transparent electrode 204, a passivation film may also be provided on the transparent electrode 204.

The second alignment film 205 is the same as the first alignment film 105 described above.

A specific aspect of the back plane and the front plane used in the present invention has been described above, however, the application is not limited to the specific aspect, and modifications thereof may be made according to the desired liquid crystal display element without restriction.

A shape of the post spacer is not particularly limited, and the horizontal cross-section thereof can be various shapes such as a circular shape and a polygonal shape including a quadrangular shape and the like. In consideration of a misalignment margin during a process, the horizontal cross-section is particularly preferably a circular shape or a regular polygonal shape. In addition, the shape of the projection is preferably a truncated cone shape or a truncated pyramid shape.

The material of the post spacer is not particularly limited as long as it is a seal material, an organic solvent used in the seal material, or a material which is not dissolved in the liquid crystal, and in terms of processing and decreasing weight, a synthetic resin (curable resin) is preferable. On the other hand, by a method by photolithography or a droplet discharge method, the projection can be provided on a surface with which the seal material on a first substrate comes into contact. For this reason, a photocurable resin which is suitable for the method by photolithography or the droplet discharge method is preferably used.

As an example, a case where the post spacer is obtained by the photolithography method will be described. Fig. 2 is a diagram of an exposure processing step using a pattern for producing a post spacer to be formed on a black matrix as a photomask pattern.

A resin solution (not including colorant) for forming the post spacer is coated on the transparent electrode 204 of the front plane. Subsequently, the resin layer 402 is baked to cure. A photoresist is coated on this, and the resultant product is pre-baked. After the photoresist is exposed through a mask pattern 401, development is performed to pattern the resin layer. After this, the photoresist layer is peeled off, and the resin layer is baked to complete the post spacer (302 and 304 in Fig. 1).

The formation position of the post spacer can be determined at a desired position by the mask pattern. Therefore, it is possible to simultaneously make both the inside of the sealing region and the outside of the sealing region (seal material coated portion) of the liquid crystal display element. In addition, the post spacer is preferably formed so as to be positioned on the black matrix to prevent quality degradation of the sealing region. The post spacer produced by the photolithography method as described above is referred to as a column spacer or a photospacer.

As the material of the spacer, a negative type water soluble resin such as a PVA-Stilbazo photosensitive resin, and a mixture of a polyfunctional acryl-based monomer, acrylic acid copolymer, a triazole-based initiator, and the like are used. Alternatively, a color resin in which a colorant is dispersed in a polyimide resin may also be used. It is possible to obtain a spacer formed of a known material according to compatibility with the liquid crystal to be used and the seal material.

In this manner, after providing the post spacer on a surface which is the sealing region on the front plane, the seal material (301 in Fig. 1) is coated on the surface with which the seal material of the back plane comes into contact.

The material of the seal material is not particularly limited, and a curable resin composition in which a polymerization initiator is added to an epoxy-based or acryl-based photocurable, a thermosetting, or a photo-heat combination curable resin is used. In addition, fillers formed of an inorganic substance or an organic substance may be added in order to control moisture permeability, elastic modulus, viscosity, and the like. The shape of these fillers, which is not particularly limited, is spherical, fibrous, or amorphous. Furthermore, a spherical or fibrous gap material having a monodisperse diameter is mixed in order to favorably control a cell gap, or a fibrous material that is likely to be entangled with a projection on the substrate may be mixed in order to further enhance adhesive force with the substrate. The diameter of the fibrous material used at this time is desirably 1/5 to 1/10 or less of the cell gap, and the length of the fibrous material is desirably shorter than the seal coating width.

In addition, the material of the fibrous material is not particularly limited as long as a predetermined shape is obtained, and synthetic fibers such as cellulose, polyamide, and polyester, or inorganic materials such as glass and carbon can be suitably selected as the material.

As the method of coating the seal material, a printing method and a dispensing method are exemplified, and the dispensing method in which a small amount of the seal material is used is desirable. The coating position of the seal material is generally on the black matrix such that the sealing region is not adversely affected. As the seal material coating shape, a closed loop shape is used in order to form a liquid crystal dropping region of a next step (such that a liquid crystal is not leaked).

A liquid crystal is dropped to the closed loop shape (sealing region) of the front plane coated with the seal material. In general, a dispenser is used. The amount of liquid crystal to be dropped is basically the same amount of the volume obtained by multiplying a height of the post spacer and a seal coating area in order to match the amount of liquid crystal to be dropped to the liquid crystal cell volume. However, in order to optimize a liquid crystal leakage and display characteristics in the cell bonding step, the amount of liquid crystal to be dropped may be suitably adjusted, or the liquid crystal dropping position may be dispersed.

Next, the back plane is bonded to the front plane on which the seal material is coated and a liquid crystal is dropped. Specifically, the front plane and the back plane are adhered to a stage having a mechanism for adhering the substrate as an electrostatic chuck, and the second alignment film of the front plane and the first alignment film of the back plane are disposed to face each other at a position (distance) with which the seal material and the other substrate do not come into contact. In this state, the inside of the system is decompressed. After compression ends, while checking the bonding position of the front plane and the back plane, the positions of both substrates are adjusted (alignment operation). After adjustment of the bonding position ends, the substrate is caused to approach a position where the seal material on the front plane and the back plane come into contact with each other. In this state, an inert gas is introduced into the inside of the system, and the pressure of the inside of the system is slowly reduced to return to atmospheric pressure. At this time, the front plane and the back plane are compressed by atmospheric pressure, and the cell gap is formed at a position of height of the post spacer. In this state, the seal material is irradiated with ultraviolet rays to be cured, whereby a liquid crystal cell is formed. Thereafter, in some cases, a heating step is added to promote curing of the seal material. In order to enhance the adhesive force or improve the reliability of electrical characteristics of the seal material, a heating step is added in many cases.

Hereinafter, the more preferable embodiments of the liquid crystal display element of the present invention will be described.

A second embodiment of the liquid crystal display element according to the present invention is a liquid crystal display element in which a first substrate having an electrode layer including a first alignment layer and a thin film transistor on the surface and a second substrate having a second alignment layer on the surface are disposed such that the alignment layers face each other with a gap, and the gap between the first substrate and the second substrate is filled with a liquid crystal layer including a liquid crystal composition, and an electrode layer including the thin film transistor is provided with a plurality of gate wirings and data wirings disposed in a mesh shape, a thin film transistor provided at each intersection between the data wirings and the gate wirings, a pixel electrode connected to the thin film transistor, and a common electrode provided on the first substrate being separated from the pixel electrode. In addition, the first alignment layer and the second alignment layer provided in proximity to the liquid crystal layer are preferably alignment films which induce a homogeneous alignment with respect to the liquid crystal composition.

That is, the liquid crystal display element preferably has a configuration in which a second polarizing plate, a second substrate, an electrode layer (or also referred to as a thin film transistor layer) including a thin film transistor, an alignment film, a liquid crystal layer including a liquid crystal composition, an alignment film, a color filter, a first substrate, and a first polarizing plate are sequentially stacked.

By providing a common electrode and a pixel electrode on the same substrate (or an electrode layer) with a gap, the electric field (E) generated between the common electrode and the pixel electrode can have a planar direction component. Therefore, for example, in a case where an alignment film which induces a homogeneous alignment with respect to the liquid crystal composition is used in the alignment layer, it is possible to provide an element in which before a voltage is applied between the common electrode and the pixel electrode, the liquid crystal molecules arranged in the surface direction which is the alignment direction of the alignment film blocks light, and when a voltage is applied, the liquid crystal molecules are rotated horizontally by the electric field (E) applied in the planar direction and arranged along the electric field direction, and due to this, light is blocked.

In addition, the form of the liquid crystal display element according to the present invention may be a so-called color filter-on-array (COA), and a color filter may be provided between the electrode layer including a thin film transistor and the liquid crystal layer, or a color filter may be provided between the electrode layer including the thin film transistor and the second substrate.

Moreover, "on a substrate" in the present specification also includes a so-called state of being supported by a substrate, that is, a state of not only coming into direct contact with but also coming into indirect contact with a substrate.

Another more preferable form (FFS) of the second embodiment of the liquid crystal display composition according to the present invention is a liquid crystal display element in which a first substrate having an electrode layer including a first alignment layer and a thin film transistor on the surface and a second substrate having a second alignment layer on the surface are disposed such that the alignment layers face each other with a gap, and the gap between the first substrate and the second substrate is filled with a liquid crystal layer including a liquid crystal composition, and an electrode layer including the thin film transistor is preferably provided with a plurality of gate wirings and data wirings disposed in a mesh shape, a thin film transistor provided at each intersection between the data wirings and the gate wirings, a pixel electrode connected to the thin film transistor, and common electrodes provided side by side together with the pixel electrode on the first substrate being apart therefrom, and the shortest distance d between the common electrode and the pixel electrode which are adjacent is preferably shorter than the shortest distance G between the alignment layers.

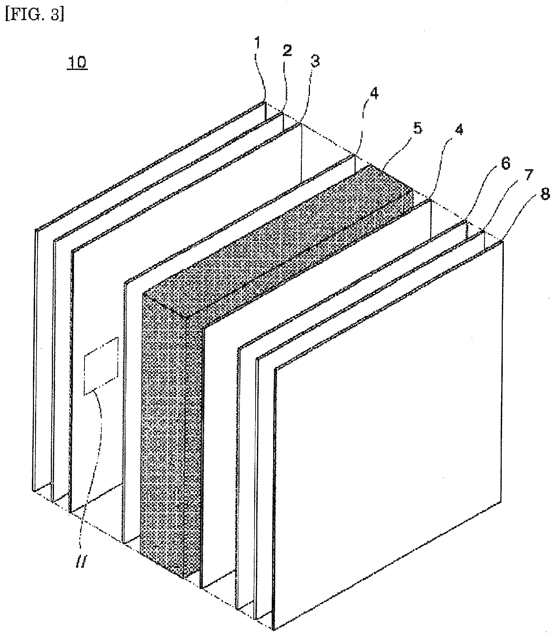

Moreover, in the present specification, a liquid crystal display element under the condition that the shortest distance d between the common electrode and the pixel electrode is longer than the shortest distance G between the alignment layers is called a liquid crystal display element of the IPS mode, and an element under the condition that the shortest distance d between the common electrode and the pixel electrode which are adjacent is shorter than the shortest distance G between the alignment layers is called FFS. Therefore, since it is only the condition of the FFS mode that the shortest distance d between the common electrode and the pixel electrode which are adjacent is shorter than the shortest distance G between the alignment layers, There is no limitation to the positional relationship in the thickness direction between the surface of the common electrode and the surface of the pixel electrode. For that reason, as the liquid crystal display element of the FSS mode according to the present invention, as shown in Figs. 3 to 9, the pixel electrode may be provided on the liquid crystal layer side compared to the common electrode, or the pixel electrode and the common electrode may be provided on the same plane.

The liquid crystal composition according to the present invention is preferably used, in particular, in a liquid crystal display element of the FFS driving method (FFS-LCD) from the viewpoint of a high speed response and reduction of burn-in.

One example of a more preferable embodiment of the second embodiment according to the present invention will be described below using Figs. 3 to 7. Fig. 3 is an exploded perspective view schematically showing a structure of one embodiment of a liquid crystal display element, and is a liquid crystal display element of the so-called FFS mode. The liquid crystal display element 10 according to the present invention preferably has a configuration in which a second polarizing plate 8, a second substrate 7, an electrode layer (or also referred to as a thin film transistor layer) 3 including a thin film transistor, an alignment film 4, a liquid crystal layer 5 including a liquid crystal composition, the alignment film 4, a color filter 6, a first substrate 2, and a first polarizing plate are sequentially stacked. As shown in Fig. 3, the second substrate 7 and the first substrate 2 may be sandwiched between a pair of polarizing plates 1 and 8. In Fig. 3, the color filter 6 is provided between the second substrate 7 and the alignment film 4. Furthermore, a pair of alignment films 4 which are adjacent to the liquid crystal layer 5 according to the present invention and come into direct contact with the liquid crystal composition configuring the liquid crystal layer 5 may be formed on the (transparent) electrode (layer) 3.

Another suitable form of the liquid crystal display element 10 according to the present invention may be a so-called color filter-on-array (COA), and the color filter 6 may be provided between the thin film transistor layer 3 and the liquid crystal layer 5, or the color filter 6 may be provided between the thin film transistor layer 3 and the first substrate 2.

In the liquid crystal display element of the FFS mode, a fringe electric field is used, and in a case where the shortest distance d between the common electrode and the pixel electrode which are adjacent is shorter than the shortest distance G between the alignment layers, a fringe electric field is formed between the common electrode and the pixel electrode, and it is possible to efficiently use the alignment of the horizontal direction and the vertical direction of the liquid crystal molecules. That is, in the case of a liquid crystal display element of the FFS mode, it is possible to use a horizontal electric field formed in the vertical direction with respect to the line of the pixel electrode 21 that forms a comb-tooth shape and a parabolic electric field.

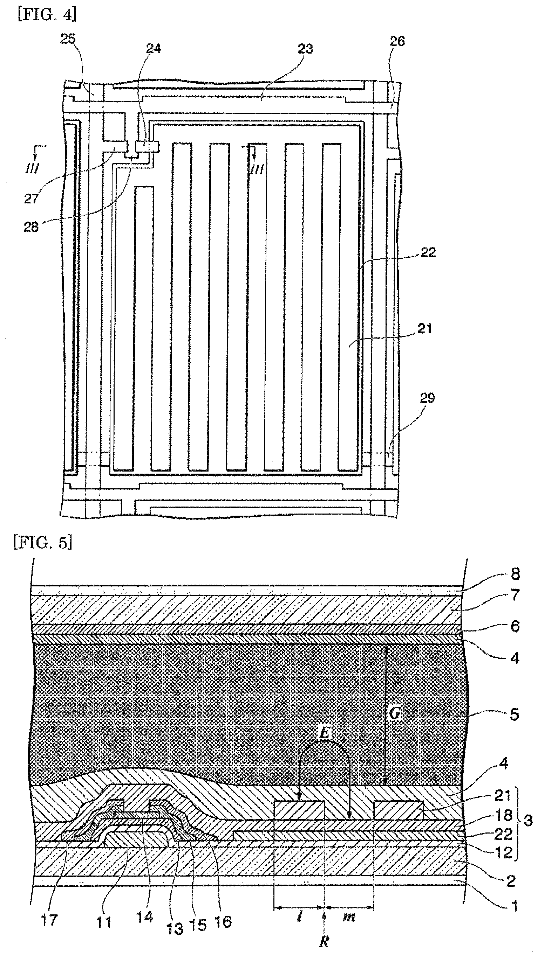

Fig. 4 is an enlarged plan view of a region II of the electrode layers 3 (or also referred to as the thin film transistor layer 3) including the thin film transistor formed on the substrate in Fig. 3. In the vicinity of the intersection at which a gate wiring 26 and a data wiring 25 intersect each other, a thin film transistor 20 including a source electrode 27, a drain electrode 24, and a gate electrode 28 is provided in connection with the pixel electrode 21 as a switching element for supplying a display signal to the pixel electrode 21. In Fig. 4, as an example, a configuration in which a flat plate shaped common electrode 22 is formed on one surface through an insulating layer (not shown) on the back surface of the comb-tooth shaped pixel electrode 21 is shown. In addition, the surface of the pixel electrode 21 may be covered with a protective insulating film and an alignment film layer. In the region surrounded by the plurality of gate wirings 26 and the plurality of data wirings 25, a storage capacitor 23 for storing a display signal supplied through the data wiring 25 may be provided. Furthermore, a common line 29 is provided in parallel with the gate wiring 26. The common line 29 is connected to the common electrode 22 for supplying a common signal to the common electrode 22.

Fig. 5 is one example of a sectional view obtained by cutting the liquid crystal display element in the III-III line direction in Fig. 4. The first substrate 2 in which an alignment layer 4 and the electrode layer 3 including the thin film transistor 20 (11, 12, 13, 14, 15, 16, and 17) are formed on the surface and the second substrate 7 in which the alignment layer 4 is formed on the surface are disposed such that the alignment layers face each other with a predetermined interval G, and the liquid crystal layer 5 including a liquid crystal composition is filled in this space. The gate insulating film 12 is formed on a part of the surface of the first substrate 2, the common electrode 22 is formed on a part of the surface of the gate insulating film 12, and an insulating film 18 which covers the common electrode 22 and the thin film transistor 20 is formed. In addition, the pixel electrode 21 is provided on the insulating film 18, and the pixel electrode 21 is in contact with the liquid crystal layer 5 through the alignment layer 4. Therefore, the minimum distance d between the pixel electrode and the common electrode can be adjusted as the (average) film thickness of the gate insulating film 12. In other words, in the embodiment of Fig. 5, the distance between the common electrode and the pixel electrode in the horizontal direction on the substrate becomes 0. It is preferable that an electrode width 1 of the comb-tooth shaped portion of the pixel electrode 21 and the gap width m of the comb-tooth shaped portion of the pixel electrode 21 are formed in a width of an extent that all the liquid crystal molecules in the liquid crystal layer 5 can be driven by the electric field generated.

As shown in Figs. 3 to 7, in the case of a liquid crystal display element of the FFS mode under the condition that the shortest distance d between the common electrode and the pixel electrode which are adjacent is shorter than the shortest distance G between the alignment layers, when a voltage is applied to the liquid crystal molecules of which the long axis direction is disposed to be parallel to the alignment direction of the alignment layer, an equipotential line of the parabolic electric field between the pixel electrode 21 and the common electrode 22 is formed to the upper portion of the pixel electrode 21 and the common electrode 22, and the liquid crystal molecules in the liquid crystal layer 5 exhibit an action as a switching element by rotating in the liquid crystal layer 5 along the formed electric field. In more detail, for example, in a case where an alignment film which induces a homogeneous alignment with respect to the liquid crystal composition is used in the alignment layer, before a voltage is applied between the common electrode and the pixel electrode, the liquid crystal molecules arranged in the surface direction which is the alignment direction of the alignment film block light, and when a voltage is applied, the electric field of the planar direction component due to the fact that the common electrode and the pixel electrode are provided on the same substrate (or an electrode layer) with a gap and the electric field (fringe electric field) of the vertical direction component derived from the edge of these electrodes generated due to the fact that the shortest distance d between the common electrode and the pixel electrode which are adjacent is shorter than the shortest distance G between the alignment layers are generated, and thus, even the liquid crystal molecules having a low dielectric anisotropy can be driven. Therefore, since the characteristics of the liquid crystal composition itself can cause the amount of the compound having high dielectric anisotropy (Δε) to be minimized, a large amount of compound having low viscosity can be contained in the liquid crystal composition itself.

In addition, also regarding problems relating to the low temperature stability such as precipitation of the liquid crystal compound occurred in a case where a large amount of compound having low viscosity is contained as the liquid crystal composition according to the present disclosure, such problems can be solved by adopting a combination of General Formulas (M) and (A), more preferably, a combination of General Formulas (1-1), (I-0), and (IIa), and thus, in a case where the liquid crystal composition according to the present disclosure is applied to FFS, it is possible to exhibit the characteristics thereof at the maximum.

Since liquid crystal molecules having a relatively low dielectric anisotropy Δε of about 1.5 to 3.5 are used in the liquid crystal composition according to the present invention, the long axis direction of the liquid crystal molecules is arranged along the electric field direction generated, but since the distance between the electrodes is short compared to the IPS mode, from the viewpoint of being capable of low voltage driving, even liquid crystal molecules having a relatively low dielectric anisotropy Δε of about 1.5 to 3.5 can be driven. Therefore, it is possible to obtain excellent characteristics compared to a liquid crystal display element of a driving method other than the FFS mode in which the liquid crystal molecules having a large dielectric anisotropy are used.

The configuration (FFS) of still another more preferable form of the second embodiment of the liquid crystal display composition according to the present invention is a liquid crystal display element in which a first substrate having an electrode layer including a first alignment layer and a thin film transistor on the surface and a second substrate having a second alignment layer on the surface are disposed such that the alignment layers face each other with a gap, and the gap between the first substrate and the second substrate is filled with a liquid crystal layer including a liquid crystal composition, and an electrode layer including the thin film transistor is preferably provided with a common electrode, a plurality of gate wirings and data wirings disposed in a mesh shape, a thin film transistor provided at each intersection between the data wirings and the gate wirings, and a pixel electrode connected to the thin film transistor, and the pixel electrode is preferably provided to protrude to the second substrate side compared to the common electrode. In addition, the first alignment layer and the second alignment layer provided in proximity to the liquid crystal layer are preferably alignment films which induce a homogeneous alignment with respect to the liquid crystal composition.

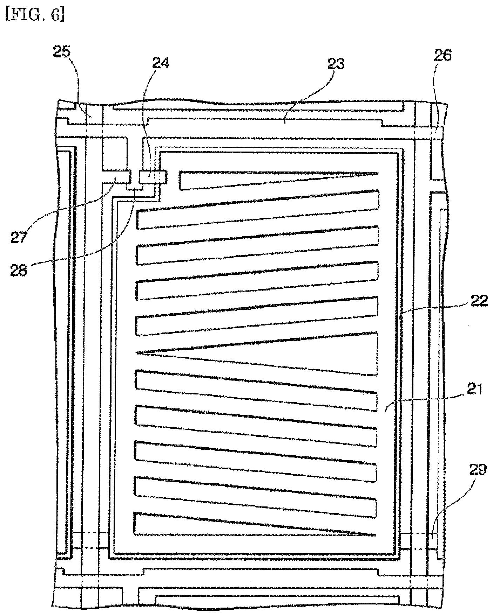

Fig. 6 is another form of an enlarged plan view of the region II of the electrode layers 3 (or also referred to as the thin film transistor layer 3) including the thin film transistor formed on the substrate in Fig. 3. In the vicinity of the intersection at which a gate wiring 26 and a data wiring 25 intersect each other, a thin film transistor 20 including a source electrode 27, a drain electrode 24, and a gate electrode 28 is provided in connection with the pixel electrode 21 as a switching element for supplying a display signal to the pixel electrode 21. In addition, the pixel electrode 21 may have a structure in which is hollowed out in at least one notch portion, and one example thereof is shown in Fig. 6. The pixel electrode 21 has a shape in which the central portion and both ends of a square flat plate body are hollowed out in a triangular notch portion and the remaining region is hollowed out in eight rectangular notch portions, and the common electrode 22 is a comb-tooth body (not shown). In addition, the surface of the pixel electrode may be covered with a protective insulating film and an alignment film layer. In the region surrounded by the plurality of gate wirings 25 and the plurality of data wirings 24, a storage capacitor 23 for storing a display signal supplied through the data wiring 24 may be provided. Moreover, the shape and the number of the notch portions are not particularly limited.

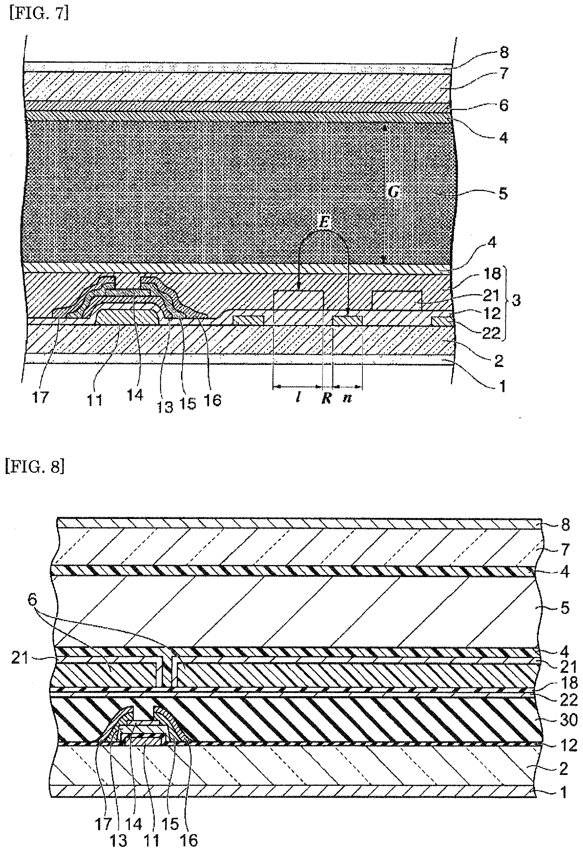

Fig. 7 is one example of another form of a sectional view obtained by cutting the liquid crystal display element at the same position in the III-III direction as Fig. 4, in Fig. 6. That is, as the difference from the structure of the liquid crystal display element in Fig. 5, in the liquid crystal display element shown in Fig. 5, the common electrode is a flat plate body, and the pixel electrode is a comb-tooth body. On the other hand, as described above, in the liquid crystal display element shown in Fig. 7, the pixel electrode 21 has a shape in which the central portion and both ends of a square flat plate body are hollowed out in a triangular notch portion and the remaining region is hollowed out in eight rectangular notch portions, and the common electrode has a structure of a comb-tooth body. Therefore, the minimum distance d between the pixel electrode and the common electrode is an (average) film thickness of the gate insulating film 12 or greater and less than the distance G between the alignment layers. In Fig. 7, the common electrode has a structure of the comb-tooth body, but the common electrode may be a flat plate body also in this embodiment. In any case, the liquid crystal display element of the FFS mode according to the present invention only needs to satisfy the condition that the shortest distance d between the common electrode and the pixel electrode which are adjacent is shorter than the shortest distance G between the alignment layers. Furthermore, in the configuration of the liquid crystal display element shown in Fig. 7, the pixel electrode 21 is covered with the protective film 18, but, in the configuration of the liquid crystal display element shown in Fig. 5, the pixel electrode 21 is covered with the alignment layer 4. In the present invention, the pixel electrode may be covered with any of the protective film or the alignment film.

In Fig. 7, a polarizing plate is formed on one surface of the first substrate 2, the gate insulating film 12 which covers the comb-tooth shaped common electrode 22 formed on a part of the other surface is formed, the pixel electrode 21 is formed on a part of the surface of the gate insulating film 12, and the insulating film 18 which covers the pixel electrode 21 and the thin film transistor 20 is formed. In addition, the alignment layer 4, the liquid crystal layer 5, the alignment layer 4, the color filter 6, the second substrate 7, and the polarizing plate 8 are stacked on the insulating film 18. Therefore, the minimum distance d between the pixel electrode and the common electrode can be adjusted by both electrode positions, the electrode width 1 of the comb-tooth shaped portion of the pixel electrode 21, or the gap width m of the comb-tooth shaped portion of the pixel electrode 21.

As shown in Fig. 7, in a case where the pixel electrode protrudes to the second substrate side compared to the common electrode and both are provided in parallel on the first substrate, the electric field in the planar direction component is formed between the common electrode and the pixel electrode, and the heights of the surface of the pixel electrode and the surface of the common electrode in the thickness direction are different, and thus, the electric field (E) in the thickness direction component can also be applied at the same time.

Moreover, in the liquid crystal display element of the FFS mode, a fringe electric field is used, and the liquid crystal display element is not particularly limited as long as it is under the condition that the shortest distance d between the common electrode and the pixel electrode which are adjacent is shorter than the shortest distance G between the alignment layers, and thus, for example, the liquid crystal display element may have a configuration in which a plurality of teeth portions of the comb-tooth shaped pixel electrode and a plurality of teeth portions of the comb-tooth shaped common electrode are provided on a substrate in an engaged state with each other with a gap. In this case, if the distance between the teeth portion of the common electrode and the teeth portion of the pixel electrode is shorter than the shortest distance G between the alignment layers, the fringe electric field can be used.

In a case where the composition and the liquid crystal composition of the present invention are used in a liquid crystal display element of the FFS mode, from the viewpoint of low Δε of the liquid crystal composition used, effects of a high speed response and reduction of burn-in can be exhibited.

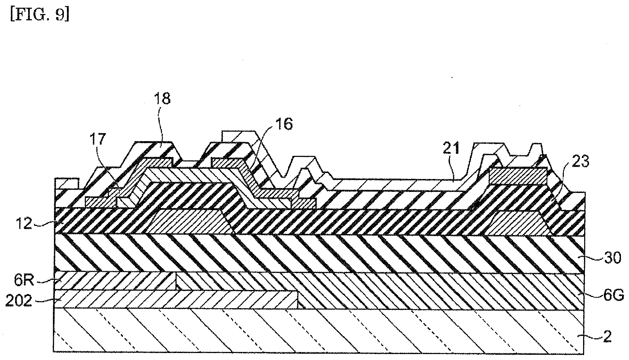

In the configuration of a third embodiment according to the present invention, a color filter 6 is preferably formed on the same substrate side as the first substrate on which the electrode layer 3 including a thin film transistor is formed. The form is generally called a color filter-on-array (COA) or the like. Specific configuration thereof is described below using Figs. 8 and 9. Fig. 8 is another form of a sectional view obtained by cutting the liquid crystal display element in the III-III line direction in Fig. 4. In the configuration of the liquid crystal composition, the first substrate 2 in which the alignment layer 4, the thin film transistor 20 (11, 13, 15, 16, and 17), the color filter 6, and the pixel electrode 21 are formed on the surface and the second substrate 7 in which the alignment layer 4 and the common electrode 22 are formed on the surface are disposed such that the alignment layers face each other with a gap, and the liquid crystal layer 5 including a liquid crystal composition is filled in this space. In addition, the thin film transistor 20 or the gate insulating film 12 is formed on a part of the surface of the first substrate 2, a buffer layer 30 which is also a flat film is formed to cover the thin film transistor 20, and the color filter 6, the pixel electrode 21, and the alignment layer 4 are stacked on the insulating layer 30 in this order. Therefore, the color filter 6 is not present on the second substrate 7 unlike Fig. 5.

In addition, the liquid crystal display element has a rectangular display region R1 positioned at the central portion and a frame shaped non-display region R2 positioned along the display region peripheral portion, and in the display region R1, a red, green, or blue color filter is formed. In more detail, the peripheral portion of the color filter is disposed to overlap the signal lines (a data wiring, a gate wiring, and the like).

The plurality of pixel electrodes 21 formed of a transparent conductive film such as ITO (indium tin oxide) or the like is provided on the color filter. Each pixel electrode 21 is connected to the corresponding thin film transistor through the insulating film 18 and through holes formed in each coloration layer (not shown). In more detail, the pixel electrode 21 is connected to the thin film transistor through the contact electrode described above. A plurality of post spacers (not shown) or the like may be arranged on the pixel electrode 21. The alignment film 4 is formed on the color filter and the pixel electrode 21.

Fig. 9 is a view showing a color filter-on-array having a form different from Fig. 8, and a view showing enlarged portions of the thin film transistor 20 and the substrate 2 in Fig. 8. Fig. 8 shows a configuration in which the color filter is present on the liquid crystal layer side compared to the thin film transistor, but the embodiment of Fig. 9 has a configuration in which the thin film transistor is present on the liquid crystal layer side compared to the color filter, and the thin film transistor and the color filter are bonded through a buffer layer.

### Examples

Hereinafter, the present invention will be described in more detail with examples, and the present invention is not limited to the examples. In addition, "%"in the compositions of the following examples and comparative examples means "% by mass".

In the examples, the measured characteristics are as follows.
Tni: nematic phase-isotropic liquid phase transition temperature (°C)
Δn: refractive index anisotropy at 295K (another name: birefringence)
Δε: dielectric anisotropy at 295K
η: viscosity (mPa·s) at 295K
γ1: rotational viscosity (mPa·s) at 295K
VHR: voltage holding ratio (%) at 313K under the conditions of a frequency of 60 Hz and an applied voltage of 5 V
Burn-in: after displaying a predetermined fixed pattern in the display area for 1440 hours, at the time when the full screen was uniformly displayed, the afterimage level of the fixed pattern was visually inspected, the evaluation of the burn-in on the liquid crystal display element was performed on a scale of four stages described below.

A Afterimage was not observed
B Afterimage was very slightly observed, however it was an acceptable level
C Afterimage was observed, and it was an unacceptable level
D Afterimage was observed, and it was a very severe level Volatility/manufacturing device contamination:
   volatility evaluation of a liquid crystal material was performed by observing the operating state of a vacuum agitation defoaming mixer while illuminating using a stroboscope and by visually observing foaming of the liquid crystal material. Specifically, 0.8 kg of the liquid crystal composition was put into a dedicated container of a vacuum agitation defoaming mixer having a capacity of 2.0 L, the vacuum agitation defoaming mixer was operated under the conditions of degassing of 4 kPa, an revolution speed of 15 S⁻¹, and a rotation speed 7.5 S⁻¹, and according to the time until foaming began, evaluation was performed on a scale of four stages described below.

A The time until foaming began was 3 minutes or longer. The possibility of device contamination due to volatilization was low.
B The time until foaming began was 1 minute or longer and less than 3 minutes. There was concern of slight device contamination due to volatilization.
C The time until foaming began was 30 seconds or longer and less than 1 minute. Device contamination due to volatilization occurred.
D The time until foaming began was within 30 seconds. There was concern of significant device contamination due to volatilization.

Process compatibility:
in ODF process, dropping the liquid crystal by 40 pL at one time was performed 100,000 times using a constant volume metering pump, and the change in amount of liquid crystal dropped by each 200 times of the following "0 to 200 times, 201to 400 times, 401 to 600 times, ... , 99,801to 100,000 times" was evaluated on a scale of four stages described below.
A: Change was extremely small (liquid crystal display element could be stably manufactured)
B: Change was slightly observed, however it was an acceptable level
C: Change was observed, and it was an unacceptable level (yield was deteriorated by generation of spots)
D: Change was observed, and it was a very severe level (liquid crystal leakage or vacuum bubbles were generated)

Solubility at a low temperature:
after preparing a liquid crystal composition, 0.5 g of the liquid crystal composition was weighed and placed in a sample bottle of 1 mL, the temperature change having one cycle of "-20°C (maintained for 1 hour) → heating (0.2°C/min) → 0°C (maintained for 1 hour) → heating (0.2°C/min) → 20°C (maintained for 1 hour) → cooling (-0.2°C/min) → 0°C (maintained for 1 hour) → cooling (-0.2 °C/min) → -20°C" was continuously given thereto in a temperature controlled test chamber, the generation of precipitates from the liquid crystal composition was visually observed, and evaluation of solubility at a low temperature was performed on a scale of four stages described below.
A: Precipitates were not observed for 600 hours or longer.
B: Precipitates were not observed for 300 hours or longer.
C: Precipitates were observed within 150 hours.
D: Precipitates were observed within 75 hours.

In the examples, the following abbreviations were used for describing the compounds.

### (Side Chain Structure and Linking Structure)

**[Table 1]**

| Number of terminals | CₙH₂ₙ₊₁- |
|---|---|
| -nd0FF- | -(CH₂)ₙ₋₁-HC=CFF |
| -2- | -CH₂CH₂- |
| -1O- | -CH₂O- |
| -O1- | -OCH₂- |
| -V- | -CO- |
| -VO- | -COO- |
| -CFFO- | -CF₂O- |
| -F | -F |
| -Cl | -Cl |
| -OCFFF | -OCF3 |
| -CFFF | -CF3 |
| -On | -OCₙH₂ₙ₊₁ |
| ndm- | CₙH₂ₙ₊₁-HC=CH-(CH₂) ₘ₋₁- |
| -ndm | - (CH₂) ₙ₋₁-HC=CH- (CH₂) ₘ- |
| -Ondm | -O-(CH₂)ₙ₋₁-HC=CH- |
| -ndm- | -(CH₂) ₙ₋₁-HC=CH- (CH₂) ₘ₋₁ |
| -CN | -C≡N |
| -T- | -C≡C- |
| -V | -CH=CH₂ |
| -V1 | -CH=CH-CH₃ |
| -V2 | -CH=CH-CH₂CH₃ |

### (Ring Structure)

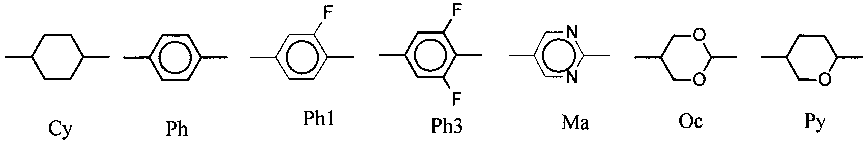

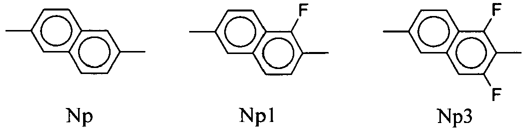

**[Table 2]**

| Sample Name | Reference Example 1 | Reference Example 2 | Reference Example 3 | Reference Example 4 | Reference Example 5 | Reference Example 6 |
|---|---|---|---|---|---|---|
| T_{NI}/°C | 81.7 | 81.8 | 81.7 | 81.7 | 81.1 | 81.2 |
| nₑ | 1.587 | 1.587 | 1.587 | 1.587 | 1.587 | 1.587 |
| nₒ | 1.488 | 1.488 | 1.488 | 1.488 | 1.488 | 1.488 |
| Δn | 0.099 | 0.099 | 0.099 | 0.099 | 0.099 | 0.099 |
| ε*_{∥}* | 5.19 | 5.20 | 5.30 | 5.31 | 5.19 | 5.20 |
| ε_{⊥} | 2.51 | 2.50 | 2.53 | 2.53 | 2.50 | 2.50 |
| Δε | 2.69 | 2.70 | 2.77 | 2.78 | 2.69 | 2.70 |
| η/mPa·s | 8.9 | 8.9 | 9.4 | 9.4 | 8.9 | 8.9 |
| γ₁/mPa·s | 39 | 38 | 40 | 39 | 38 | 38 |
| γ₁/Δn²×10³ | 3.98 | 3.88 | 4.12 | 3.98 | 3.91 | 3.91 |
| 3-Cy-Cy-V | 45 | 45 | 45 | 45 | 46 | 46 |
| 3-Cy-Cy-V1 | 12 | 12 | 11 | 11 | 12 | 12 |
| 1-Ph-Ph-2V1 | 7 | 7 | 7 | 7 | 7 | 7 |
| V-Cy-Cy-Ph-1 | 12 | 12 | 12 | 12 | 11 | 11 |
| V2-Cy-Cy-Ph-1 | 9 | 9 | 10 | 10 | 9 | 9 |
| 2-Ph-Ph1-Ph-3 | 6 | | 6 | | 3 | |
| 3-Ph-Ph1-Ph-2 | | 6 | | 6 | | 3 |
| 2-Ph-Ph1-Ph-4 | | | | | 3 | 3 |
| 4-Ph-Ph1-Ph-2 | | | | | | |
| 3-Cy-Cy-Ph3-F | | | | | | |
| 3-Cy-Cy-CFFO-Ph3-F | | | | | | |
| 3-Cy-Ph-Ph3-F | | | | | | |
| 3-Ph-Ph3-CFFO-Ph3-F | | | | | | |
| 3-Ph-Ph-Ph1-Ph3-F | 2 | 2 | | | 2 | 2 |
| 3-Ph-Phl-Ph3-CFFO-Ph3-F | 4 | 4 | 3 | 3 | 4 | 4 |
| 4-Ph-Ph1-Ph3-CFFO-Ph3-F | | | 3 | 3 | | |
| 3-Py-Ph-Ph3-CFFO-Ph3-F | 3 | 3 | 3 | 3 | 3 | 3 |
| Initial voltage holding ratio /% | 99.9 | 99.8 | 99.8 | 99.9 | 99.8 | 99.8 |
| Voltage holding ratio after 1 hour at 150°C /% | 99.7 | 99.7 | 99.7 | 99.7 | 99.6 | 99.7 |
| Burn-in evaluation | A | A | A | A | A | A |
| Dropping mark evaluation | A | A | B | B | A | A |
| Process compatibility evaluation | A | A | A | A | B | B |
| Solubility evaluation at a low temperature | A | A | B | B | A | A |

**[Table 3]**

| Sample Name | Reference Example 7 | Reference Example 8 | Reference Example 9 | Reference Example 10 | Example 11 | Example 12 |
|---|---|---|---|---|---|---|
| T_{NI}/°C | 81.2 | 81.4 | 81.4 | 81.5 | 77.8 | 78.0 |
| ne | 1.587 | 1.587 | 1.587 | 1.587 | 1.587 | 1.587 |
| nₒ | 1.488 | 1.488 | 1.488 | 1.488 | 1.488 | 1.488 |
| Δn | 0.099 | 0.099 | 0.099 | 0.099 | 0.099 | 0.099 |
| *ε_{∥}* | 5.21 | 5.22 | 5.15 | 5.16 | 5.55 | 5.57 |
| ε_{⊥} | 2.50 | 2.50 | 2.47 | 2.47 | 2.56 | 2.56 |
| Δε | 2.71 | 2.72 | 2.68 | 2.69 | 3.00 | 3.01 |
| η/mPa·s | 8.9 | 8.9 | 8.3 | 8.3 | 9.1 | 9.1 |
| γ₁/mPa·s | 37 | 36 | 38 | 38 | 33 | 33 |
| γ₁/Δₙ²×10³ | 3.78 | 3.67 | 3.84 | 3.84 | 3.36 | 3.36 |
| 3-Cy-Cy-V | 46 | 46 | 44 | 44 | 44 | 44 |
| 3-Cy-Cy-V1 | 12 | 12 | 12 | 12 | 12 | 12 |
| 1-Ph-Ph-2V1 | 7 | 7 | 6 | 6 | 6 | 6 |
| V-Cy-Cy-Ph-1 | 11 | 11 | 12 | 12 | 12 | 12 |
| V2-Cy-Cy-Ph-1 | 9 | 9 | 9 | 9 | 9 | 9 |
| 2-Ph-Ph1-Ph-3 | 3 | | 6 | | 6 | |
| 3-Ph-Ph1-Ph-2 | | 3 | | 6 | | 6 |
| 2-Ph-Ph1-Ph-4 | | | | | | |
| 4-Ph-Ph1-Ph-2 | 3 | 3 | | | | |
| 3-Cy-Cy-Ph3-F | | | | | | |
| 3-Cy-Cy-CFFO-Ph3-F | | | | | | |
| 3-Cy-Ph-Ph3-F | | | 5 | 5 | | |
| 3-Ph-Ph3-CFFO-Ph3-F | | | | | 5 | 5 |
| 3-Ph-Ph-Ph1-Ph3-F | 2 | 2 | 2 | 2 | 2 | 2 |
| 3-Ph-Ph1-Ph3-CFFO-Ph3-F | 4 | 4 | 2 | 2 | 2 | 2 |
| 4-Ph-Ph1-Ph3-CFFO-Ph3-F | | | | | | |
| 3-Py-Ph-Ph3-CFFO-Ph3-F | 3 | 3 | 2 | 2 | 2 | 2 |
| Initial voltage holding ratio /% | 99.8 | 99.7 | 99.7 | 99.8 | 99.6 | 99.7 |
| Voltage holding ratio after 1 hour at 150°C /% | 99.6 | 99.6 | 99.4 | 99.5 | 99.3 | 99.4 |
| Burn-in evaluation | A | A | B | B | B | B |
| Dropping mark evaluation | A | A | B | B | B | B |
| Process compatibility evaluation | B | B | B | B | B | B |
| Solubility evaluation at a low temperature | A | A | B | B | B | B |

**[Table 4]**

| Sample Name | Comparative Example 1 | Comparative Example 2 | Comparative Example 3 |
|---|---|---|---|
| T_{NI}/°C | 82.0 | 80.7 | 80.0 |
| nₑ | 1.592 | 1.585 | 1.588 |
| nₒ | 1.490 | 1.487 | 1.489 |
| Δn | 0.102 | 0.098 | 0.099 |
| ε*_{∥}* | 5.30 | 5.62 | 4.37 |
| ε_{⊥} | 2.43 | 2.42 | 2.38 |
| Δε | 2.88 | 3.20 | 1.99 |
| η/mPa·s | 8.3 | 9.2 | 7.8 |
| γ₁/mPa·s | 42 | 48 | 34 |
| _{γ1}/Δn²×10³ | 4.01 | 5.00 | 3.43 |
| 3-Cy-Cy-V | 37 | 34 | 45 |
| 3-Cy-Cy-V1 | 10 | 10 | 12 |
| 1-Ph-Ph-2V1 | 6 | 10 | 8 |
| V-Cy-Cy-Ph-1 | 13 | 11 | 12 |
| V2-Cy-Cy-Ph-1 | 12 | 10 | 9 |
| 2-Ph-Ph1-Ph-3 | 6 | 7 | 6 |
| 3-Ph-Ph1-Ph-2 | | | |
| 2-Ph-Ph1-Ph-4 | | | 4 |
| 4-Ph-Ph1-Ph-2 | | | |
| 3-Cy-Cy-Ph3-F | | 5 | |
| 3-Cy-Cy-CFFO-Ph3-F | | 10 | |
| 3-Cy-Ph-Ph3-F | 16 | | |
| 3-Ph-Ph3-CFFO-Ph3-F | | 3 | |
| 3-Ph-Ph-Ph1-Ph3-F | | | |
| 3-Ph-Ph1-Ph3-CFFO-Ph3-F | | | 2 |
| 4-Ph-Phl-Ph3-CFFO-Ph3-F | | | |
| 3-Py-Ph-Ph3-CFFO-Ph3-F | | | 2 |
| Initial voltage holding ratio /% | 99.7 | 99.5 | 99.9 |
| Voltage holding ratio after 1 hour at 150°C /% | 98.9 | 98.2 | 99.7 |
| Burn-in evaluation | C | D | B |
| Dropping mark evaluation | C | C | B |
| Process compatibility evaluation | D | C | D |
| Solubility evaluation at a low temperature | C | C | D |

### Reference Signs List

- 100: FIRST SUBSTRATE
- 102: TFT LAYER
- 103: PIXEL ELECTRODE
- 104: PASSIVATION FILM
- 105: FIRST ALIGNMENT FILM
- 200: SECOND SUBSTRATE
- 201: PLANARIZATION FILM (OVERCOAT LAYER)
- 202: BLACK MATRIX
- 203: COLOR FILTER
- 204: TRANSPARENT ELECTRODE
- 205: SECOND ALIGNMENT FILM
- 301: SEAL MATERIAL
- 302: PROJECTION (POST SPACER)
- 303: LIQUID CRYSTAL LAYER
- 304: PROJECTION (POST SPACER)
- 401: MASK PATTERN
- 402: RESIN LAYER
- L: LIGHT
- 1,8: POLARIZING PLATE
- 2: FIRST SUBSTRATE
- 3: ELECTRODE LAYER
- 4: ALIGNMENT FILM
- 5: LIQUID CRYSTAL LAYER
- 6: COLOR FILTER
- 6G: COLOR FILTER GREEN
- 6R: COLOR FILTER RED
- 7: SECOND SUBSTRATE
- 11: GATE ELECTRODE
- 12: GATE INSULATING FILM
- 13: SEMICONDUCTOR LAYER
- 14: INSULATING LAYER
- 15: OHMIC CONTACT LAYER
- 16: DRAIN ELECTRODE
- 17: SOURCE ELECTRODE
- 18: INSULATION PROTECTING LAYER
- 21: PIXEL ELECTRODE
- 22: COMMON ELECTRODE
- 23: STORAGE CAPACITOR
- 24: DRAIN ELECTRODE
- 25: DATA WIRING
- 27: SOURCE WIRING
- 29: COMMON LINE
- 30: BUFFER LAYER

## Claims

1. A liquid crystal composition having a positive dielectric anisotropy value, comprising:
at least two compounds selected from the group consisting of compounds represented by each of the following General Formulas (Ia) and (Ib) in the total amount of 85% to 95% by mass as a first component; and
one or more compounds from the group consisting of compounds represented by General Formula (M) as a second component: 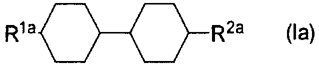 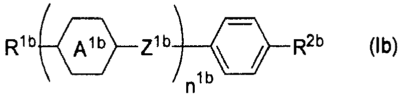 wherein, in General Formula (Ia) and (Ib),
each of R^{1a}, R^{2a}, R^{1b} and R^{2b} independently represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms,
n^{1b} represents 1 or 2,
A^{1b} represents a 1,4-cyclohexylene group, a 1,4-phenylene group, or a tetrahydropyran-2,5-diyl group, and in a case where A^{1b} represents a 1,4-phenylene group, one hydrogen atom in the 1,4-phenylene group may be substituted with a fluorine atom and when a plurality of A^{1b} exist, each of A^{1b}s is independent,
Z^{1b} represents a single bond, -OCH₂-, -OCF₂-, -CH₂O-, or CF₂O-, and when a plurality of Z^{1b} exist, each of Z^{1b}s is independent; 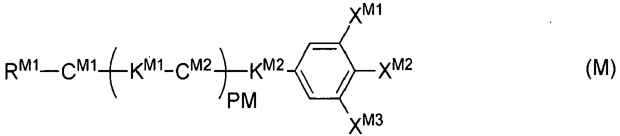
wherein, in the formula,
R^{M1} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, one -CH₂- or two or more non-adjacent -CH₂-'s in the alkyl group, the alkenyl group, the alkoxy group, or the alkenyloxy group each may be independently substituted with -CH=CH-, -C=C-, -O-, -CO-, -COO-, or -OCO-,
PM represents 0, 1 or 2,
each of C^{M1} and C^{M2} independently represents a group selected from the group consisting of the following (d) and (e) :
(d) a 1,4-cyclohexylene group (one -CH₂- or two or more non-adjacent - CH₂-'_{S} present in the group may be substituted with -O- or -S-); and
(e) a 1,4-phenylene group (one -CH= group or two or more non-adjacent - CH='s present in the group may be substituted with -N=),
each of the groups (d) and (e) may be independently substituted with a cyano group, a fluorine atom, or a chlorine atom,
each of K^{M1} and K^{M2} independently represents a single bond, -CH₂CH₂-, -(CH₂)₄-, - OCH₂-, -CH₂O-, -OCF₂-, -CF₂O- -COO-, -OCO-, or -C≡C-,
when PM is 2 and a plurality of K^{m1}'s exist, the plurality of K^{M1}'s may be the same as or different from each other, when PM is 2 and a plurality of C^{M2} 's exist, the plurality of C^{M2}'s may be the same as or different from each other,
each of X^{M1} and X^{M3} independently represents a hydrogen atom, a chlorine atom, or a fluorine atom, and
X^{M2} represents a hydrogen atom, a fluorine atom, a chlorine atom, a cyano group, a trifluoromethyl group, a fluoromethoxy group, a difluoromethoxy group, a trifluoromethoxy group, or a 2,2,2-trifluoroethyl group,
wherein the compound represented by General Formula (M) is a compound represented by General Formula (VIII) or (XIII); 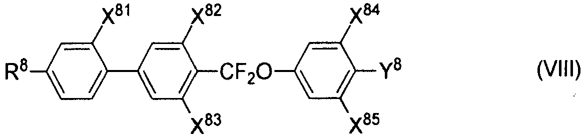 wherein in General Formula (VIII), R⁸ represents an alkyl group having 1 to 5 carbon atoms, an alkenyl group having 2 to 5 carbon atoms, or an alkoxy group having 1 to 4 carbon atoms, each of X⁸¹ to X⁸⁵ independently represents a hydrogen atom or a fluorine atom, and Y⁸ represents a fluorine atom or -OCF₃; 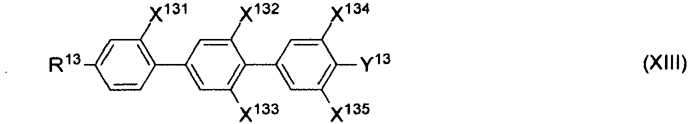 wherein, in General Formula (XIII), each of X¹³¹ to X¹³⁵ independently represents a fluorine atom or a hydrogen atom, R¹³ represents an alkyl group having 1 to 5 carbon atoms, an alkenyl group having 2 to 5 carbon atoms, or an alkoxy group having 1 to 4 carbon atoms, and Y¹³ represents a fluorine atom or -OCF₃, and
wherein Δε is from 1.5 to 3.5 and Δn is 0.08 to 0.20.

2. The liquid crystal composition having a positive dielectric anisotropy value according to claim 1 further comprising a compound represented by General Formula (L): 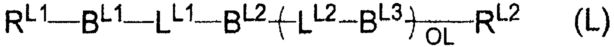 wherein, in Formula (L),
each of R^{L1} and R^{L2} independently represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, one -CH₂- or two or more non-adjacent -CH₂-'s in the alkyl group, the alkenyl group, the alkoxy group, or the alkenyloxy group each may be independently substituted with -CH=CH-, -C≡C-, -O-, -CO-, -COO-, or -OCO-,
OL represents 0, 1, 2, or 3,
each of B^{L1}, B^{L2}, and B^{L3} independently represents a group selected from the group consisting of the following (a) and (b),
(a) a 1,4-cyclohexylene group (one -CH₂- or two or more non-adjacent - CH₂-'s present in the group may be substituted with -O-) and
(b) a 1,4-phenylene group (one -CH= group or two or more non-adjacent - CH='s present in the group may be substituted with -N=),
each of the groups (a) and (b) may be independently substituted with a cyano group, a fluorine atom, or a chlorine atom,
each of L^{L1} and L^{L2} independently represents a single bond, -CH₂CH₂-, -(CH₂)₄-, - OCH₂-, -CH₂O-, -COO-, -OCO-, -OCF₂-, -CF₂O-, -CH=N-N=CH-, -CH=CH-, -CF=CF-, or - C≡C-, and
when OL is 2 or 3 and a plurality of L^{L2}'s exist, the plurality of L^{L2}'s may be the same as or different from each other, and when OL is 2 or 3 and a plurality of B^{L3}'s exist, the plurality of B^{L3}'s may be the same as or different from each other,
with the proviso that the compound represented by General Formula (M) is excluded.

3. The liquid crystal composition according to claim 1 or 2,
wherein the compound represented by General Formula (M) is at least two types of compounds selected from the group consisting of compounds represented by each of the following General Formulas (IIa) and (IIb): 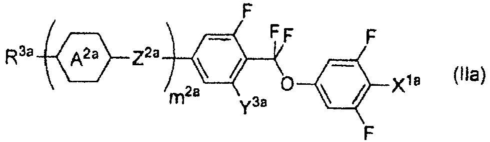 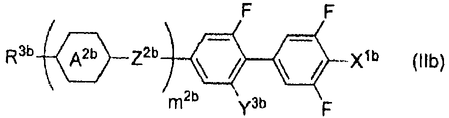 wherein, in General Formulas (IIa) and (IIb),
each of R^{3a} and R^{3b} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, one or more hydrogen atoms in the alkyl group, the alkenyl group, the alkoxy group, or the alkenyloxy group may be substituted with a fluorine atom, methylene groups in the alkyl group, the alkenyl group, the alkoxy group, or the alkenyloxy group each may be substituted with an oxygen atom as long as the oxygen atom is not continuously bonded to another oxygen atom or each may be substituted with a carbonyl group as long as the carbonyl group is not continuously bonded to another carbonyl group,
each of A^{2a} and A^{2b} independently represents a 1,4-cyclohexylene cyclohexylene group, a 1,4-phenylene group, a tetrahydropyran-2,5-diyl group, a dioxane-2,5-diyl group, or a pyrimidine-2,5-diyl group, and in a case where A^{2a} or A^{2b} represents a 1,4-phenylene group, one or more hydrogen atoms in the 1,4-phenylene group may be substituted with a fluorine atom,
each of Z^{2a} and Z^{2b} independently represents a single bond, -OCH₂-, -OCF₂-, - CH₂O-, or -CF₂O-,
each of m^{2a} and m^{2b} is independently 1, 2, or 3,
each of Y^{3a} and Y^{3b} independently represents a fluorine atom or a hydrogen atom, and
each of X^{1a} and X^{1b} represents a fluorine atom or a hydrogen atom, and X¹ represents a fluorine atom, a -CN group, or an -OCF₃ group.

4. A liquid crystal display element,
wherein a first substrate having an electrode layer including a first alignment layer and a thin film transistor on the surface and a second substrate having a second alignment layer on the surface are disposed such that the alignment layers face each other with a gap, and the gap between the first substrate and the second substrate is filled with a liquid crystal layer including the liquid crystal composition according to any one of claims 1 to 3, and
wherein an electrode layer including the thin film transistor is provided with a plurality of gate wirings and data wirings disposed in a mesh shape, a thin film transistor provided at each intersection between the data wirings and the gate wirings, a pixel electrode connected to the thin film transistor, and a common electrode provided on the first substrate being separated from the pixel electrode.

5. The liquid crystal display element according to claim 4,
wherein the first alignment layer and the second alignment layer provided in proximity to the liquid crystal layer are alignment films which induce a homogeneous alignment with respect to the liquid crystal composition.

6. The liquid crystal display element according to claim 4 or 5,
wherein a shortest distance d between the common electrode and the pixel electrode which are adjacent is shorter than a shortest distance G between the alignment layers.

## Patentansprüche

1. Flüssigkristallzusammensetzung, die einen positiven Wert der dielektrischen Anisotropie hat, umfassend:
wenigstens zwei Verbindungen, ausgewählt aus der Gruppe, bestehend aus Verbindungen, die durch jede der folgenden allgemeinen Formeln (Ia) und (Ib) dargestellt werden, in der Gesamtmenge von 85 bis 95 Massen-% als erste Komponente, und
eine oder mehrere Verbindungen aus der Gruppe, bestehend aus Verbindungen, die durch die allgemeine Formel (M) dargestellt werden, als zweite Komponente: 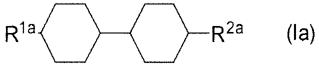 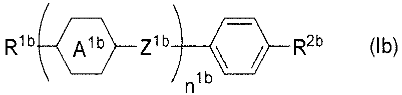 wobei in den allgemeinen Formeln (Ia) und (Ib)
jedes von R^{1a}, R^{2a}, R^{1b} und R^{2b} unabhängig eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen darstellt,
n^{1b} 1 oder 2 darstellt,
A^{1b} eine 1,4-Cyclohexylengruppe, eine 1,4-Phenylengruppe oder eine Tetrahydropyran-2,5-diylgruppe darstellt, und in einem Fall, in dem A^{1b} eine 1,4-Phenylengruppe darstellt, ein Wasserstoffatom in der 1,4-Phenylengruppe durch ein Fluoratom ersetzt sein kann, und wenn eine Vielzahl von A^{1b} existiert, jedes A^{1b} unabhängig ist,
Z^{1b} eine Einfachbindung, -OCH₂ -, -OCF₂ -, -CH₂O- oder CF₂O- darstellt, und, wenn eine Vielzahl von Z^{1b} existiert, jedes Z^{1b} unabhängig ist; 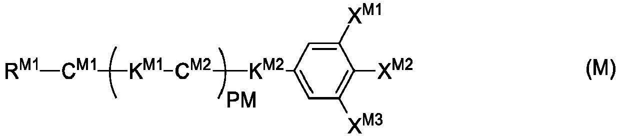
wobei in der Formel
R^{M1} eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen darstellt, ein oder mehrere Wasserstoffatom(e) in der Alkylgruppe, der Alkenylgruppe, der Alkoxygruppe oder der Alkenyloxygruppe durch ein Fluoratom ersetzt sein kann (können), ein -CH₂- oder zwei oder mehr nicht benachbarte -CH₂- in der Alkylgruppe, der Alkenylgruppe, der Alkoxygruppe oder der Alkenyloxygruppe jeweils unabhängig durch -CH=CH-, -C≡C-, -O-, -CO-, -COO- oder -OCO-ersetzt sein kann/können,
PM 0, 1 oder 2 darstellt,
jedes von C^{M1} und C^{M2} unabhängig eine Gruppe darstellt, ausgewählt aus der Gruppe, bestehend aus den folgenden (d) und (e):
(d) einer 1,4-Cyclohexylengruppe (ein -CH₂- oder zwei oder mehr nicht-benachbarte -CH₂-, die in der Gruppe vorliegen, kann/können durch -O- oder -S- ersetzt sein) und
(e) einer 1,4-Phenylengruppe (eine -CH=-Gruppe oder zwei oder mehr nicht-benachbarte -CH=, die in der Gruppe vorliegt/vorliegen, kann/können durch -N= ersetzt sein),
wobei jede der Gruppen (d) und (e) unabhängig mit einer Cyanogruppe, einem Fluoratom oder einem Chloratom substituiert sein kann,
jedes von K^{M1} und K^{M2} unabhängig eine Einfachbindung, -CH₂CH₂-, - (CH₂)₄ -, -OCH₂-, -CH₂O-, -OCF₂-, -CF₂O- -COO-, -OCO- oder -C≡C- darstellt,
wenn PM 2 ist und eine Vielzahl von K^{M1} vorliegt, die Vielzahl von K^{M1} gleich oder voneinander verschieden sein kann, wenn PM 2 ist und eine Vielzahl von C^{M2} vorliegt, die Vielzahl von C^{M2} gleich oder voneinander verschieden sein kann,
jedes von X^{M1} und X^{M3} unabhängig ein Wasserstoffatom, ein Chloratom oder ein Fluoratom darstellt und
X^{M2} ein Wasserstoffatom, ein Fluoratom, ein Chloratom, eine Cyanogruppe, eine Trifluormethylgruppe, eine Fluormethoxygruppe, eine Difluormethoxygruppe, eine Trifluormethoxygruppe oder eine 2,2,2-Trifluorethylgruppe darstellt,
wobei die Verbindung, die durch die allgemeine Formel (M) dargestellt wird, eine Verbindung ist, die durch die allgemeine Formel (VIII) oder (XIII) dargestellt wird: 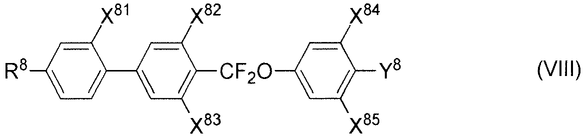 wobei in der allgemeinen Formel (VIII) R⁸ eine Alkylgruppe mit 1 bis 5 Kohlenstoffatom(en), eine Alkenylgruppe mit 2 bis 5 Kohlenstoffatomen oder eine Alkoxygruppe mit 1 bis 4 Kohlenstoffatom(en) darstellt, jedes von X⁸¹ bis X⁸⁵ unabhängig ein Wasserstoffatom oder ein Fluoratom darstellt und Y⁸ ein Fluoratom oder -OCF₃ darstellt; 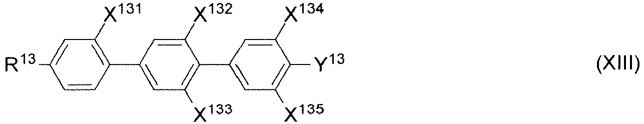 wobei in der allgemeinen Formel (XIII) jedes von X¹³¹ bis X¹³⁵ unabhängig ein Fluoratom oder ein Wasserstoffatom darstellt, R¹³ eine Alkylgruppe mit 1 bis 5 Kohlenstoffatom(en), eine Alkenylgruppe mit 2 bis 5 Kohlenstoffatomen oder eine Alkoxygruppe mit 1 bis 4 Kohlenstoffatom(en) darstellt und
Y¹³ ein Fluoratom oder -OCF₃ darstellt, und
wobei Δε 1,5 bis 3,5 ist und Δn 0,08 bis 0,20 ist.

2. Flüssigkristallzusammensetzung, die einen positiven Wert der dielektrischen Anisotropie hat, gemäß Anspruch 1, außerdem umfassend eine Verbindung, dargestellt durch die allgemein Formel (L): 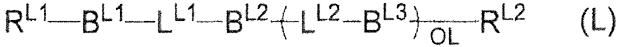 wobei in der Formel (L)
jedes von R^{L1} und R^{L2} unabhängig eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen darstellt, ein oder mehr Wasserstoffatom(e) in der Alkylgruppe, der Alkenylgruppe, der Alkxoygruppe oder der Alkenyloxygruppe durch ein Fluoratom ersetzt sein kann/können, ein -CH₂- oder zwei oder mehr nicht-benachbarte -CH₂- in der Alkylgruppe, der Alkenylgruppe, der Alkoxygruppe oder der Alkenyloxy-gruppe jeweils unabhängig durch -CH=CH-, -C≡C-, -O-, -CO-,
-COO- oder -OCO- ersetzt sein kann/können,
OL 0, 1, 2 oder 3 darstellt,
jedes von B^{L1}, B^{L2} und B^{L3} unabhängig eine Gruppe darstellt, ausgewählt aus der Gruppe, bestehend aus den folgenden (a) und (b):
(a) eine 1,4-Cyclohexylengruppe (ein -CH₂- oder zwei oder mehr nicht-benachbarte -CH₂-, das/die in der Gruppe vorliegt/vorliegen, kann durch -O- ersetzt sein) und
(b) eine 1,4-Phenylengruppe (eine -CH=-Gruppe oder zwei oder mehr nicht-benachbarte -CH=, die in der Gruppe vorhanden ist/sind, können durch -N= ersetzt sein),
jede der Gruppen (a) und (b) unabhängig mit einer Cyanogruppe, einem Fluoratom oder einem Chloratom substituiert sein können, jedes von L^{L1} und L^{L2} unabhängig eine Einfachbindung, -CH₂CH₂-, -(CH₂)₄-, -OCH₂-, -CH₂O-, -COO-, -OCO-, -OCF₂-, -CF₂O-, -CH=N-N=CH-, -CH=CH-, -CF=CF- oder -C≡C- darstellt, und
wenn OL 2 oder 3 ist und eine Vielzahl von L^{L2} vorhanden ist, die Vielzahl von L^{L2} gleich oder voneinander verschieden sein kann, und wenn OL 2 oder 3 ist und eine Vielzahl von B^{L3} vorliegt, die Vielzahl von B^{L3} gleich oder voneinander verschieden sein kann,
mit der Maßgabe, dass die Verbindung, die durch die allgemeine Formel (M) dargestellt wird, ausgeschlossen ist.

3. Flüssigkristallzusammensetzung gemäß Anspruch 1 oder 2, wobei die durch die allgemeine Formel (M) dargestellte Verbindung wenigstens zwei Typen von Verbindungen ist, die ausgewählt sind aus der Gruppe, bestehend aus Verbindungen, dargestellt durch jede der folgenden allgemeinen Formeln (IIa) und (IIb): 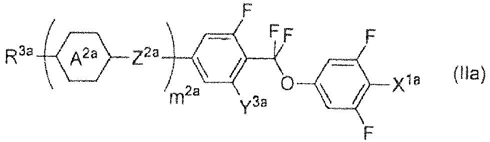 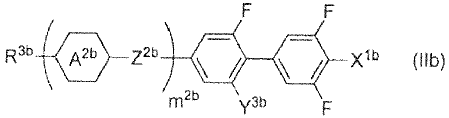 wobei in den allgemeinen Formeln (IIa) und (IIb)
jedes von R^{3a} und R^{3b} eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen darstellt, ein oder mehr Wasserstoffatom(e) in der Alkylgruppe, der Alkenylgruppe, der Alkoxygruppe oder der Alkenyloxygruppe durch ein Fluoratom ersetzt sein kann/können, Methylengruppen in der Alkylgruppe, der Alkenylgruppe, der Alkoxygruppe oder der Alkenyloxygruppe jeweils durch ein Sauerstoff ersetzt sein können, solange das Sauerstoffatom nicht kontinuierlich an ein anderes Sauerstoffatom gebunden ist, oder jeweils durch eine Carbonylgruppe ersetzt sein können, solange die Carbonylgruppe nicht kontinuierlich an eine andere Carbonylgruppe gebunden ist,
jedes von A^{2a} und A^{2b} unabhängig eine 1,4-Cyclohexylengruppe, eine 1,4-Phenylengruppe, eine Tetrahydropyran-2,5-diylgruppe, eine Dioxan-2,5-diylgruppe oder eine Pyrimidin-2,5-diylgruppe darstellt, und in einem Fall, in dem A^{2a} oder A^{2b} eine 1,4-Phenylengruppe darstellt, ein oder mehr Wasserstoffatom(e) in der 1,4-Phenylengruppe durch ein Fluoratom ersetzt sein kann/können,
jedes von Z^{2a} und Z^{2b} unabhängig eine Einfachbindung, -OCH₂-, -OCF₂-, -CH₂O- oder -CF₂O- darstellt,
jedes von m^{2a} und m^{2b} unabhängig 1, 2 oder 3 ist,
jedes von Y^{3a} und Y^{3b} unabhängig ein Fluoratom oder ein Wasserstoffatom darstellt und
jedes von X^{1a} und X^{1b} ein Fluoratom oder ein Wasserstoffatom darstellt und X¹ ein Fluoratom, eine -CN-Gruppe oder eine -OCF₃-Gruppe darstellt.

4. Flüssigkristallanzeigeelement,
wobei ein erstes Substrat, das eine Elektrodenschicht, welche eine erste Ausrichtungsschicht und einen Dünnfilmtransistor auf der Oberfläche umfasst, hat, und ein zweites Substrat, das eine zweite Ausrichtungsschicht auf der Oberfläche hat, so angeordnet sind, dass die Ausrichtungsschichten einander mit einem Zwischenraum gegenüberliegen und der Zwischenraum zwischen dem ersten Substrat und dem zweiten Substrat mit einer Flüssigkristallschicht gefüllt ist, welche die Flüssigkristallzusammensetzung gemäß einem der Ansprüche 1 bis 3 enthält, und
wobei eine Elektrodenschicht, die den Dünnfilmtransistor enthält, mit einer Vielzahl von Gate-Verdrahtungen und Daten-Verdrahtungen, die in Maschenform angeordnet sind, versehen ist, ein Dünnfilmtransistor an jeder Schnittstelle zwischen den Daten-Verdrahtungen und den Gate-Verdrahtungen angeordnet ist, eine Pixelelektrode an den Dünnfilmtransistor angeschlossen ist und eine gemeinsame Elektrode auf dem ersten Substrat angeordnet ist, die von der Pixelelektrode getrennt ist.

5. Flüssigkristallanzeigeelement gemäß Anspruch 4,
wobei die erste Ausrichtungsschicht und die zweite Ausrichtungsschicht, die in der Nachbarschaft zu der Flüssigkristallschicht angeordnet sind, Ausrichtungsfilme sind, welche eine homogene Ausrichtung bezüglich der Flüssigkristallzusammensetzung induzieren.

6. Flüssigkristallanzeigeelement gemäß Anspruch 4 oder 5, wobei der kürzeste Abstand d zwischen der gemeinsamen Elektrode und der Pixelelektrode, die benachbart sind, kürzer ist als der kürzeste Abstand G zwischen den Ausrichtungsschichten.

## Revendications

1. Composition de cristaux liquides ayant une valeur d'anisotropie diélectrique positive, comprenant :
au moins deux composés choisis parmi le groupe constitué de composés représentés par chacune des formules générales suivantes (Ia) et (Ib) selon une quantité totale de 85 % à 95 % en masse en tant que premier composant ; et
un ou plusieurs composés parmi le groupe de composés représentés par la formule générale (M) en tant que second composant : 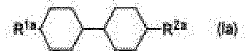 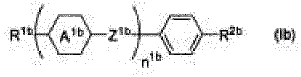 dans laquelle, dans les formules générales (Ia) et (Ib),
chacun parmi R^{1a}, R^{2a}, R^{1b} et R^{2b} représente indépendamment un groupe alkyle ayant 1 à 8 atomes de carbone, un groupe alcényle ayant 2 à 8 atomes de carbone, un groupe alkoxy ayant 1 à 8 atomes de carbone, ou un groupe alcényloxy ayant 2 à 8 atomes de carbone,
n^{1b} représente 1 ou 2,
A^{1b} représente un groupe 1,4-cyclohexylène, un groupe 1,4-phénylène, ou un groupe tétrahydropyran-2,5-diyle, et dans le cas où A^{1b} représente un groupe 1,4-phénylène, un atome d'hydrogène dans le groupe 1,4-phénylène peut être substitué par un atome de fluor et lorsqu'il existe une pluralité de A^{1b}, chacun des A^{1b} est indépendant,
Z^{1b} représente une liaison simple, -OCH₂-, -OCF₂ -, -CH₂O-ou CF₂O-, et lorsqu'il existe une pluralité de Z^{1b}, chacun des Z^{1b} est indépendant ; 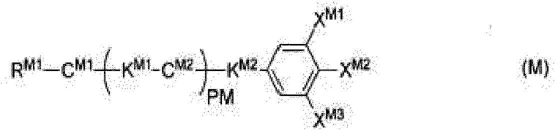
dans laquelle, dans la formule,
R^{M1} représente un groupe alkyle ayant 1 à 8 atomes de carbone, un groupe alcényle ayant 2 à 8 atomes de carbone, un groupe alkoxy ayant 1 à 8 atomes de carbone, ou un groupe alcényloxy ayant 2 à 8 atomes de carbone, un ou plusieurs atomes d'hydrogène dans le groupe alkyle, le groupe alcényle, le groupe alkoxy ou le groupe alcényloxy peuvent être substitués par un atome de fluor, un -CH₂- ou deux ou plus de deux -CH₂- non adjacents dans le groupe alkyle, le groupe alcényle, le groupe alkoxy, ou le groupe alcényloxy peuvent chacun être indépendamment substitués par -CH=CH-, -C≡C-, -O-, -CO-, -COO- ou - OCO-,
PM représente 0, 1 ou 2,
chacun des C^{M1} et C^{M2} représente indépendamment un groupe sélectionné parmi le groupe constitué des éléments suivants (d) et (e):
(d) un groupe 1,4-cyclohexylène (un -CH₂- ou deux ou plus de deux -CH₂- non adjacents présents dans le groupe peuvent être substitués par -O- ou -S-) ; et
(e) un groupe 1,4-phénylène (un groupe -CH= ou deux ou plus de deux groupes -CH= non adjacents présents dans le groupe peuvent être substitués par -N=),
chacun des groupes (d) et (e) peut être indépendamment substitué par un groupe cyano, un atome de fluor, ou un atome de chlore,
chacun des K^{M1} et K^{M2} représente indépendamment une liaison simple, -CH₂CH₂-, -(CH₂)₄-, -OCH₂-, -CH₂O-, -OCF₂-, -CF₂O-, -COO- , -OCO-, ou -C≡C-
lorsque PM est égal à 2 et qu'il existe une pluralité de K^{M1}, la pluralité de K^{M1} peuvent être identiques ou différents les uns des autres, lorsque PM est égal à 2 et qu'il existe une pluralité de C^{M2}, la pluralité de C^{M2} peuvent être identiques ou différents les uns des autres,
chacun des X^{M1} et X^{M3} représente indépendamment un atome d'hydrogène, un atome de chlore, ou un atome de fluor, et
X^{M2} représente un atome d'hydrogène, un atome de fluor, un atome de chlore, un groupe cyano, un groupe trifluorométhyle, un groupe fluorométhoxy, un groupe difluorométhoxy, un groupe trifluorométhoxy, ou un groupe 2,2,2-trifluoroéthyle,
dans lequel le composé représenté par la formule générale (M) est un composé représenté par la formule générale (VIII) ou (XIII); 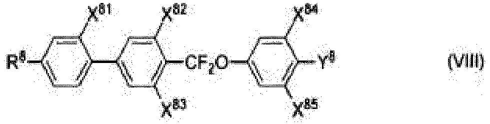 dans laquelle, dans la formule générale (VIII), R⁸ représente un groupe alkyle ayant 1 à 5 atomes de carbone, un groupe alcényle ayant 2 à 5 atomes de carbone, ou un groupe alkoxy ayant 1 à 4 atomes de carbone, chacun des X⁸¹ à X⁸⁵ représentant indépendamment un atome d'hydrogène ou un atome de fluor, et Y⁸ représente un atome de fluor ou - OCF₃; 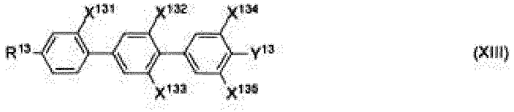 dans laquelle, dans la formule générale (XIII), chacun des X¹³¹ à X¹³⁵ représente indépendamment un atome de fluor ou un atome d'hydrogène, R¹³ représente un groupe alkyle ayant 1 à 5 atomes de carbone, un groupe alcényle ayant 2 à 5 atomes de carbone, ou un groupe alkoxy ayant 1 à 4 atomes de carbone, et Y¹³ représente un atome de fluor ou -OCF₃, et
dans laquelle Δε est compris entre 1,5 et 3,5 et Δn est compris entre 0,08 et 0,20.

2. Composition de cristaux liquides ayant une valeur d'anisotropie diélectrique positive selon la revendication 1, comprenant en outre un composé représenté par la formule générale (L) : 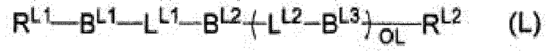 dans laquelle, dans la formule (L),
chacun des groupes R^{L1} et R^{L2} représente indépendamment un groupe alkyle ayant 1 à 8 atomes de carbone, un groupe alcényle ayant 2 à 8 atomes de carbone, un groupe alkoxy ayant 1 à 8 atomes de carbone, ou un groupe alcényloxy ayant 2 à 8 atomes de carbone, un ou plusieurs atomes d'hydrogène dans le groupe alkyle, le groupe alcényle, le groupe alkoxy ou le groupe alcényloxy peuvent être substitués par un atome de fluor, un -CH₂- ou deux ou plus de deux -CH₂- non adjacents dans le groupe alkyle, le groupe alcényle, le groupe alkoxy, ou le groupe alcényloxy peuvent chacun être indépendamment substitués par -CH=CH-, -C≡C-, -O-, -CO-, -COO-, ou -OCO-,
OL représente 0, 1, 2 ou 3,
chacun des B^{L1}, B^{L2} et B^{L3} représente indépendamment un groupe sélectionné parmi le groupe constitué des éléments suivants (a) et (b),
(a) un groupe 1,4-cyclohexylène (un -CH₂- ou deux ou plus de deux -CH₂- non adjacents présents dans le groupe peuvent être substitués par -O-) et
(b) un groupe 1,4-phénylène (un groupe -CH= ou deux ou plus de deux -CH= non adjacents présents dans le groupe peuvent être substitués par -N=),
chacun des groupes (a) et (b) peut être indépendamment substitué par un groupe cyano, un atome de fluor, ou un atome de chlore,
chacun des groupes L^{L1} et L^{L2} représente indépendamment une liaison simple, -CH₂CH₂-, -(CH₂)₄-, -OCH₂-, -CH₂O-, -COO-, -OCO-, - OCF₂-, -CF₂O-, -CH=N-N=CH-, -CH=CH-, -CF=CF, ou C≡C-, et
lorsque OL est égal à 2 ou 3 et qu'il existe une pluralité de L^{L2}, la pluralité de L^{L2} peuvent être identiques ou différents les uns des autres, et lorsque OL est égal à 2 ou 3 et qu'il existe une pluralité de B^{L3}, la pluralité de B^{L3} peuvent être identiques ou différents les uns des autres,
à condition que le composé représenté par la Formule Générale (M) soit exclu.

3. Composition de cristaux liquides selon la revendication 1 ou 2,
dans lequel le composé représenté par la Formule Générale (M) est au moins deux types de composés choisis parmi le groupe constitué de composés représentés par chacune des formules générales suivantes (IIa) et (IIb): 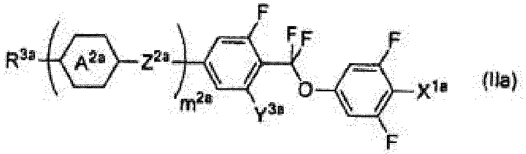 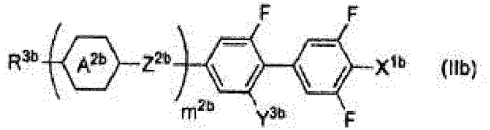 dans lesquelles, dans les Formules Générales (IIa) et (IIb),
chacun des R^{3a} et R^{3b} représente un groupe alkyle ayant 1 à 8 atomes de carbone, un groupe alcényle ayant 2 à 8 atomes de carbone, un groupe alkoxy ayant 1 à 8 atomes de carbone, ou un groupe alcényloxy ayant 2 à 8 atomes de carbone, un ou plusieurs atomes d'hydrogène dans le groupe alkyle, le groupe alcényle, le groupe alkoxy ou le groupe alcényloxy peuvent être substitués par un atome de fluor, des groupes méthylène dans le groupe alkyle, le groupe alcényle, le groupe alkoxy ou le groupe alcényloxy peuvent chacun être substitués par un atome d'oxygène pour autant que l'atome d'oxygène ne soit pas lié de façon continue à un autre atome d'oxygène ou chacun peut être substitué par un groupe carbonyle pour autant que le groupe carbonyle ne soit pas lié de manière continue à un autre groupe carbonyle,
chacun des A^{2a} et A^{2b} représente indépendamment un groupe 1,4-cyclohexylène cyclohexylène, un groupe 1,4-phénylène, un groupe tétrahydropyran-2,5-diyle, un groupe dioxane-2,5-diyle ou un groupe pyrimidine-2,5-diyle, et dans le cas où A^{2a} ou A^{2b} représente un groupe 1,4-phénylène, un ou plusieurs atomes d'hydrogène du groupe 1,4-phénylène peuvent être substitués par un atome de fluor,
chacun des Z^{2a} et Z^{2b} représente indépendamment une liaison simple, -OCH₂-, -OCF₂-, -CH₂O-, ou -CF₂O-,
m^{2a} et m^{2b} sont indépendamment égaux à 1, 2 ou 3,
Y^{3a} et Y^{3b} représentent chacun indépendamment un atome de fluor ou un atome d'hydrogène, et
chacun des X^{1a} et X^{1b} représente un atome de fluor ou un atome d'hydrogène, et X¹ représente un atome de fluor, un groupe -CN, ou un groupe -OCF₃.

4. Élément d'affichage à cristaux liquides,
dans lequel un premier substrat ayant une couche d'électrode comprenant une première couche d'alignement et un transistor à films minces sur la surface et un second substrat ayant une seconde couche d'alignement sur la surface sont disposés de telle sorte que les couches d'alignement se font face avec un jeu, et le jeu entre le premier substrat et le second substrat est rempli d'une couche de cristaux liquides comprenant la composition de cristaux liquides selon l'une quelconque des revendications 1 à 3, et
dans lequel une couche d'électrode comprenant le transistor à films minces est munie d'une pluralité de câblages de grille et de câblages de données disposés en forme de treillis, d'un transistor à couches minces agencé à chaque intersection entre les câblages de données et les câblages de grille, d'une électrode de pixel connectée au transistor à films minces, et d'une électrode commune agencée sur le premier substrat qui est séparée de l'électrode de pixel.

5. Elément d'affichage à cristaux liquides selon la revendication 4,
dans lequel la première couche d'alignement et la seconde couche d'alignement disposées à proximité de la couche de cristaux liquides sont des films d'alignement qui induisent un alignement homogène par rapport à la composition de cristaux liquides.

6. Elément d'affichage à cristaux liquides selon la revendication 4 ou 5,
dans lequel une distance d la plus courte entre l'électrode commune et l'électrode de pixel qui sont adjacentes est plus courte qu'une distance la plus courte G entre les couches d'alignement.
